# EUROPEAN PATENT APPLICATION

(11) **EP 4 277 238 A1**
(43) Date of publication of application: **15.11.2023**
(21) Application number: 23172038.4
(22) Date of filing: 08.05.2023
(51) Int. Cl.: H04L 65/401, H04L 65/402, H04L 65/80

(54) **USER INTERFACES FOR MANAGING SHARED-CONTENT SESSIONS**

(30) Priority: 10.05.2022 US 202263340414 P; 16.12.2022 US 202218067350
(71) Applicant: Apple Inc., Cupertino, CA 95014 (US)
(72) Inventor: CHANG, Jae Woo, Cupertino (US); ETZINE, Justin R., San Jose (US)
(74) Representative: COPA Copenhagen Patents

(57) **Abstract**

The present disclosure generally relates to user interfaces for managing shared-content sessions. In some embodiments, a shared-content session is initiated with real-time communication features disabled if the shared-content session was initiated via an asynchronous communication. In some embodiments, an option is provided for joining a real-time communication session while a shared-content session is active. In some embodiments, while a communication session is active, a user interface is displayed including a representation of applications that are configured to provide content that can be played as synchronized content during the communication session. In some embodiments, if a computer system detects a real-time communication session at an external computer system, and criteria are met, the computer system displays an option to transfer the real-time communication session from the external computer system to the computer system.

## Description

### FIELD

The present disclosure relates generally to computer user interfaces, and more specifically to techniques for managing shared-content sessions.

### BACKGROUND

Computer systems can include hardware and/or software for displaying interfaces for various types of communication and information sharing.

### BRIEF SUMMARY

Some techniques for communication and information sharing using electronic devices are generally cumbersome and inefficient. For example, some existing techniques use a complex and time-consuming user interface, which may include multiple key presses or keystrokes. Existing techniques require more time than necessary, wasting user time and device energy. This latter consideration is particularly important in battery-operated devices.

Accordingly, the present technique provides electronic devices with faster, more efficient methods and interfaces for managing shared-content sessions. Such methods and interfaces optionally complement or replace other methods for managing shared-content sessions. Such methods and interfaces reduce the cognitive burden on a user and produce a more efficient human-machine interface. For battery-operated computing devices, such methods and interfaces conserve power and increase the time between battery charges.

Example methods are described herein. An example method includes, at a computer system that is in communication with one or more display generation components and one or more input devices: while displaying, via the one or more display generation components, a user interface for initiating a shared-content session with an external computer system, receiving, via the one or more input devices, a first set of one or more inputs corresponding to a request to initiate a shared-content session with one or more external computer systems; and in response to receiving the first set of one or more inputs corresponding to a request to initiate a shared-content session with one or more external computer systems, initiating a shared-content session with one or more external computer systems, wherein the shared-content session, when active, enables the computer system to output respective content while the respective content is being output by one or more external computer systems, wherein initiating the shared-content session with one or more external computer systems includes: in accordance with a determination that the shared-content session was initiated via an asynchronous communication, initiating the shared-content session in a first mode in which a set of real-time communication features are disabled for the shared-content session.

An example method includes, at a computer system that is in communication with one or more display generation components and one or more input devices: while the computer system is in a shared-content session in which synchronized content is enabled for sharing with an external computer system, and while a real-time communication session is not enabled, receiving an invitation to join a real-time communication session, and displaying, via the one or more display generation components, an option to accept the invitation to join the real-time communication session; and after receiving the invitation to join the real-time communication session: in accordance with a determination that the option to accept the invitation to join the real-time communication session has been selected, joining the real-time communication session; and in accordance with a determination that the option to accept the invitation to join the real-time communication session has not been selected, forgoing joining the real-time communication session.

An example method includes, at a computer system that is in communication one or more display generation components and one or more input devices: while the computer system is in a communication session with an external computer system: displaying, via the one or more display generation components, a control user interface for controlling one or more settings of the communication session, wherein the control user interface includes a first control option; detecting, via the one or more input devices, a set of one or more inputs directed to the control user interface, wherein the set of one or more inputs includes a selection of the first control option; and in response to detecting the selection of the first control option, displaying a representation of one or more applications available on the computer system that are configured to provide content that can be played as synchronized content during the communication.

An example method includes, at a computer system that is in communication with one or more display generation components and one or more cameras: while the computer system is associated with a respective user account, receiving first data indicating whether a first external computer system meets a first set of criteria, wherein the first set of criteria is met when the first external computer system is located within a threshold distance of the computer system, the first external computer system is associated with the respective user account, and the first external computer system is in a real-time communication session with a second external computer system; and after receiving the first data and in accordance with a determination that the first data indicates that the first external computer system meets the first set of criteria, displaying, via the one or more display generation components, a respective user interface that includes a user interface object that is selectable to initiate a process for joining the real-time communication session with the second external computer system, wherein displaying the respective user interface includes: in accordance with a determination that the real-time communication session includes a live video feed, displaying a representation of a field-of-view of the one or more cameras.

Example non-transitory computer-readable storage media are described herein. An example non-transitory computer-readable storage medium stores one or more programs configured to be executed by one or more processors of a computer system that is in communication with one or more display generation components and one or more input devices, the one or more programs including instructions for: while displaying, via the one or more display generation components, a user interface for initiating a shared-content session with an external computer system, receiving, via the one or more input devices, a first set of one or more inputs corresponding to a request to initiate a shared-content session with one or more external computer systems; and in response to receiving the first set of one or more inputs corresponding to a request to initiate a shared-content session with one or more external computer systems, initiating a shared-content session with one or more external computer systems, wherein the shared-content session, when active, enables the computer system to output respective content while the respective content is being output by one or more external computer systems, wherein initiating the shared-content session with one or more external computer systems includes: in accordance with a determination that the shared-content session was initiated via an asynchronous communication, initiating the shared-content session in a first mode in which a set of real-time communication features are disabled for the shared-content session.

An example non-transitory computer-readable storage medium stores one or more programs configured to be executed by one or more processors of a computer system that is in communication with one or more display generation components and one or more input devices, the one or more programs including instructions for: while the computer system is in a shared-content session in which synchronized content is enabled for sharing with an external computer system, and while a real-time communication session is not enabled, receiving an invitation to join a real-time communication session, and displaying, via the one or more display generation components, an option to accept the invitation to join the real-time communication session; and after receiving the invitation to join the real-time communication session: in accordance with a determination that the option to accept the invitation to join the real-time communication session has been selected, joining the real-time communication session; and in accordance with a determination that the option to accept the invitation to join the real-time communication session has not been selected, forgoing joining the real-time communication session.

An example non-transitory computer-readable storage medium stores one or more programs configured to be executed by one or more processors of a computer system that is in communication with one or more display generation components and one or more input devices, the one or more programs including instructions for: while the computer system is in a communication session with an external computer system: displaying, via the one or more display generation components, a control user interface for controlling one or more settings of the communication session, wherein the control user interface includes a first control option; detecting, via the one or more input devices, a set of one or more inputs directed to the control user interface, wherein the set of one or more inputs includes a selection of the first control option; and in response to detecting the selection of the first control option, displaying a representation of one or more applications available on the computer system that are configured to provide content that can be played as synchronized content during the communication.

An example non-transitory computer-readable storage medium stores one or more programs configured to be executed by one or more processors of a computer system that is in communication with one or more display generation components and one or more cameras, the one or more programs including instructions for: while the computer system is associated with a respective user account, receiving first data indicating whether a first external computer system meets a first set of criteria, wherein the first set of criteria is met when the first external computer system is located within a threshold distance of the computer system, the first external computer system is associated with the respective user account, and the first external computer system is in a real-time communication session with a second external computer system; and after receiving the first data and in accordance with a determination that the first data indicates that the first external computer system meets the first set of criteria, displaying, via the one or more display generation components, a respective user interface that includes a user interface object that is selectable to initiate a process for joining the real-time communication session with the second external computer system, wherein displaying the respective user interface includes: in accordance with a determination that the real-time communication session includes a live video feed, displaying a representation of a field-of-view of the one or more cameras.

Example transitory computer-readable storage media are described herein. An example transitory computer-readable storage medium stores one or more programs configured to be executed by one or more processors of a computer system that is in communication with one or more display generation components and one or more input devices, the one or more programs including instructions for: while displaying, via the one or more display generation components, a user interface for initiating a shared-content session with an external computer system, receiving, via the one or more input devices, a first set of one or more inputs corresponding to a request to initiate a shared-content session with one or more external computer systems; and in response to receiving the first set of one or more inputs corresponding to a request to initiate a shared-content session with one or more external computer systems, initiating a shared-content session with one or more external computer systems, wherein the shared-content session, when active, enables the computer system to output respective content while the respective content is being output by one or more external computer systems, wherein initiating the shared-content session with one or more external computer systems includes: in accordance with a determination that the shared-content session was initiated via an asynchronous communication, initiating the shared-content session in a first mode in which a set of real-time communication features are disabled for the shared-content session.

An example transitory computer-readable storage medium stores one or more programs configured to be executed by one or more processors of a computer system that is in communication with one or more display generation components and one or more input devices, the one or more programs including instructions for: while the computer system is in a shared-content session in which synchronized content is enabled for sharing with an external computer system, and while a real-time communication session is not enabled, receiving an invitation to join a real-time communication session, and displaying, via the one or more display generation components, an option to accept the invitation to join the real-time communication session; and after receiving the invitation to join the real-time communication session: in accordance with a determination that the option to accept the invitation to join the real-time communication session has been selected, joining the real-time communication session; and in accordance with a determination that the option to accept the invitation to join the real-time communication session has not been selected, forgoing joining the real-time communication session.

An example transitory computer-readable storage medium stores one or more programs configured to be executed by one or more processors of a computer system that is in communication with one or more display generation components and one or more input devices, the one or more programs including instructions for: while the computer system is in a communication session with an external computer system: displaying, via the one or more display generation components, a control user interface for controlling one or more settings of the communication session, wherein the control user interface includes a first control option; detecting, via the one or more input devices, a set of one or more inputs directed to the control user interface, wherein the set of one or more inputs includes a selection of the first control option; and in response to detecting the selection of the first control option, displaying a representation of one or more applications available on the computer system that are configured to provide content that can be played as synchronized content during the communication.

An example transitory computer-readable storage medium stores one or more programs configured to be executed by one or more processors of a computer system that is in communication with one or more display generation components and one or more cameras, the one or more programs including instructions for: while the computer system is associated with a respective user account, receiving first data indicating whether a first external computer system meets a first set of criteria, wherein the first set of criteria is met when the first external computer system is located within a threshold distance of the computer system, the first external computer system is associated with the respective user account, and the first external computer system is in a real-time communication session with a second external computer system; and after receiving the first data and in accordance with a determination that the first data indicates that the first external computer system meets the first set of criteria, displaying, via the one or more display generation components, a respective user interface that includes a user interface object that is selectable to initiate a process for joining the real-time communication session with the second external computer system, wherein displaying the respective user interface includes: in accordance with a determination that the real-time communication session includes a live video feed, displaying a representation of a field-of-view of the one or more cameras.

Example computer systems are described herein. An example computer system is configured to communicate with one or more display generation components and one or more input devices and includes: one or more processors; and memory storing one or more programs configured to be executed by the one or more processors, the one or more programs including instructions for: while displaying, via the one or more display generation components, a user interface for initiating a shared-content session with an external computer system, receiving, via the one or more input devices, a first set of one or more inputs corresponding to a request to initiate a shared-content session with one or more external computer systems; and in response to receiving the first set of one or more inputs corresponding to a request to initiate a shared-content session with one or more external computer systems, initiating a shared-content session with one or more external computer systems, wherein the shared-content session, when active, enables the computer system to output respective content while the respective content is being output by one or more external computer systems, wherein initiating the shared-content session with one or more external computer systems includes: in accordance with a determination that the shared-content session was initiated via an asynchronous communication, initiating the shared-content session in a first mode in which a set of real-time communication features are disabled for the shared-content session.

An example computer system is configured to communicate with one or more display generation components and one or more input devices and includes: one or more processors; and memory storing one or more programs configured to be executed by the one or more processors, the one or more programs including instructions for: while the computer system is in a shared-content session in which synchronized content is enabled for sharing with an external computer system, and while a real-time communication session is not enabled, receiving an invitation to join a real-time communication session, and displaying, via the one or more display generation components, an option to accept the invitation to join the real-time communication session; and after receiving the invitation to join the real-time communication session: in accordance with a determination that the option to accept the invitation to join the real time communication session has been selected, joining the real-time communication session; and in accordance with a determination that the option to accept the invitation to join the real-time communication session has not been selected, forgoing joining the real-time communication session.

An example computer system is configured to communicate with one or more display generation components and one or more input devices and includes one or more processors; and memory storing one or more programs configured to be executed by the one or more processors, the one or more programs including instructions for: while the computer system is in a communication session with an external computer system: displaying, via the one or more display generation components, a control user interface for controlling one or more settings of the communication session, wherein the control user interface includes a first control option; detecting, via the one or more input devices, a set of one or more inputs directed to the control user interface, wherein the set of one or more inputs includes a selection of the first control option; and in response to detecting the selection of the first control option, displaying a representation of one or more applications available on the computer system that are configured to provide content that can be played as synchronized content during the communication.

An example computer system is configured to communicate with one or more display generation components and one or more cameras and includes one or more processors; and memory storing one or more programs configured to be executed by the one or more processors, the one or more programs including instructions for: while the computer system is associated with a respective user account, receiving first data indicating whether a first external computer system meets a first set of criteria, wherein the first set of criteria is met when the first external computer system is located within a threshold distance of the computer system, the first external computer system is associated with the respective user account, and the first external computer system is in a real-time communication session with a second external computer system; and after receiving the first data and in accordance with a determination that the first data indicates that the first external computer system meets the first set of criteria, displaying, via the one or more display generation components, a respective user interface that includes a user interface object that is selectable to initiate a process for joining the real-time communication session with the second external computer system, wherein displaying the respective user interface includes: in accordance with a determination that the real-time communication session includes a live video feed, displaying a representation of a field-of-view of the one or more cameras.

An example computer system is configured to communicate with one or more display generation components and one or more input devices and includes means for, while displaying, via the one or more display generation components, a user interface for initiating a shared-content session with an external computer system, receiving, via the one or more input devices, a first set of one or more inputs corresponding to a request to initiate a shared-content session with one or more external computer systems; and means for, in response to receiving the first set of one or more inputs corresponding to a request to initiate a shared-content session with one or more external computer systems, initiating a shared-content session with one or more external computer systems, wherein the shared-content session, when active, enables the computer system to output respective content while the respective content is being output by one or more external computer systems, wherein initiating the shared-content session with one or more external computer systems includes: in accordance with a determination that the shared-content session was initiated via an asynchronous communication, initiating the shared-content session in a first mode in which a set of real-time communication features are disabled for the shared-content session.

An example computer system is configured to communicate with one or more display generation components and one or more input devices and includes means for, while the computer system is in a shared-content session in which synchronized content is enabled for sharing with an external computer system, and while a real-time communication session is not enabled, receiving an invitation to join a real-time communication session, and displaying, via the one or more display generation components, an option to accept the invitation to join the real-time communication session; and after receiving the invitation to join the real-time communication session: in accordance with a determination that the option to accept the invitation to join the real time communication session has been selected, joining the real-time communication session; and in accordance with a determination that the option to accept the invitation to join the real-time communication session has not been selected, forgoing joining the real-time communication session.

An example computer system is configured to communicate with one or more display generation components and one or more input devices and includes means for, while the computer system is in a communication session with an external computer system: displaying, via the one or more display generation components, a control user interface for controlling one or more settings of the communication session, wherein the control user interface includes a first control option; detecting, via the one or more input devices, a set of one or more inputs directed to the control user interface, wherein the set of one or more inputs includes a selection of the first control option; and in response to detecting the selection of the first control option, displaying a representation of one or more applications available on the computer system that are configured to provide content that can be played as synchronized content during the communication.

An example computer system is configured to communicate with one or more display generation components and one or more cameras and includes means for, while the computer system is associated with a respective user account, receiving first data indicating whether a first external computer system meets a first set of criteria, wherein the first set of criteria is met when the first external computer system is located within a threshold distance of the computer system, the first external computer system is associated with the respective user account, and the first external computer system is in a real-time communication session with a second external computer system; and after receiving the first data and in accordance with a determination that the first data indicates that the first external computer system meets the first set of criteria, displaying, via the one or more display generation components, a respective user interface that includes a user interface object that is selectable to initiate a process for joining the real-time communication session with the second external computer system, wherein displaying the respective user interface includes: in accordance with a determination that the real-time communication session includes a live video feed, displaying a representation of a field-of-view of the one or more cameras.

Example computer program products are described herein. An example computer program product includes one or more programs configured to be executed by one or more processors of a computer system that is in communication with one or more display generation components and one or more input devices, the one or more programs including instructions for: while displaying, via the one or more display generation components, a user interface for initiating a shared-content session with an external computer system, receiving, via the one or more input devices, a first set of one or more inputs corresponding to a request to initiate a shared-content session with one or more external computer systems; and in response to receiving the first set of one or more inputs corresponding to a request to initiate a shared-content session with one or more external computer systems, initiating a shared-content session with one or more external computer systems, wherein the shared-content session, when active, enables the computer system to output respective content while the respective content is being output by one or more external computer systems, wherein initiating the shared-content session with one or more external computer systems includes: in accordance with a determination that the shared-content session was initiated via an asynchronous communication, initiating the shared-content session in a first mode in which a set of real-time communication features are disabled for the shared-content session.

An example computer program product includes one or more programs configured to be executed by one or more processors of a computer system that is in communication with one or more display generation components and one or more input devices, the one or more programs including instructions for: while the computer system is in a shared-content session in which synchronized content is enabled for sharing with an external computer system, and while a real-time communication session is not enabled, receiving an invitation to join a real-time communication session, and displaying, via the one or more display generation components, an option to accept the invitation to join the real-time communication session; and after receiving the invitation to join the real-time communication session: in accordance with a determination that the option to accept the invitation to join the real-time communication session has been selected, joining the real-time communication session; and in accordance with a determination that the option to accept the invitation to join the real-time communication session has not been selected, forgoing joining the real-time communication session.

An example computer program product includes one or more programs configured to be executed by one or more processors of a computer system that is in communication with one or more display generation components and one or more input devices, the one or more programs including instructions for: while the computer system is in a communication session with an external computer system: displaying, via the one or more display generation components, a control user interface for controlling one or more settings of the communication session, wherein the control user interface includes a first control option; detecting, via the one or more input devices, a set of one or more inputs directed to the control user interface, wherein the set of one or more inputs includes a selection of the first control option; and in response to detecting the selection of the first control option, displaying a representation of one or more applications available on the computer system that are configured to provide content that can be played as synchronized content during the communication.

An example computer program product includes one or more programs configured to be executed by one or more processors of a computer system that is in communication with one or more display generation components and one or more cameras, the one or more programs including instructions for: while the computer system is associated with a respective user account, receiving first data indicating whether a first external computer system meets a first set of criteria, wherein the first set of criteria is met when the first external computer system is located within a threshold distance of the computer system, the first external computer system is associated with the respective user account, and the first external computer system is in a real-time communication session with a second external computer system; and after receiving the first data and in accordance with a determination that the first data indicates that the first external computer system meets the first set of criteria, displaying, via the one or more display generation components, a respective user interface that includes a user interface object that is selectable to initiate a process for joining the real-time communication session with the second external computer system, wherein displaying the respective user interface includes: in accordance with a determination that the real-time communication session includes a live video feed, displaying a representation of a field-of-view of the one or more cameras

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

Thus, devices are provided with faster, more efficient methods and interfaces for managing shared-content sessions, thereby increasing the effectiveness, efficiency, and user satisfaction with such devices. Such methods and interfaces may complement or replace other methods for managing shared-content sessions.

### DESCRIPTION OF THE FIGURES

For a better understanding of the various described embodiments, reference should be made to the Description of Embodiments below, in conjunction with the following drawings in which like reference numerals refer to corresponding parts throughout the figures.
FIG. 1A is a block diagram illustrating a portable multifunction device with a touch-sensitive display in accordance with some embodiments.
FIG. 1B is a block diagram illustrating exemplary components for event handling in accordance with some embodiments.
FIG. 2 illustrates a portable multifunction device having a touch screen in accordance with some embodiments.
FIG. 3 is a block diagram of an exemplary multifunction device with a display and a touch-sensitive surface in accordance with some embodiments.
FIG. 4A illustrates an exemplary user interface for a menu of applications on a portable multifunction device in accordance with some embodiments.
FIG. 4B illustrates an exemplary user interface for a multifunction device with a touch-sensitive surface that is separate from the display in accordance with some embodiments.
FIG. 5A illustrates a personal electronic device in accordance with some embodiments.
FIG. 5B is a block diagram illustrating a personal electronic device in accordance with some embodiments.
FIG. 5C illustrates an exemplary diagram of a communication session between electronic devices in accordance with some embodiments.
FIGS. 6A-6AH illustrate exemplary user interfaces for managing shared-content sessions, in accordance with some embodiments.
FIG. 7 depicts a flow diagram illustrating a method for initiating a shared-content session using asynchronous communication, in accordance with some embodiments.
FIG. 8 depicts a flow diagram illustrating a method for managing real-time communication features for a shared-content session, in accordance with some embodiments.
FIG. 9 depicts a flow diagram illustrating a method for managing a shared-content session, in accordance with some embodiments.
FIGS. 10A-10N illustrate exemplary user interfaces for managing transfer of a real-time communication session, in accordance with some embodiments.
FIG. 11 depicts a flow diagram illustrating a method for managing transfer of a real-time communication session, in accordance with some embodiments.

### DESCRIPTION OF EMBODIMENTS

The following description sets forth exemplary methods, parameters, and the like. It should be recognized, however, that such description is not intended as a limitation on the scope of the present disclosure but is instead provided as a description of exemplary embodiments.

There is a need for electronic devices that provide efficient methods and interfaces for managing shared-content sessions. Such techniques can reduce the cognitive burden on a user who accesses content in a shared-content session, thereby enhancing productivity. Further, such techniques can reduce processor and battery power otherwise wasted on redundant user inputs.

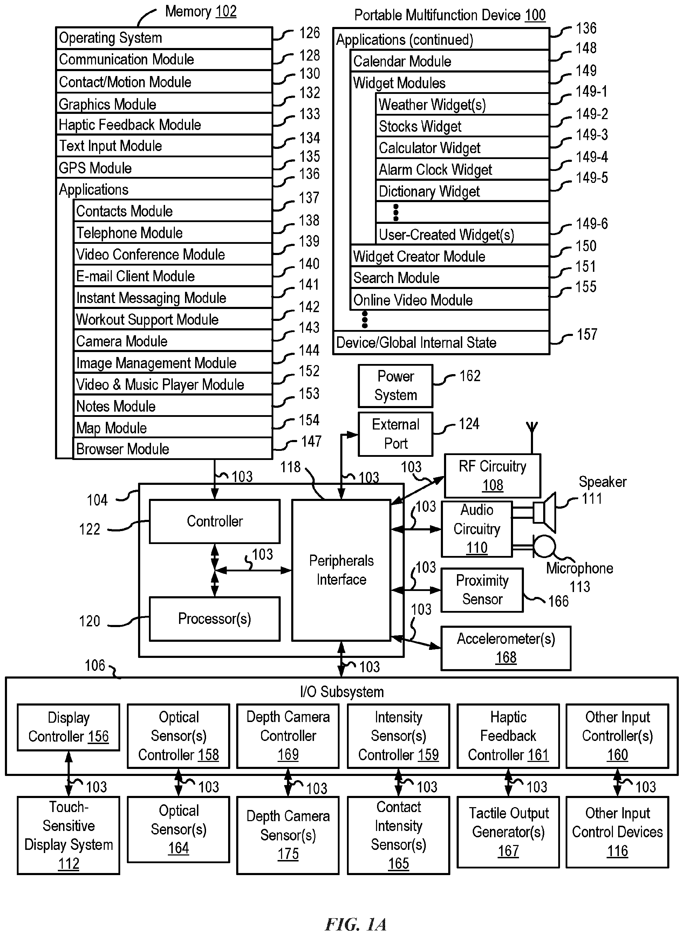

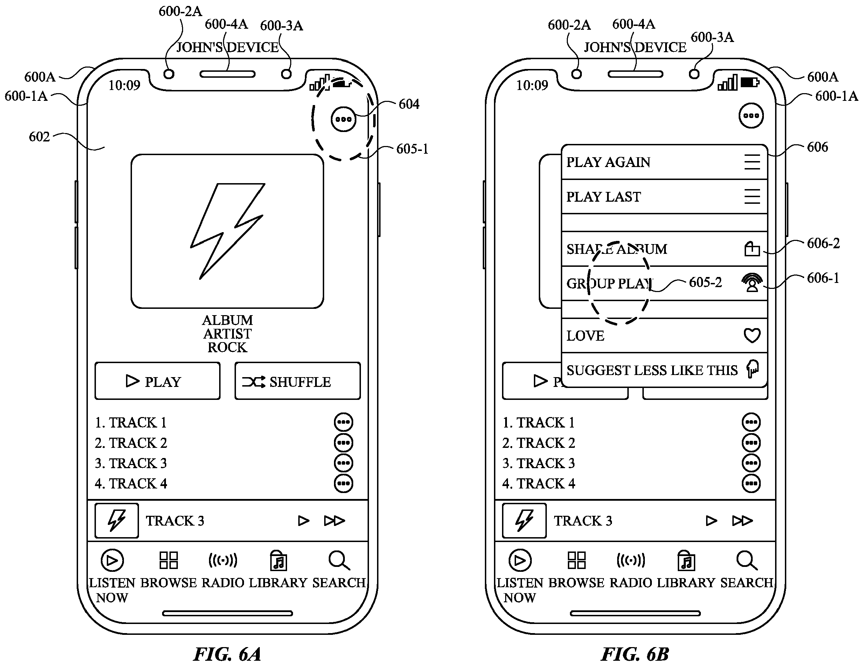

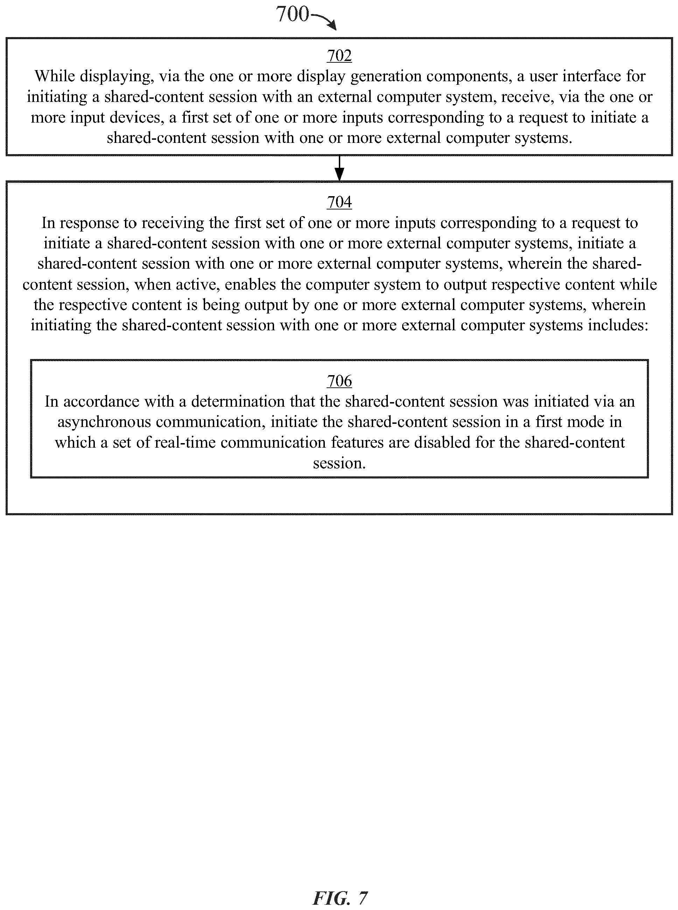

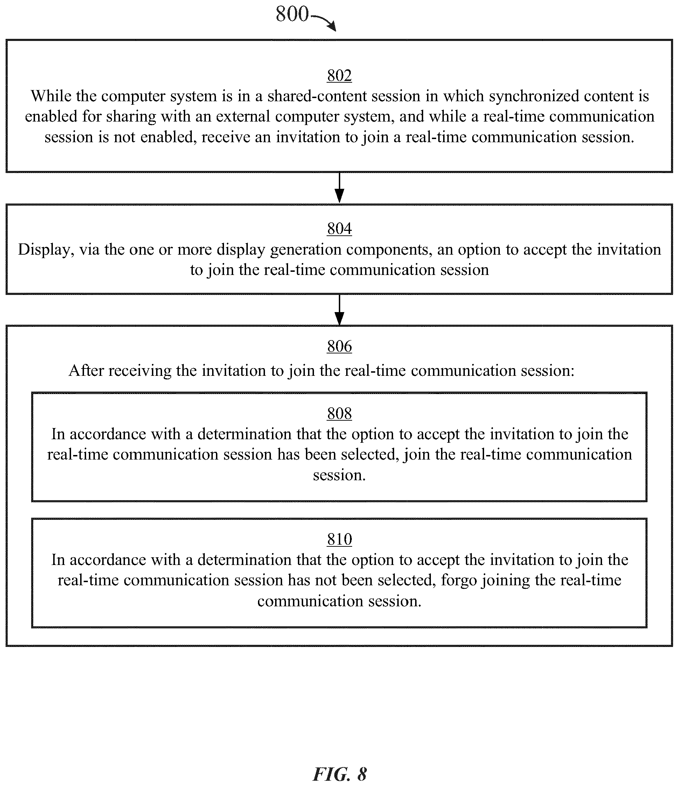

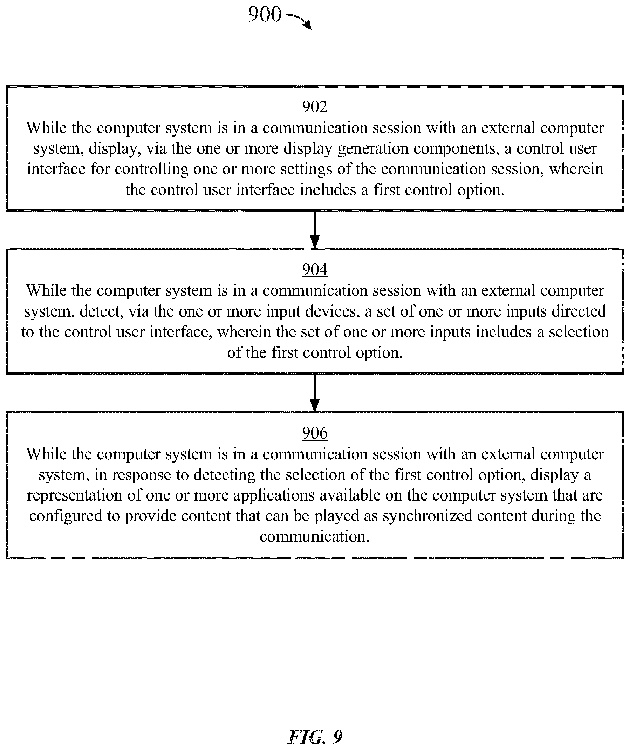

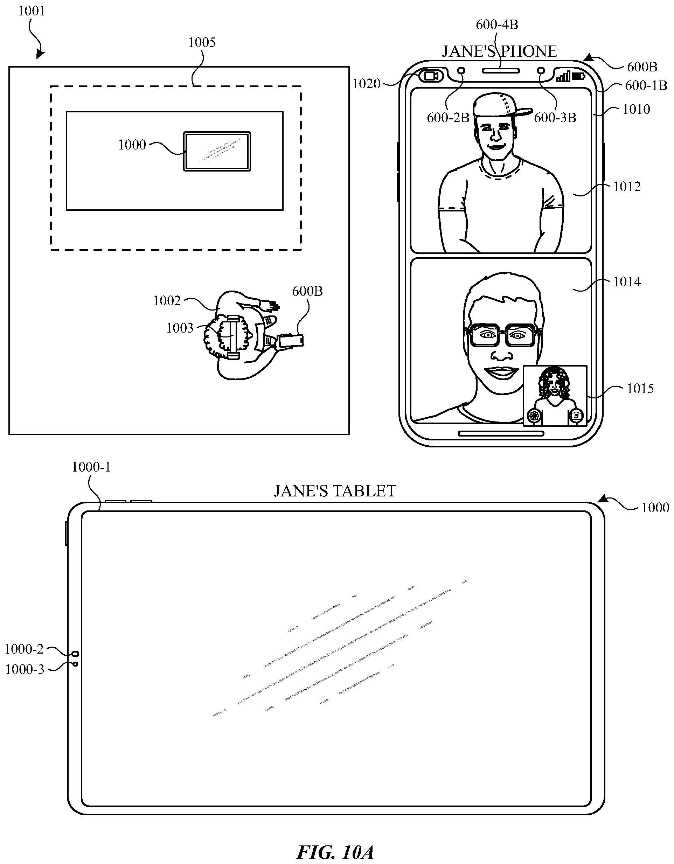

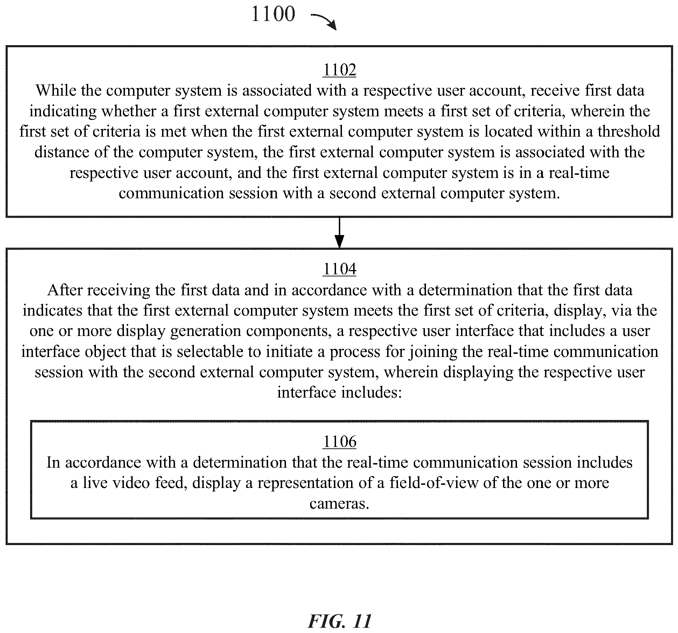

Below, FIGS. 1A-1B, 2, 3, 4A-4B, and 5A-5C provide a description of exemplary devices for performing the techniques for managing shared-content sessions. FIGS. 6A-6AH illustrate exemplary user interfaces for managing shared-content sessions. FIG. 7 is a flow diagram illustrating a method for initiating a shared-content session using asynchronous communication, in accordance with some embodiments. FIG. 8 is a flow diagram illustrating a method for managing real-time communication features for a shared-content session, in accordance with some embodiments. FIG. 9 is a flow diagram illustrating a method for managing a shared-content session, in accordance with some embodiments. The user interfaces in FIGS. 6A-6AH are used to illustrate the processes described below, including the processes in FIGS. 7-9. FIGS. 10A-10N illustrate exemplary user interfaces for managing transfer of a real-time communication session. FIG. 11 is a flow diagram illustrating methods of managing transfer of a real-time communication session, in accordance with some embodiments. The user interfaces in FIGS. 10A-10N are used to illustrate the processes described below, including the processes in FIG. 11.

The processes described below enhance the operability of the devices and make the user-device interfaces more efficient (e.g., by helping the user to provide proper inputs and reducing user mistakes when operating/interacting with the device) through various techniques, including by providing improved visual feedback to the user, reducing the number of inputs needed to perform an operation, providing additional control options without cluttering the user interface with additional displayed controls, performing an operation when a set of conditions has been met without requiring further user input, improving privacy and/or security, and/or additional techniques. These techniques also reduce power usage and improve battery life of the device by enabling the user to use the device more quickly and efficiently.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer readable storage medium can repeat the steps of a method as many times as are needed to ensure that all of the contingent steps have been performed.

Although the following description uses terms "first," "second," etc. to describe various elements, these elements should not be limited by the terms. In some embodiments, these terms are used to distinguish one element from another. For example, a first touch could be termed a second touch, and, similarly, a second touch could be termed a first touch, without departing from the scope of the various described embodiments. In some embodiments, the first touch and the second touch are two separate references to the same touch. In some embodiments, the first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad). In some embodiments, the electronic device is a computer system that is in communication (e.g., via wireless communication, via wired communication) with a display generation component. The display generation component is configured to provide visual output, such as display via a CRT display, display via an LED display, or display via image projection. In some embodiments, the display generation component is integrated with the computer system. In some embodiments, the display generation component is separate from the computer system. As used herein, "displaying" content includes causing to display the content (e.g., video data rendered or decoded by display controller 156) by transmitting, via a wired or wireless connection, data (e.g., image data or video data) to an integrated or external display generation component to visually produce the content.

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

Attention is now directed toward embodiments of portable devices with touch-sensitive displays. FIG. 1A is a block diagram illustrating portable multifunction device 100 with touch-sensitive display system 112 in accordance with some embodiments. Touch-sensitive display 112 is sometimes called a "touch screen" for convenience and is sometimes known as or called a "touch-sensitive display system." Device 100 includes memory 102 (which optionally includes one or more computer-readable storage mediums), memory controller 122, one or more processing units (CPUs) 120, peripherals interface 118, RF circuitry 108, audio circuitry 110, speaker 111, microphone 113, input/output (I/O) subsystem 106, other input control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in FIG. 1A are implemented in hardware, software, or a combination of both hardware and software, including one or more signal processing and/or application-specific integrated circuits.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs (such as computer programs (e.g., including instructions)) and/or sets of instructions stored in memory 102 to perform various functions for device 100 and to process data. In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

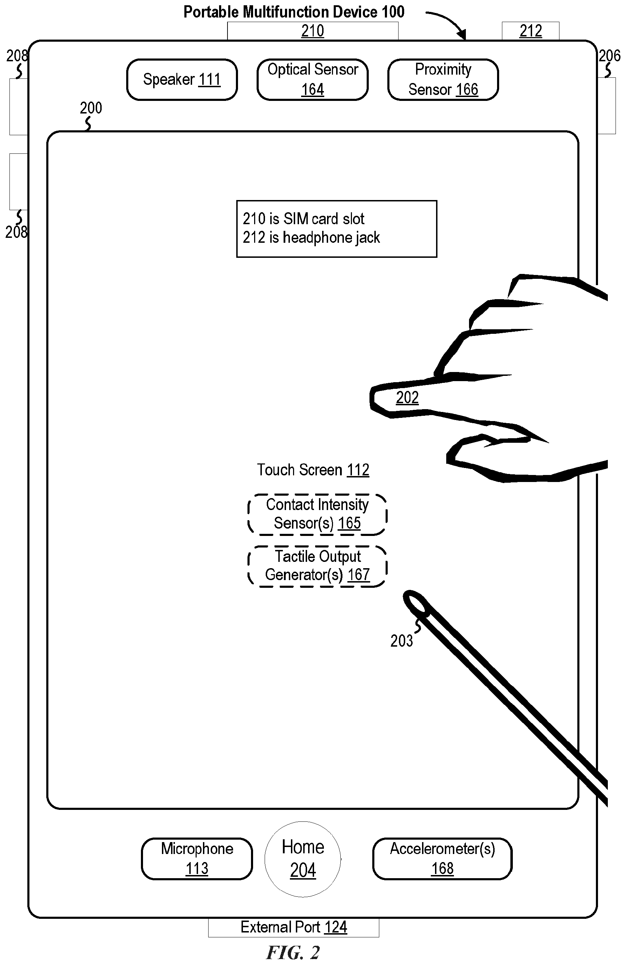

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, FIG. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, depth camera controller 169, intensity sensor controller 159, haptic feedback controller 161, and one or more input controllers 160 for other input or control devices. The one or more input controllers 160 receive/send electrical signals from/to other input control devices 116. The other input control devices 116 optionally include physical buttons (e.g., push buttons, rocker buttons, etc.), dials, slider switches, joysticks, click wheels, and so forth. In some embodiments, input controller(s) 160 are, optionally, coupled to any (or none) of the following: a keyboard, an infrared port, a USB port, and a pointer device such as a mouse. The one or more buttons (e.g., 208, FIG. 2) optionally include an up/down button for volume control of speaker 111 and/or microphone 113. The one or more buttons optionally include a push button (e.g., 206, FIG. 2). In some embodiments, the electronic device is a computer system that is in communication (e.g., via wireless communication, via wired communication) with one or more input devices. In some embodiments, the one or more input devices include a touch-sensitive surface (e.g., a trackpad, as part of a touch-sensitive display). In some embodiments, the one or more input devices include one or more camera sensors (e.g., one or more optical sensors 164 and/or one or more depth camera sensors 175), such as for tracking a user's gestures (e.g., hand gestures and/or air gestures) as input. In some embodiments, the one or more input devices are integrated with the computer system. In some embodiments, the one or more input devices are separate from the computer system. In some embodiments, an air gesture is a gesture that is detected without the user touching an input element that is part of the device (or independently of an input element that is a part of the device) and is based on detected motion of a portion of the user's body through the air including motion of the user's body relative to an absolute reference (e.g., an angle of the user's arm relative to the ground or a distance of the user's hand relative to the ground), relative to another portion of the user's body (e.g., movement of a hand of the user relative to a shoulder of the user, movement of one hand of the user relative to another hand of the user, and/or movement of a finger of the user relative to another finger or portion of a hand of the user), and/or absolute motion of a portion of the user's body (e.g., a tap gesture that includes movement of a hand in a predetermined pose by a predetermined amount and/or speed, or a shake gesture that includes a predetermined speed or amount of rotation of a portion of the user's body).

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849, which is hereby incorporated by reference in its entirety. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output optionally corresponds to user-interface objects.

Touch screen 112 has a touch-sensitive surface, sensor, or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages, or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1, each of which is hereby incorporated by reference in its entirety. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006. All of these applications are incorporated by reference herein in their entirety.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources

(e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes one or more optical sensors 164. FIG. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more depth camera sensors 175. FIG. 1A shows a depth camera sensor coupled to depth camera controller 169 in I/O subsystem 106. Depth camera sensor 175 receives data from the environment to create a three dimensional model of an object (e.g., a face) within a scene from a viewpoint (e.g., a depth camera sensor). In some embodiments, in conjunction with imaging module 143 (also called a camera module), depth camera sensor 175 is optionally used to determine a depth map of different portions of an image captured by the imaging module 143. In some embodiments, a depth camera sensor is located on the front of device 100 so that the user's image with depth information is, optionally, obtained for video conferencing while the user views the other video conference participants on the touch screen display and to capture selfies with depth map data. In some embodiments, the depth camera sensor 175 is located on the back of device, or on the back and the front of the device 100. In some embodiments, the position of depth camera sensor 175 can be changed by the user (e.g., by rotating the lens and the sensor in the device housing) so that a depth camera sensor 175 is used along with the touch screen display for both video conferencing and still and/or video image acquisition.

Device 100 optionally also includes one or more contact intensity sensors 165. FIG. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112, which is located on the front of device 100.

Device 100 optionally also includes one or more proximity sensors 166. FIG. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals," which are hereby incorporated by reference in their entirety. In some embodiments, the proximity sensor turns off and disables touch screen 112 when the multifunction device is placed near the user's ear (e.g., when the user is making a phone call).

Device 100 optionally also includes one or more tactile output generators 167. FIG. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112, which is located on the front of device 100.

Device 100 optionally also includes one or more accelerometers 168. FIG. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer," both of which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer and a GPS (or GLONASS or other global navigation system) receiver for obtaining information concerning the location and orientation (e.g., portrait or landscape) of device 100.

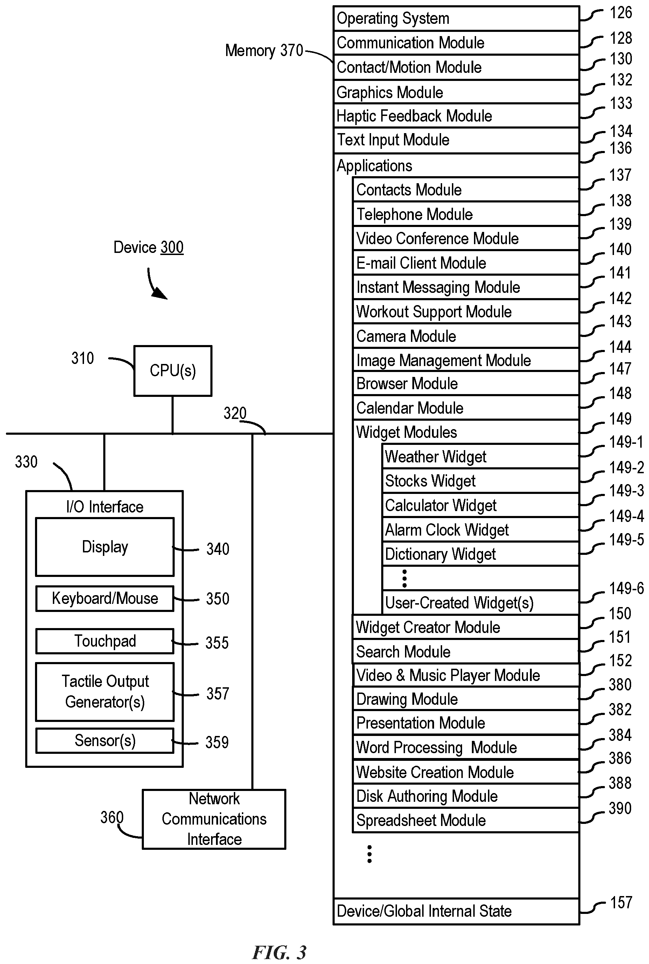

In some embodiments, the software components stored in memory 102 include operating system 126, communication module (or set of instructions) 128, contact/motion module (or set of instructions) 130, graphics module (or set of instructions) 132, text input module (or set of instructions) 134, Global Positioning System (GPS) module (or set of instructions) 135, and applications (or sets of instructions) 136. Furthermore, in some embodiments, memory 102 (FIG. 1A) or 370 (FIG. 3) stores device/global internal state 157, as shown in FIGS. 1A and 3. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast, or other visual property) of graphics that are displayed. As used herein, the term "graphics" includes any object that can be displayed to a user, including, without limitation, text, web pages, icons (such as user-interface objects including soft keys), digital images, videos, animations, and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts 137, e-mail 140, IM 141, browser 147, and any other application that needs text input).

GPS module 135 determines the location of the device and provides this information for use in various applications (e.g., to telephone 138 for use in location-based dialing; to camera 143 as picture/video metadata; and to applications that provide location-based services such as weather widgets, local yellow page widgets, and map/navigation widgets).

Applications 136 optionally include the following modules (or sets of instructions), or a subset or superset thereof:
- Contacts module 137 (sometimes called an address book or contact list);
- Telephone module 138;
- Video conference module 139;
- E-mail client module 140;
- Instant messaging (IM) module 141;
- Workout support module 142;
- Camera module 143 for still and/or video images;
- Image management module 144;
- Video player module;
- Music player module;
- Browser module 147;
- Calendar module 148;
- Widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- Widget creator module 150 for making user-created widgets 149-6;
- Search module 151;
- Video and music player module 152, which merges video player module and music player module;
- Notes module 153;
- Map module 154; and/or
- Online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 138, video conference module 139, e-mail 140, or IM 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to-do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to-do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007, the contents of which are hereby incorporated by reference in their entirety.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs (such as computer programs (e.g., including instructions)), procedures, or modules, and thus various subsets of these modules are, optionally, combined or otherwise rearranged in various embodiments. For example, video player module is, optionally, combined with music player module into a single module (e.g., video and music player module 152, FIG. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

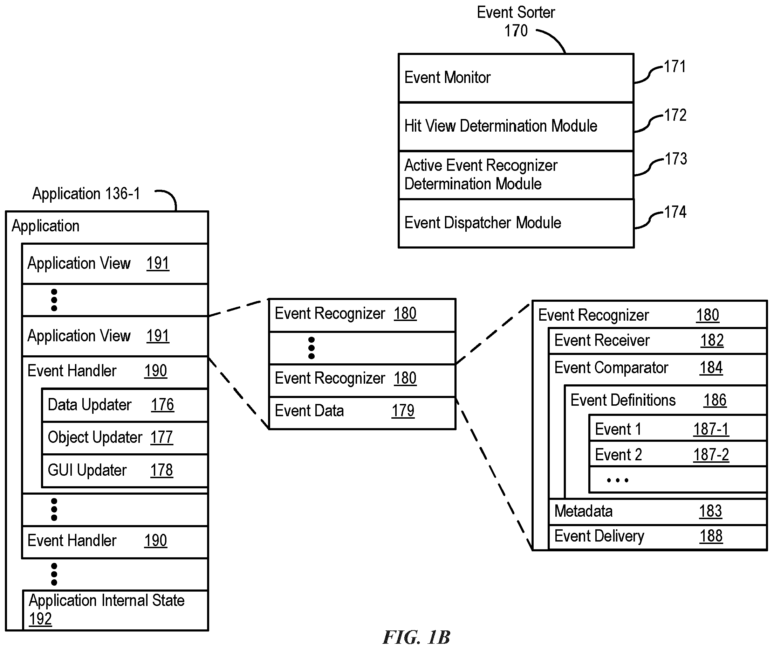

FIG. 1B is a block diagram illustrating exemplary components for event handling in accordance with some embodiments. In some embodiments, memory 102 (FIG. 1A) or 370 (FIG. 3) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GLTI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (e.g., 187-1 and/or 187-2) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definitions 186 include a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GLTI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 2 illustrates a portable multifunction device 100 having a touch screen 112 in accordance with some embodiments. The touch screen optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also include one or more physical buttons, such as "home" or menu button 204. As described previously, menu button 204 is, optionally, used to navigate to any application 136 in a set of applications that are, optionally, executed on device 100. Alternatively, in some embodiments, the menu button is implemented as a soft key in a GUI displayed on touch screen 112.

In some embodiments, device 100 includes touch screen 112, menu button 204, push button 206 for powering the device on/off and locking the device, volume adjustment button(s) 208, subscriber identity module (SIM) card slot 210, headset jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

FIG. 3 is a block diagram of an exemplary multifunction device with a display and a touch-sensitive surface in accordance with some embodiments. Device 300 need not be portable. In some embodiments, device 300 is a laptop computer, a desktop computer, a tablet computer, a multimedia player device, a navigation device, an educational device (such as a child's learning toy), a gaming system, or a control device (e.g., a home or industrial controller). Device 300 typically includes one or more processing units (CPUs) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to FIG. 1A), sensors 359 (e.g., optical, acceleration, proximity, touch-sensitive, and/or contact intensity sensors similar to contact intensity sensor(s) 165 described above with reference to FIG. 1A). Memory 370 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable multifunction device 100 (FIG. 1A), or a subset thereof. Furthermore, memory 370 optionally stores additional programs, modules, and data structures not present in memory 102 of portable multifunction device 100. For example, memory 370 of device 300 optionally stores drawing module 380, presentation module 382, word processing module 384, website creation module 386, disk authoring module 388, and/or spreadsheet module 390, while memory 102 of portable multifunction device 100 (FIG. 1A) optionally does not store these modules.

Each of the above-identified elements in FIG. 3 is, optionally, stored in one or more of the previously mentioned memory devices. Each of the above-identified modules corresponds to a set of instructions for performing a function described above. The above-identified modules or computer programs (e.g., sets of instructions or including instructions) need not be implemented as separate software programs (such as computer programs (e.g., including instructions)), procedures, or modules, and thus various subsets of these modules are, optionally, combined or otherwise rearranged in various embodiments. In some embodiments, memory 370 optionally stores a subset of the modules and data structures identified above. Furthermore, memory 370 optionally stores additional modules and data structures not described above.

Attention is now directed towards embodiments of user interfaces that are, optionally, implemented on, for example, portable multifunction device 100.

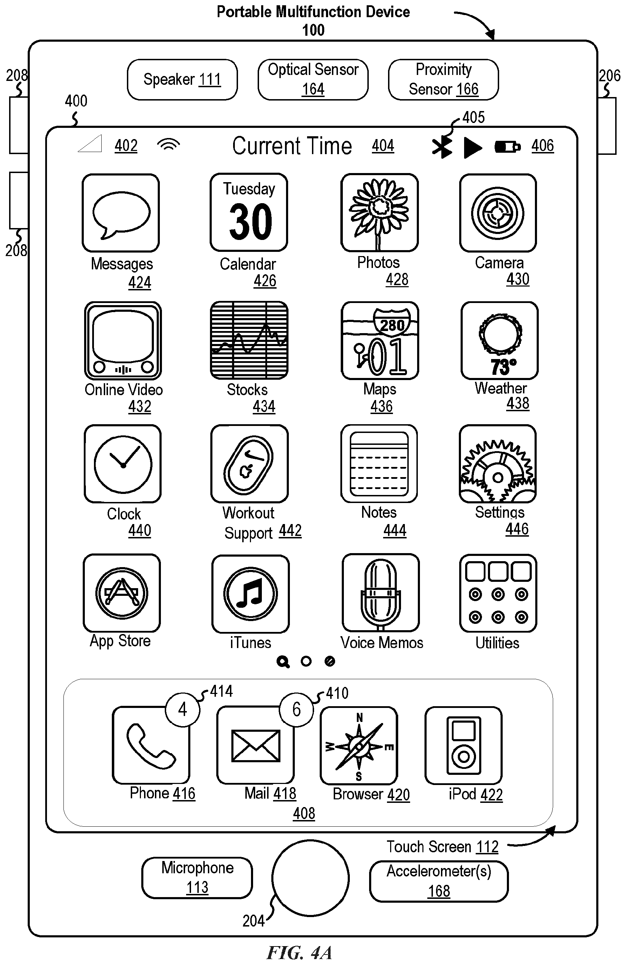

FIG. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   ∘ Icon 416 for telephone module 138, labeled "Phone," which optionally includes an indicator 414 of the number of missed calls or voicemail messages;
   ∘ Icon 418 for e-mail client module 140, labeled "Mail," which optionally includes an indicator 410 of the number of unread e-mails;
   ∘ Icon 420 for browser module 147, labeled "Browser," and
   ∘ Icon 422 for video and music player module 152, also referred to as iPod (trademark of Apple Inc.) module 152, labeled "iPod;" and
- Icons for other applications, such as:
   ∘ Icon 424 for IM module 141, labeled "Messages;"
   ∘ Icon 426 for calendar module 148, labeled "Calendar;"
   ∘ Icon 428 for image management module 144, labeled "Photos;"
   ∘ Icon 430 for camera module 143, labeled "Camera;"
   ∘ Icon 432 for online video module 155, labeled "Online Video;"
   ∘ Icon 434 for stocks widget 149-2, labeled "Stocks;"
   ∘ Icon 436 for map module 154, labeled "Maps;"
   ∘ Icon 438 for weather widget 149-1, labeled "Weather;"
   ∘ Icon 440 for alarm clock widget 149-4, labeled "Clock;"
   ∘ Icon 442 for workout support module 142, labeled "Workout Support;"
   ∘ Icon 444 for notes module 153, labeled "Notes;" and
   ∘ Icon 446 for a settings application or module, labeled "Settings," which provides access to settings for device 100 and its various applications 136.

It should be noted that the icon labels illustrated in FIG. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

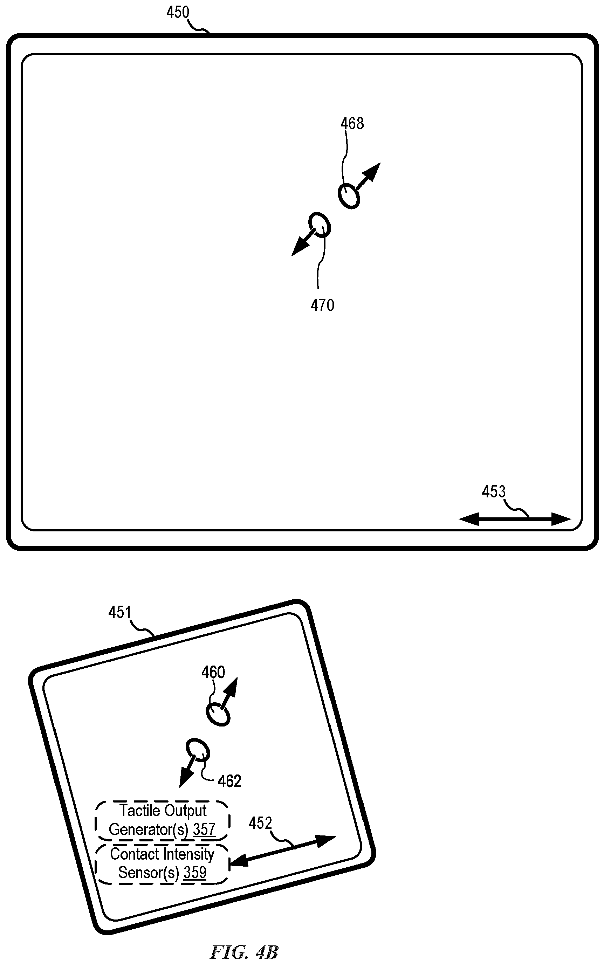

FIG. 4B illustrates an exemplary user interface on a device (e.g., device 300, FIG. 3) with a touch-sensitive surface 451 (e.g., a tablet or touchpad 355, FIG. 3) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in FIG. 4B. In some embodiments, the touch-sensitive surface (e.g., 451 in FIG. 4B) has a primary axis (e.g., 452 in FIG. 4B) that corresponds to a primary axis (e.g., 453 in FIG. 4B) on the display (e.g., 450). In accordance with these embodiments, the device detects contacts (e.g., 460 and 462 in FIG. 4B) with the touch-sensitive surface 451 at locations that correspond to respective locations on the display (e.g., in FIG. 4B, 460 corresponds to 468 and 462 corresponds to 470). In this way, user inputs (e.g., contacts 460 and 462, and movements thereof) detected by the device on the touch-sensitive surface (e.g., 451 in FIG. 4B) are used by the device to manipulate the user interface on the display (e.g., 450 in FIG. 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

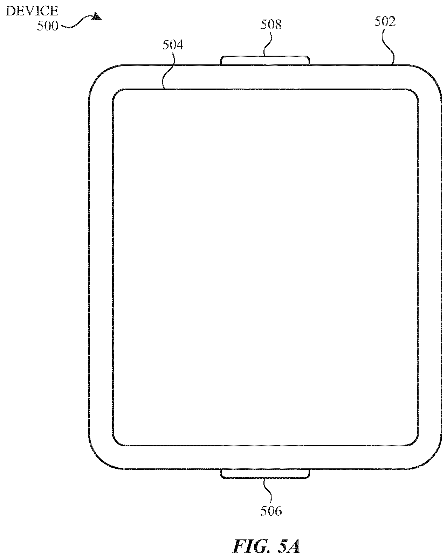

FIG. 5A illustrates exemplary personal electronic device 500. Device 500 includes body 502. In some embodiments, device 500 can include some or all of the features described with respect to devices 100 and 300 (e.g., FIGS. 1A-4B). In some embodiments, device 500 has touch-sensitive display screen 504, hereafter touch screen 504. Alternatively, or in addition to touch screen 504, device 500 has a display and a touch-sensitive surface. As with devices 100 and 300, in some embodiments, touch screen 504 (or the touch-sensitive surface) optionally includes one or more intensity sensors for detecting intensity of contacts (e.g., touches) being applied. The one or more intensity sensors of touch screen 504 (or the touch-sensitive surface) can provide output data that represents the intensity of touches. The user interface of device 500 can respond to touches based on their intensity, meaning that touches of different intensities can invoke different user interface operations on device 500.

Exemplary techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, published as WIPO Publication No. WO/2013/169849, and International Patent Application Serial No. PCT/US2013/069483, titled "Device, Method, and Graphical User Interface for Transitioning Between Touch Input to Display Output Relationships," filed November 11, 2013, published as WIPO Publication No. WO/2014/105276, each of which is hereby incorporated by reference in their entirety.

In some embodiments, device 500 has one or more input mechanisms 506 and 508. Input mechanisms 506 and 508, if included, can be physical. Examples of physical input mechanisms include push buttons and rotatable mechanisms. In some embodiments, device 500 has one or more attachment mechanisms. Such attachment mechanisms, if included, can permit attachment of device 500 with, for example, hats, eyewear, earrings, necklaces, shirts, jackets, bracelets, watch straps, chains, trousers, belts, shoes, purses, backpacks, and so forth. These attachment mechanisms permit device 500 to be worn by a user.

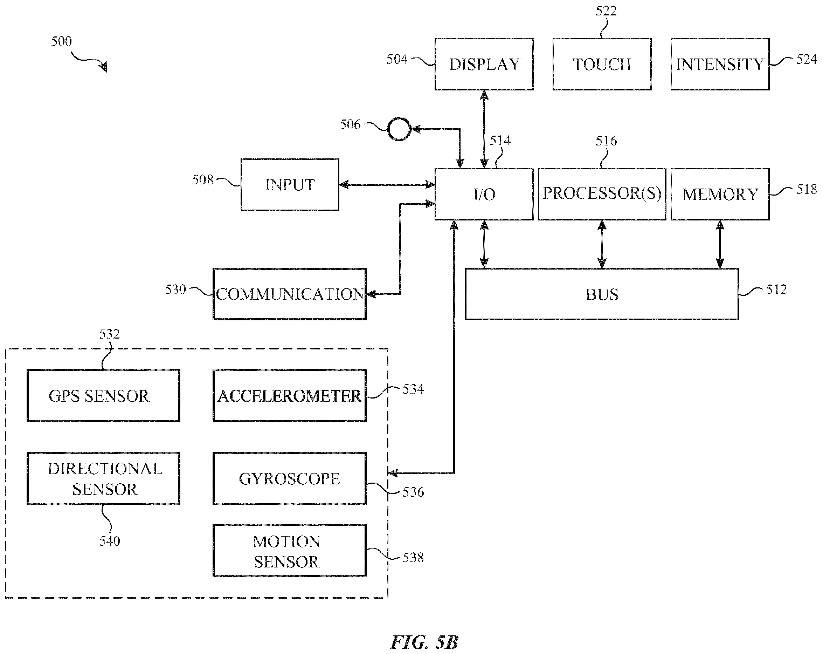

FIG. 5B depicts exemplary personal electronic device 500. In some embodiments, device 500 can include some or all of the components described with respect to FIGS. 1A, 1B, and 3. Device 500 has bus 512 that operatively couples I/O section 514 with one or more computer processors 516 and memory 518. I/O section 514 can be connected to display 504, which can have touch-sensitive component 522 and, optionally, intensity sensor 524 (e.g., contact intensity sensor). In addition, I/O section 514 can be connected with communication unit 530 for receiving application and operating system data, using Wi-Fi, Bluetooth, near field communication (NFC), cellular, and/or other wireless communication techniques. Device 500 can include input mechanisms 506 and/or 508. Input mechanism 506 is, optionally, a rotatable input device or a depressible and rotatable input device, for example. Input mechanism 508 is, optionally, a button, in some examples.

Input mechanism 508 is, optionally, a microphone, in some examples. Personal electronic device 500 optionally includes various sensors, such as GPS sensor 532, accelerometer 534, directional sensor 540 (e.g., compass), gyroscope 536, motion sensor 538, and/or a combination thereof, all of which can be operatively connected to I/O section 514.

Memory 518 of personal electronic device 500 can include one or more non-transitory computer-readable storage mediums, for storing computer-executable instructions, which, when executed by one or more computer processors 516, for example, can cause the computer processors to perform the techniques described below, including processes 700, 800, 900, and 1100 (FIGS. 7-9 and 11). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray technologies, as well as persistent solid-state memory such as flash, solid-state drives, and the like. Personal electronic device 500 is not limited to the components and configuration of FIG. 5B, but can include other or additional components in multiple configurations.

As used here, the term "affordance" refers to a user-interactive graphical user interface object that is, optionally, displayed on the display screen of devices 100, 300, and/or 500 (FIGS. 1A, 3, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in FIG. 3 or touch-sensitive surface 451 in FIG. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in FIG. 1A or touch screen 112 in FIG. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

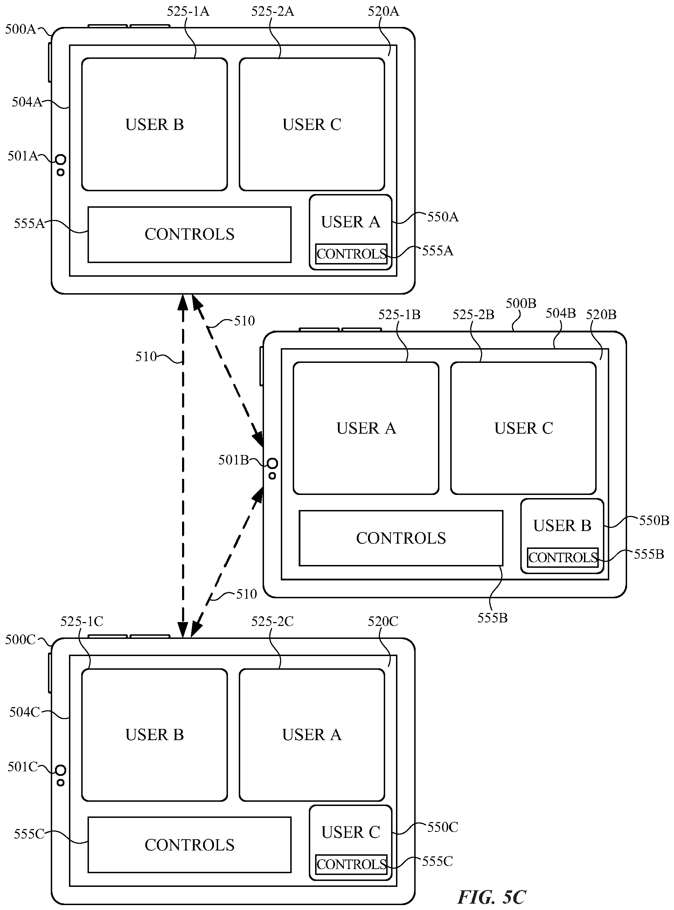

FIG. 5C depicts an exemplary diagram of a communication session between electronic devices 500A, 500B, and 500C. Devices 500A, 500B, and 500C are similar to electronic device 500, and each share with each other one or more data connections 510 such as an Internet connection, Wi-Fi connection, cellular connection, short-range communication connection, and/or any other such data connection or network so as to facilitate real time communication of audio and/or video data between the respective devices for a duration of time. In some embodiments, an exemplary communication session can include a shared-data session whereby data is communicated from one or more of the electronic devices to the other electronic devices to enable concurrent output of respective content at the electronic devices. In some embodiments, an exemplary communication session can include a video conference session whereby audio and/or video data is communicated between devices 500A, 500B, and 500C such that users of the respective devices can engage in real time communication using the electronic devices.

In FIG. 5C, device 500A represents an electronic device associated with User A. Device 500A is in communication (via data connections 510) with devices 500B and 500C, which are associated with User B and User C, respectively. Device 500A includes camera 501A, which is used to capture video data for the communication session, and display 504A (e.g., a touchscreen), which is used to display content associated with the communication session. Device 500A also includes other components, such as a microphone (e.g., 113) for recording audio for the communication session and a speaker (e.g., 111) for outputting audio for the communication session.

Device 500A displays, via display 504A, communication UI 520A, which is a user interface for facilitating a communication session (e.g., a video conference session) between device 500B and device 500C. Communication UI 520A includes video feed 525-1A and video feed 525-2A. Video feed 525-1A is a representation of video data captured at device 500B (e.g., using camera 501B) and communicated from device 500B to devices 500A and 500C during the communication session. Video feed 525-2A is a representation of video data captured at device 500C (e.g., using camera 501C) and communicated from device 500C to devices 500A and 500B during the communication session.

Communication UI 520A includes camera preview 550A, which is a representation of video data captured at device 500A via camera 501A. Camera preview 550A represents to User A the prospective video feed of User A that is displayed at respective devices 500B and 500C.

Communication UI 520A includes one or more controls 555A for controlling one or more aspects of the communication session. For example, controls 555A can include controls for muting audio for the communication session, changing a camera view for the communication session (e.g., changing which camera is used for capturing video for the communication session, adjusting a zoom value), terminating the communication session, applying visual effects to the camera view for the communication session, activating one or more modes associated with the communication session. In some embodiments, one or more controls 555A are optionally displayed in communication UI 520A. In some embodiments, one or more controls 555A are displayed separate from camera preview 550A. In some embodiments, one or more controls 555A are displayed overlaying at least a portion of camera preview 550A.

In FIG. 5C, device 500B represents an electronic device associated with User B, which is in communication (via data connections 510) with devices 500A and 500C. Device 500B includes camera 501B, which is used to capture video data for the communication session, and display 504B (e.g., a touchscreen), which is used to display content associated with the communication session. Device 500B also includes other components, such as a microphone (e.g., 113) for recording audio for the communication session and a speaker (e.g., 111) for outputting audio for the communication session.

Device 500B displays, via touchscreen 504B, communication UI 520B, which is similar to communication UI 520A of device 500A. Communication UI 520B includes video feed 525-1B and video feed 525-2B. Video feed 525-1B is a representation of video data captured at device 500A (e.g., using camera 501A) and communicated from device 500A to devices 500B and 500C during the communication session. Video feed 525-2B is a representation of video data captured at device 500C (e.g., using camera 501C) and communicated from device 500C to devices 500A and 500B during the communication session. Communication UI 520B also includes camera preview 550B, which is a representation of video data captured at device 500B via camera 501B, and one or more controls 555B for controlling one or more aspects of the communication session, similar to controls 555A. Camera preview 550B represents to User B the prospective video feed of User B that is displayed at respective devices 500A and 500C.

In FIG. 5C, device 500C represents an electronic device associated with User C, which is in communication (via data connections 510) with devices 500A and 500B. Device 500C includes camera 501C, which is used to capture video data for the communication session, and display 504C (e.g., a touchscreen), which is used to display content associated with the communication session. Device 500C also includes other components, such as a microphone (e.g., 113) for recording audio for the communication session and a speaker (e.g., 111) for outputting audio for the communication session.

Device 500C displays, via touchscreen 504C, communication UI 520C, which is similar to communication UI 520A of device 500A and communication UI 520B of device 500B. Communication UI 520C includes video feed 525-1C and video feed 525-2C. Video feed 525-1C is a representation of video data captured at device 500B (e.g., using camera 501B) and communicated from device 500B to devices 500A and 500C during the communication session. Video feed 525-2C is a representation of video data captured at device 500A (e.g., using camera 501A) and communicated from device 500A to devices 500B and 500C during the communication session. Communication UI 520C also includes camera preview 550C, which is a representation of video data captured at device 500C via camera 501C, and one or more controls 555C for controlling one or more aspects of the communication session, similar to controls 555A and 555B. Camera preview 550C represents to User C the prospective video feed of User C that is displayed at respective devices 500A and 500B.

While the diagram depicted in FIG. 5C represents a communication session between three electronic devices, the communication session can be established between two or more electronic devices, and the number of devices participating in the communication session can change as electronic devices join or leave the communication session. For example, if one of the electronic devices leaves the communication session, audio and video data from the device that stopped participating in the communication session is no longer represented on the participating devices. For example, if device 500B stops participating in the communication session, there is no data connection 510 between devices 500A and 500C, and no data connection 510 between devices 500C and 500B. Additionally, device 500A does not include video feed 525-1A and device 500C does not include video feed 525-1C. Similarly, if a device joins the communication session, a connection is established between the joining device and the existing devices, and the video and audio data is shared among all devices such that each device is capable of outputting data communicated from the other devices.

The embodiment depicted in FIG. 5C represents a diagram of a communication session between multiple electronic devices, including the example communication sessions depicted in FIGS. 6A-6AH and 10A-10N. In some embodiments, the communication sessions depicted in FIGS. 6A-6AH and 10A-10N include two or more electronic devices, even if other electronic devices participating in the communication session are not depicted in the figures.

As used herein, an "installed application" refers to a software application that has been downloaded onto an electronic device (e.g., devices 100, 300, and/or 500) and is ready to be launched (e.g., become opened) on the device. In some embodiments, a downloaded application becomes an installed application by way of an installation program that extracts program portions from a downloaded package and integrates the extracted portions with the operating system of the computer system.

As used herein, the terms "open application" or "executing application" refer to a software application with retained state information (e.g., as part of device/global internal state 157 and/or application internal state 192). An open or executing application is, optionally, any one of the following types of applications:
- an active application, which is currently displayed on a display screen of the device that the application is being used on;
- a background application (or background processes), which is not currently displayed, but one or more processes for the application are being processed by one or more processors; and
- a suspended or hibernated application, which is not running, but has state information that is stored in memory (volatile and non-volatile, respectively) and that can be used to resume execution of the application.

As used herein, the term "closed application" refers to software applications without retained state information (e.g., state information for closed applications is not stored in a memory of the device). Accordingly, closing an application includes stopping and/or removing application processes for the application and removing state information for the application from the memory of the device. Generally, opening a second application while in a first application does not close the first application. When the second application is displayed and the first application ceases to be displayed, the first application becomes a background application.

Attention is now directed towards embodiments of user interfaces ("UI") and associated processes that are implemented on an electronic device, such as portable multifunction device 100, device 300, or device 500.

FIGS. 6A-6AH illustrate exemplary user interfaces for managing shared-content sessions, in accordance with some embodiments. The user interfaces in these figures are used to illustrate the processes described below, including the processes in FIGS. 7-9.

The present disclosure describes embodiments for managing a shared-content session (also referred to as a sharing session) in which respective content can be concurrently output at multiple devices participating in the shared-content session. In some embodiments, the respective content is screen-share content. For example, the content of a host device's displayed screen is shared with participants of the shared-content session such that the participants can view, at their respective devices, the screen content of the host device (the sharing device, or, the device whose screen content is being shared), including any changes to the displayed screen content, in real time. In some embodiments, the respective content is synchronized content that is output concurrently at the respective devices of the participants of the shared-content session. For example, the respective devices of the participants separately access the respective content (e.g., a video, a movie, a TV show, a song, a game, a browsing experience, and/or other interactive experience) from a remote server and/or local memory and are synchronized in their respective output of the content such that the content is output (e.g., via an application local to the respective devices) concurrently at the respective devices as each device separately accesses the respective content from the remote server(s) and/or local memory. In some embodiments, the respective devices exchange information (e.g., via a server) to facilitate synchronization. For example, the respective devices can share play state and/or playback location information of the content, as well as indications of local commands (e.g., play, pause, stop, fast forward, and/or rewind) in order to implement the commands on the output of the content on other devices. Sharing play state and/or playback location information is more efficient and effective for synchronizing the content at the respective devices, because the host device is not transmitting the content to the respective devices, but rather, smaller data packets containing the play state and/or playback location information. Additionally, each respective device outputs the content at a size and quality that is appropriate for the respective device and connectivity (e.g., data connection conditions such as data transmission and/or processing speeds) of the device, thereby providing a more customized, yet synchronized, playback experience at each of the respective devices. In some embodiments, an application (or "app") is available (e.g., downloaded and/or installed) at a respective device to enable the device to participate in shared-content sessions.

In some embodiments, content is displayed as a window that is optionally overlaid on another user interface (e.g., a home screen and/or an application user interface) and can be moved separately from the user interface over which it is displayed. In some embodiments, such windows are referred to herein as a picture-in-picture window or "PiP." In some embodiments, a PiP can include shared content such as screen-share content and/or synchronized content. In some embodiments, a PiP can include content that is independent of a shared-content session such as a video feed from a video conference (e.g., video call) (although, in some embodiments, such PiPs can be displayed in connection with a shared-content session). In some embodiments, a PiP can be moved, resized, minimized, docked, undocked, and/or expanded in response to various inputs and/or gestures.

Unless specified otherwise, as discussed herein, the term "share," "sharing," or "shared" is used generally to refer to a situation in which content (e.g., screen-share content and/or synchronized content) is, or is capable of, being output (e.g., viewed and/or played) concurrently at multiple devices that are participating in a shared-content session. Unless specifically noted otherwise, these terms do not require that the content being "shared" is transmitted from any particular device participating in the shared-content session to any of the other devices with which the content is being shared. In some embodiments, the content that is being shared in the shared-content session is content that is separately accessed by each respective device, for example, from a remote server or another source other than one of the devices participating in the shared-content session. For example, in some embodiments, when media content, such as a movie, is being played at devices participating in the shared-content session, the movie is said to be shared with the participants, even though the respective participants are accessing (e.g., from a movie application) and playing the movie separate from (but concurrently with) the other participants in the shared-content session. In some embodiments, screen-share content is shared with participants of the shared-content session by transmitting, from a host device, image data representing content displayed on a display screen of the host device to other devices participating in the shared-content session.

In some embodiments, a real-time communication session can be active for a shared-content session through one or more audio and/or video channels that, when active (e.g., open), enable real-time communication for one or more participants of the shared-content session. For example, when one or more audio channels are active during the shared-content session, a real-time communication session is considered to be enabled and participants of the shared-content session can speak to one another in real time (e.g., via an audio call and/or live audio feed) while the shared-content session is ongoing and, optionally, while content is being shared (e.g., screen-share content and/or synchronized content) via the shared-content session. As another example, when one or more video channels are active (e.g., via a video conferencing application that is local to respective devices), a real-time communication session is considered to be enabled and participants of the shared-content session can participate in a live video communication (e.g., video chat, video call, video conference, and/or live video feed) while the shared-content session is ongoing and, optionally, while content is being shared via the shared-content session. In some embodiments, a real-time communication session can be audio only (e.g., an audio channel is active without a video channel), video only (e.g., a video channel is active without an audio channel), or both audio and video enabled (e.g., the audio channel and video channel are both active). In some embodiments, the audio or video channel can be active with the respective audio feed or video feed temporarily disabled or muted (e.g., the microphone providing the audio feed is muted and/or the camera providing the video feed is disabled). In some embodiments, a real-time communication session can be active (e.g., real-time communication is enabled) separate from a shared-content session (e.g., without an active shared-content session). In some embodiments, a shared-content session can be active separate from a real-time communication session (e.g., without real-time communication enabled). Various aspects of these embodiments, and further details of a shared-content session and real-time communication session, are discussed below with reference to the figures.

FIGS. 6A-6AH illustrate exemplary devices for participating in shared-content sessions, in accordance with some embodiments. Specifically, these devices include John's device 600A (e.g., a smartphone) and Jane's device 600B (e.g., a smartphone), which are shown side-by-side in some figures to illustrate concurrent states of the respective devices, including the user interfaces and inputs at the respective devices. John's device 600A is a computer system that includes display 600-1A, one or more cameras 600-2A, one or more microphones 600-3A (also referred to as mic 600-3A), and one or more speakers 600-4A (e.g., similar to speaker 111). Jane's device 600B is a computer system that includes display 600-1B, one or more cameras 600-2B, one or more microphones 600-3B (also referred to as mic 600-3B), and one or more speakers 600-4B (e.g., similar to speaker 111). John's device 600A is similar to Jane's device 600B. In the description that follows, reference numbers can include the letter "A" to refer to elements of John's device, can include the letter "B" to refer to elements of Jane's device, or can include no letter to refer to elements of either or both devices. For example, devices 600A and 600B can be referred to using reference number 600-that is, reference number 600 can be used herein to refer to John's device 600A or Jane's device 600B, or both. Reference can be made in a similar manner to other elements sharing a common reference number. For example, displays 600-1A and 600-1B, cameras 600-2A and 600-2B, microphones 600-3A and 600-3B, and speakers 600-4A and 600-4B can be referred to using reference numbers 600-1, 600-2, 600-3, and 600-4, respectively. In some embodiments, device 600 includes one or more features of devices 100, 300, and/or 500.

In the embodiments provided herein, John's device 600A can be described as performing a set of functions associated with the shared-content session, and Jane's device 600B can be described as performing a different set of functions associated with the shared-content session. These descriptions are not intended to limit the functions performed by the respective devices, but rather, are provided to illustrate various aspects and embodiments of a shared-content session. Thus, unless specified otherwise, the functions that are described as being performed by John's device 600A are similarly capable of being performed by Jane's device 600B and the devices of other participants in the shared-content session. Accordingly, the functions that are described as being performed by Jane's device 600B are similarly capable of being performed by John's device 600A and the devices of other participants in the shared-content session, unless specified otherwise.

In FIG. 6A, John's device 600A is not currently participating in a shared-content session or a real-time communication, and is displaying, via display 600-1A, music interface 602, which can be used to start playback of music at John's device 600A. John's device 600A detects input 605-1 (e.g., a tap input on display 600-1A or other selection input) on affordance 604 and, in response, displays menu 606, as shown in FIG. 6B. Menu 606 includes options that can be selected for performing various tasks such as selecting playback options for music, indicating preferences for music, and sharing music. For example, option 606-1 can be selected to display an invitation interface for inviting users to share the music in music interface 602, and option 606-2 can be selected to display a sharing interface with various options for sharing the music with other users. In some embodiments, option 606-1 can be displayed as an option in the sharing interface that is displayed in response to selecting option 606-2.

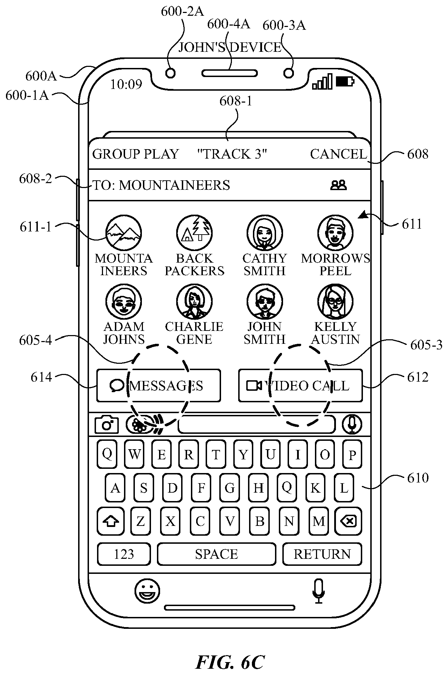

In response to detecting input 605-2 on option 606-1, John's device 600A displays invitation interface 608, as shown in FIG. 6C. Invitation interface 608 provides an interface for selecting one or more recipients (e.g., contacts) of an invitation for sharing content (e.g., "Track 3" as indicated by identifier 608-1) in a shared-content session. In some embodiments, John's device 600A suggests (e.g., automatically) various contacts to be selected as recipients of the invitation. In some embodiments, a user can manually enter the recipient(s) by typing contact info into recipient field 608-2 using keyboard 610, or can select recipients indicated by contact options 611, which can be selected to add the corresponding contact or group of contacts to recipient field 608-2. In FIG. 6C, the "Mountaineers" group was selected as a recipient of the invitation using keyboard 610 or by selecting contact option 611-1. Other contacts can be selected as recipients in a similar manner. In some embodiments, John's device 600A pre-populates (e.g., automatically selects) one or more contacts into recipient field 608-2. For example, if John's device 600A is currently in a real-time communication session (e.g., a video chat) with a particular contact (e.g., user) or group of contacts, John's device displays invitation interface 608 with the contact(s) (e.g., the other participants of the real-time communication session) pre-populated in recipient field 608-2.

Invitation interface 608 also includes invitation options (video call option 612 and messages option 614), which can be selected to send, to the selected recipient(s), an invitation to join a shared-content session. For example, selecting video call option 612 (e.g., via input 605-3 or other selection input) causes John's device 600A to send the invitation to the selected recipients using an application (e.g., a video call application) on John's device for providing synchronous communication. In the embodiments described herein, synchronous communication is a video call provided using a video call application, but it should be appreciated that the synchronous communication can be an audio call or other synchronous communication options described herein. When the shared-content session is initiated via synchronous communication, real-time communication is enabled for the shared-content session using audio and/or video channels that are activated through the synchronous communication (e.g., an audio and/or video call). Selecting messages option 614 (e.g., via input 605-4 or other selection input) causes John's device 600A to send the invitation to the selected recipients using an application (e.g., a messages application) on John's device for providing asynchronous communication. In the embodiments described herein, the asynchronous communication is a text message communication provided using a messages application, but it should be appreciated that the asynchronous communication can be an email or other asynchronous communication options described herein. When the shared-content session is initiated via asynchronous communication, real-time communication is not enabled for (or concurrently with) the shared-content session. In some embodiments, real-time communication can be enabled or disabled for (or concurrently with) a respective shared-content session, as described in greater detail below.

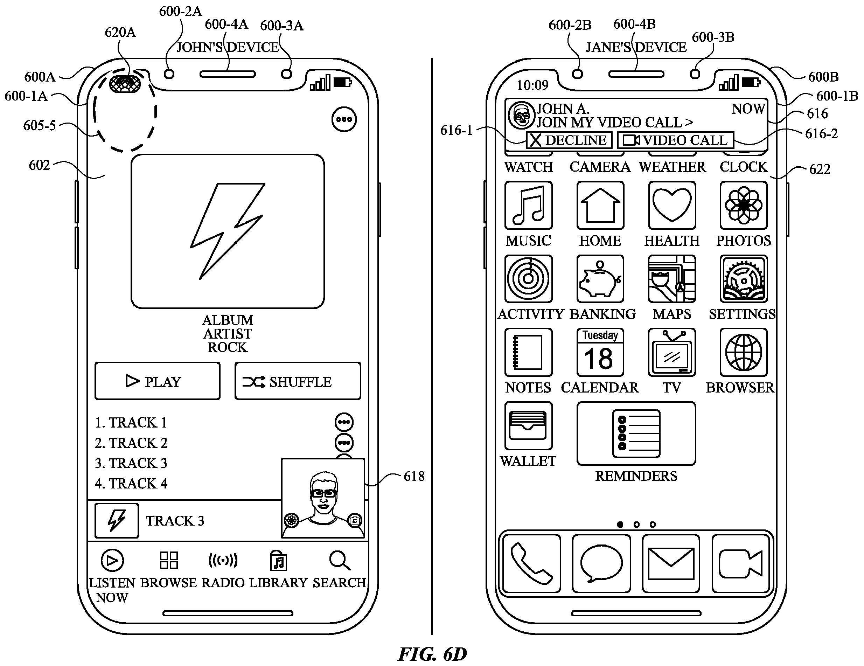

FIGS. 6D-6H depict interfaces for various embodiments in which John's device 600A sends an invitation to join a shared-content session using video call option 612. In response to detecting input 605-3, John's device 600A initiates a shared-content session with the Mountaineers group by initiating a video call with the group. As previously mentioned, when the shared-content session is initiated via synchronous communication, real-time communication is enabled for the shared-content session through the video call. Accordingly, John's device 600A displays video feed 618 and pill 620A, as shown in FIG. 6D. Video feed 618 represents an active video feed for the video call and pill 620A indicates that a shared-content session is active at John's device 600A. Because no other users have joined the video call, the video feed shown in FIG. 6D is a self view of John, as captured using camera 600-2A, and pill 620A is displayed having a de-emphasized (e.g., grey) appearance to indicate that other users have not yet joined the shared-content session that is provided with the video call. In the embodiment depicted in FIG. 6D, John's device 600A has started the shared-content session, but has not automatically started playback of the selected content (e.g., Track 3). In some embodiments, however, playback of the selected content is started automatically after starting the shared-content session.

In FIG. 6D, Jane's device 600B displays notification 616, which is an incoming video call notification that indicates that John is inviting Jane, who is a member of the Mountaineers group, to join the video call. Notification 616 is displayed overlaying home screen 622 on Jane's device 600B. In some embodiments, a notification similar to notification 616 is displayed at the devices of other users who are also members of the Mountaineers group. Notification 616 includes decline option 616-1 and accept option 616-2. In some embodiments, notification 616 includes an indication that the video call is associated with a shared-content session. In some embodiments, the notification includes an indication of content that has been selected for sharing.

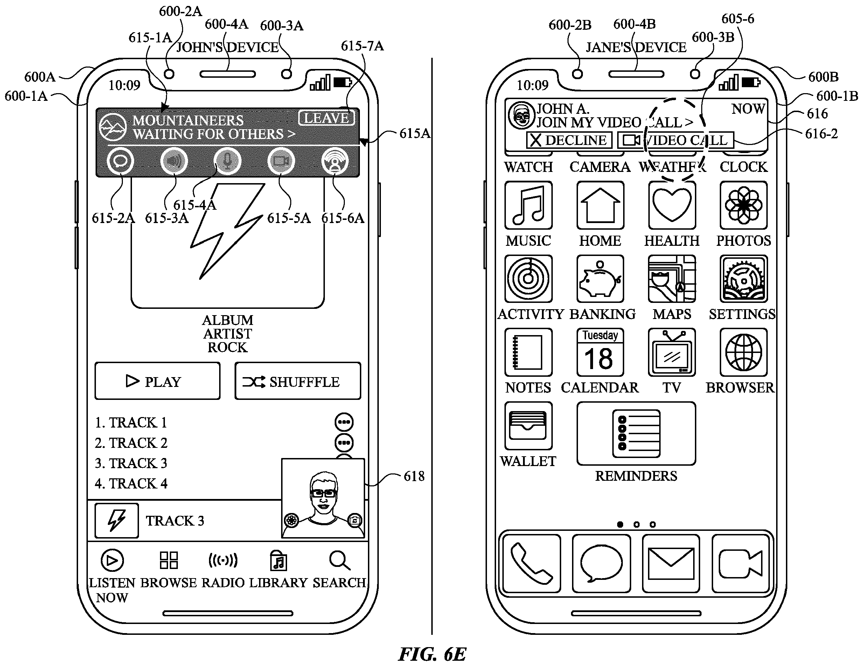

In FIG. 6E, John's device 600A displays control region 615A in response to input 605-5 selecting pill 620A. In some embodiments, John's device 600A displays control region 615A after input 605-3 selecting video call option 612 in FIG. 6C. In such embodiments, control region 615A would be displayed in FIG. 6D in lieu of pill 620A, and pill 620A can be displayed upon dismissing control region 615A (e.g., via a dismiss gesture or after a predetermined amount of time has elapsed). Control region 615A provides information associated with the shared-content session and includes control options for controlling operations, parameters, and/or settings of an active shared-content session. Control region 615A includes status region 615-1A, which includes status information associated with the shared-content session and, in some embodiments, can be selected to display additional information about the shared-content session. As depicted in FIG. 6E, status region 615-1A currently indicates that other members of the Mountaineers group have not yet joined the shared-content session. Control region 615A also includes various options that are selectable to control operations, parameters, and/or settings of the shared-content session. For example, messages option 615-2A is selectable to, in some embodiments, view a messages conversation between the participants of the group that was invited to join the shared-content session. Speaker option 615-3A is selectable to, in some embodiments, enable or disable the audio output at John's device 600A (e.g., at speaker 600-4A). In some embodiments, speaker option 615-3A can be selected to choose a different audio output device (e.g., headphones and/or a wirelessly connected audio output device) for the real-time communication enabled for the shared-content session. Mic option 615-4A is selectable to, in some embodiments, enable or disable microphone 600-3A, thereby muting or unmuting John's audio input for the real-time communication enabled for the shared-content session. Camera option 615-5A is selectable to, in some embodiments, enable or disable camera 600-2A, thereby enabling or disabling the video feed provided by camera 600-2A for the shared-content session. In some embodiments, camera option 615-5A can be selected to select a different camera as the video source for the real-time communication enabled for the shared-content session. Sharing option 615-6A is selectable to, in some embodiments, display a menu with various options and settings associated with the shared-content session. Leave option 615-7A is selectable to, in some embodiments, cause John's device 600A to leave the shared-content session, optionally without terminating the shared-content session for other participants of the shared-content session.

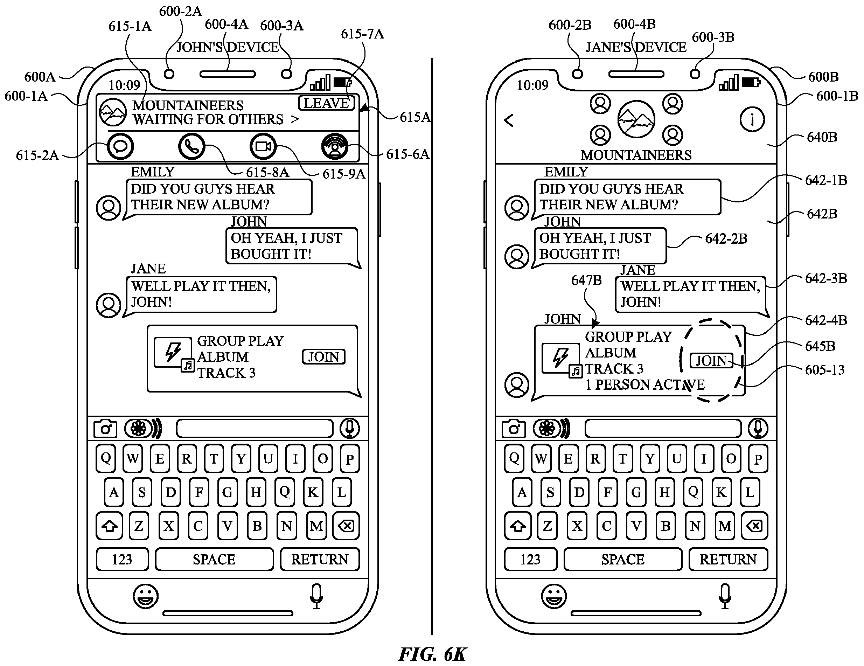

In some embodiments, control region 615A has a different appearance depending on whether or not real-time communication has been enabled at John's device 600A for the shared-content session. For example, when real-time communication is enabled at John's device 600A for the shared-content session, control region 615A has a dark appearance (e.g., a black or dark grey background color) as shown in FIG. 6E, and includes speaker option 615-3A, mic option 615-4A, and camera option 615-5A. When real-time communication is not enabled at John's device 600A for the shared-content session, control region 615A has a light appearance (e.g., a white background color) and includes an audio call option and a video call option (and does not include speaker option 615-3A, mic option 615-4A, and camera option 615-5A), as shown in FIG. 6K and described in greater detail below. In some embodiments, the appearance of control region 615A is specific to a status of John's device 600A. Accordingly, the devices of other participants of the shared-content session can display a control region having different appearances depending on whether or not real-time communication is enabled at the respective devices, without affecting the appearance of control region 615A displayed at John's device 600A.

In some embodiments, an appearance of the various options in control region 615A is used to indicate a state of the corresponding option. For example, speaker option 615-3A, mic option 615-4A, and camera option 615-5A can be shaded as shown in FIG. 6E (or otherwise visually emphasized) to indicate that the speaker, mic, and camera are enabled. These options can be shown unshaded (or otherwise visually deemphasized) to indicate that the respective speaker, mic, and/or camera option is disabled. Additionally, sharing option 615-6A can be shown in a shaded or unshaded appearance to indicate a status of content for the shared-content session. For example, in some embodiments, sharing option 615-6A is shown in a shaded (or otherwise visually emphasized) state when content is being shared via the shared-content session (e.g., when screen-share content or synchronized content is being output), and is unshaded (or otherwise visually deemphasized) when screen-share or synchronized content is not being output during the shared-content session.

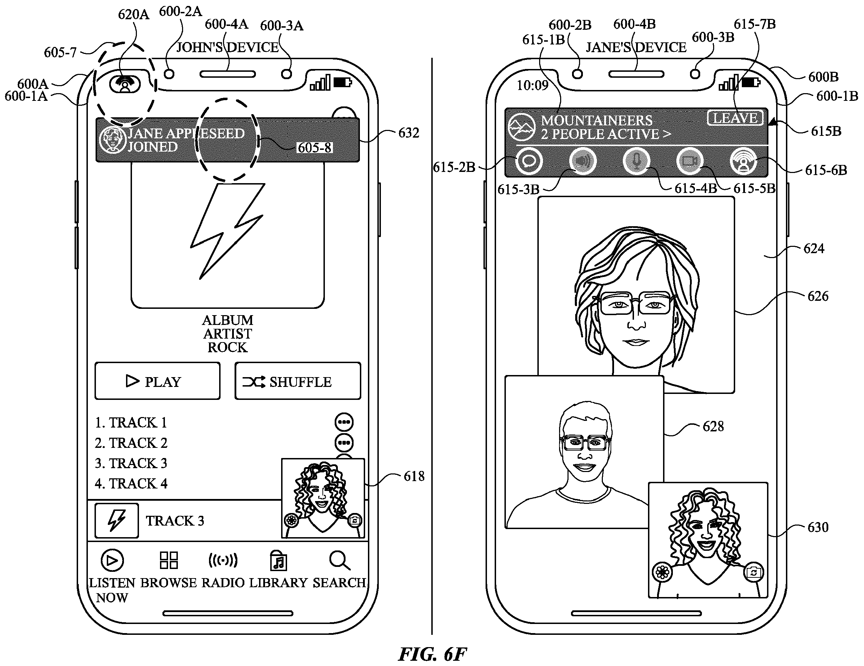

In FIG. 6E, Jane's device 600B detects input 605-6 selecting accept option 616-2 and, in response, joins the shared-content session with John's device 600A and other participants of the Mountaineers group. Because Jane's device accepted the invitation in FIG. 6E, real-time communication is enabled at Jane's device 600B for the shared-content session, and Jane's device 600B displays control region 615B (similar to control region 615A) having the dark appearance and including speaker option 615-3B, mic option 615-4B, and camera option 615-5B enabled, as shown in FIG. 6F. Jane's device also displays video call interface 624, which includes video tiles 626 and 628 and video feed 630. Video tiles 626 and 628 represent the video feeds of participants of the shared-content session, and video feed 630 represents Jane's self view provided by camera 600-2B. Video tile 626 represents the video feed of Emily, who joined the video call at about the same time as Jane, and video tile 628 represents the video feed of John.

In FIG. 6F, John's device 600A has dismissed control region 615A (e.g., in response to an input gesture to dismiss the control region or because a predetermined amount of time has elapsed) and is currently displaying pill 620A, which has changed to a green appearance to indicate that a threshold number of participants has joined the shared-content session. In some embodiments, pill 620A turns green after the first participant (other than John) has joined the shared-content session. John's device 600A has also updated video feed 618 to show the video feed of Jane, who has now joined the shared-content session. In some embodiments, video feed 618 displays the video feed of a most active, or most recently active, participant of the shared-content session. John's device 600A also displays notification 632 indicating that Jane has joined the shared-content session. In some embodiments, additional notifications are displayed when additional users join the shared-content session. In some embodiments, a single notification is displayed indicating that multiple participants have joined the shared-content session. In some embodiments, notification 632 is not displayed.

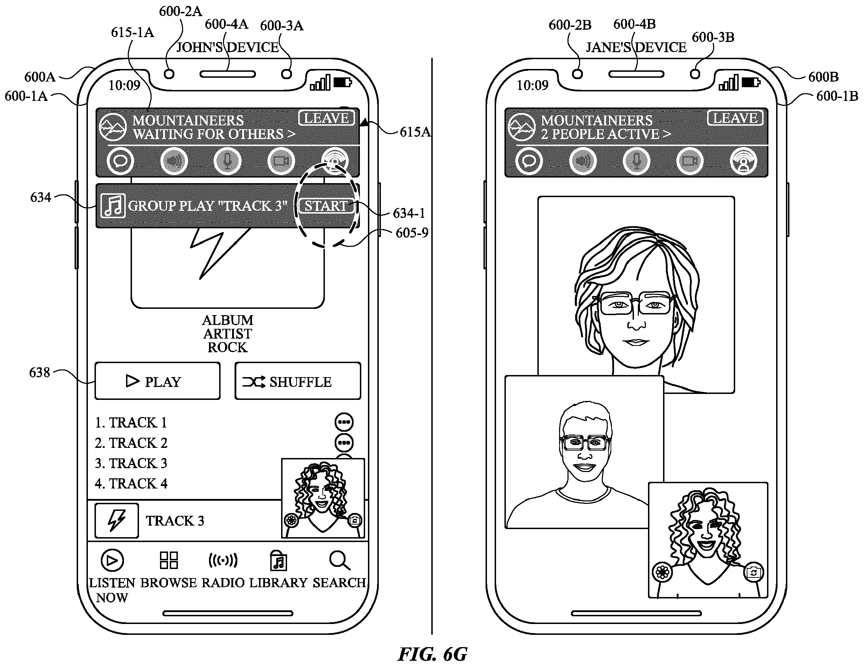

In FIG. 6G, John's device 600A displays control region 615A in response to input 605-7 on pill 620A or in response to input 605-8 on notification 632. Status region 615-1A indicates that the shared-content session is active with two participants of the Mountaineers group (Emily and Jane), but content is not currently being shared with the participants of the shared-content session. John's device 600A displays banner 634 prompting John to start playback of the content that was selected for sharing (e.g., Track 3). Banner 634 includes option 634-1, which is selectable to start playback of Track 3 for the participants of the shared-content session. In the embodiment depicted in FIG. 6G, John's device 600A automatically displays banner 634 and option 634-1 in response to detecting a threshold number of participants joining the shared-content session. For example, banner 634 and option 634-1 are automatically displayed when a first participant (other than John) joins the shared-content session. In some embodiments, John's device 600A displays banner 634 when initiating the shared-content session (e.g., in response to input 605-3 or other input), but does not display option 634-1 (or option 634-1 is not selectable) until the threshold number of participants join the shared-content session or until an input is received on banner 634.

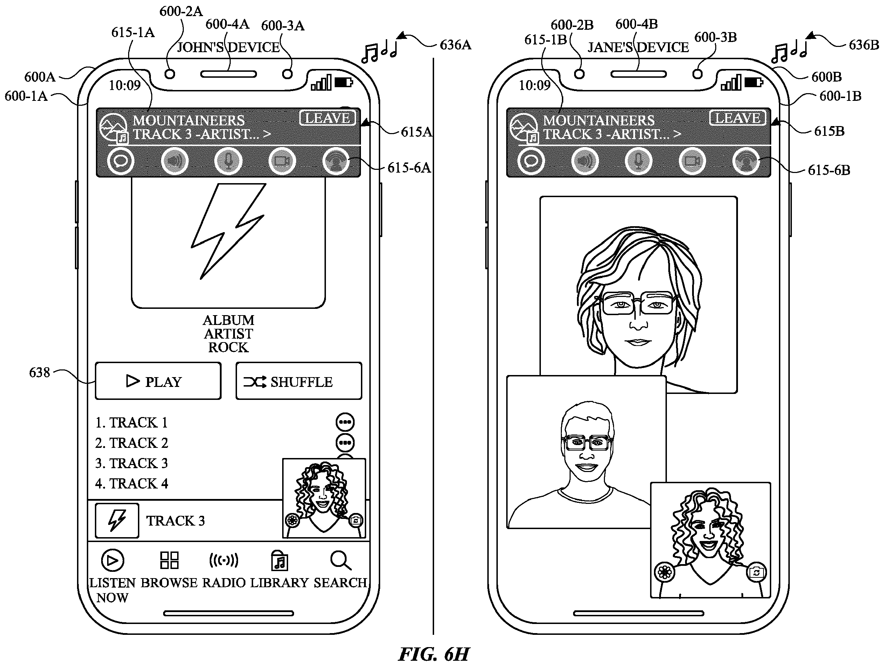

John's device 600A detects input 605-9 selecting option 634-1 and, in response, begins to play Track 3 for the participants of the shared-content session, as indicated by audio output 636A at John's device 600A and audio output 636B at Jane's device 600B, as shown in FIG. 6H. In some embodiments, John's device 600A can play Track 3 for the participants of the shared-content session in response to a selection of play affordance 638 or in response to other inputs to play the content. Because content (e.g., Track 3) is being shared via the shared-content session, share options 615-6A and 615-6B are shown shaded in control regions 615A and 615B, respectively. Additionally, status regions 615-1A and 615-1B are updated to indicate that Track 3 is being played for the members of the Mountaineers group. Because real-time communication is enabled at John's device 600A and Jane's device 600B for the shared-content session, John and Jane are able to interact with other participants of the shared-content session, for example, viewing each other's video feeds and talking to each another over the active audio channel.

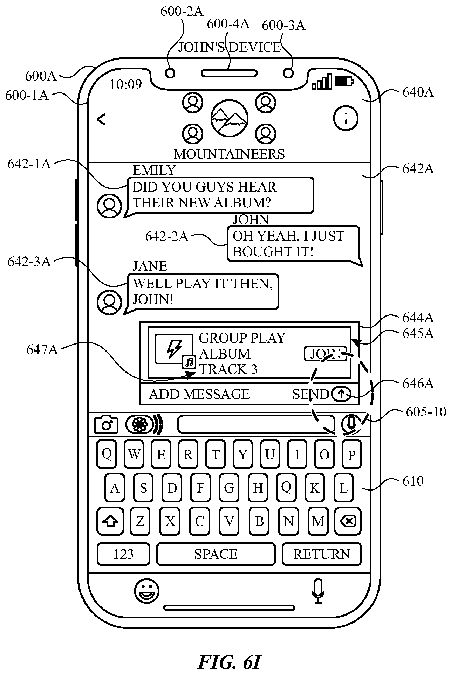

FIGS. 6I-6AC depict interfaces for various embodiments in which John's device 600A sends an invitation to join a shared-content session using asynchronous communication. In response to detecting input 605-4 selecting messages option 614 in FIG. 6C, John's device 600A displays messages interface 640A, which includes a messages conversation between members of the Mountaineers group. Messages interface 640A includes message conversation region 642A with messages 642-1A, 642-2A, and 642-3A that have been sent to the members of the Mountaineers group as part of a messages conversation. Messages interface 640A also includes message compose field 644A and send option 646A, which is selectable to send a message that has been entered in message compose field 644A. As shown in FIG. 6I, John's device 600A displays messages interface 640A with invitation link 645A automatically populated in message compose field 644A in response to input 605-4 on messages option 614. In some embodiments, keyboard 610 can be used to type additional text into message compose filed 644A to be included with the link. Invitation link 645A is a link that, once sent to the Mountaineers group, is selectable to join a shared-content session with members of the Mountaineers group, as described in greater detail below.

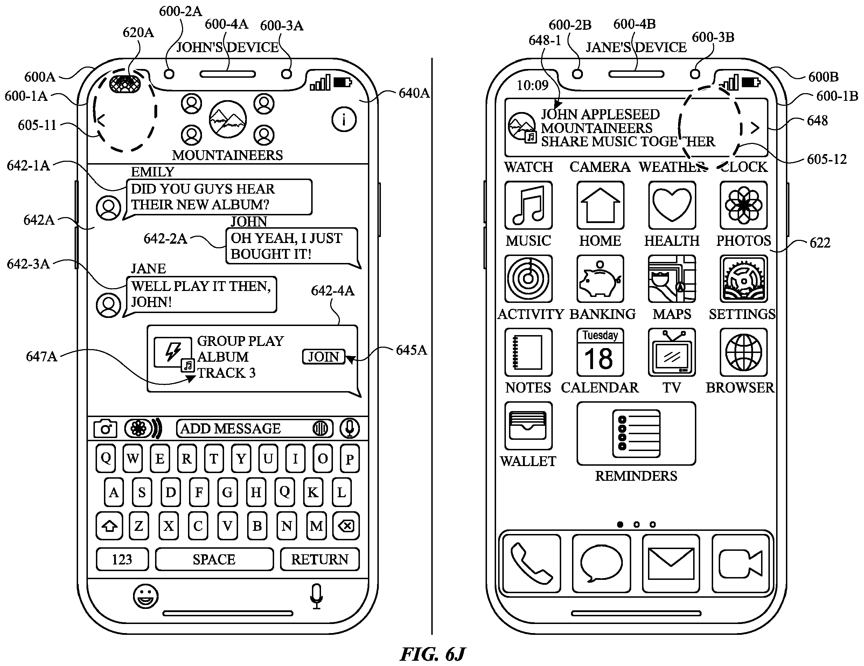

In response to detecting input 605-10 selecting send option 646A, John's device 600A sends link 645A in message 642-4A and automatically initiates a shared-content session with the Mountaineers group. As previously mentioned, when the shared-content session is initiated via asynchronous communication, as demonstrated, for example, in FIGS. 6C and 6I, the shared-content session is initiated without real-time communication enabled for the shared-content session. In some embodiments, message 642-4A includes (optionally as a part of link 645A) status information 647A that indicates the status of the shared-content session. For example, in FIG. 6J status information 647A indicates that music entitled "Track 3" of "Album" has been selected to be shared in a shared-content session. In some embodiments, status information 647A is automatically updated in message 642-4A as the status of the shared-content session changes.

In FIG. 6J, John's device 600A displays pill 620A, which indicates that a shared-content session is active at John's device 600A, and Jane's device 600B displays message notification 648 indicating that John has sent, via the messages application, an invitation to join a shared-content session. In some embodiments, John's device 600A displays control region 615A (e.g., as depicted in FIG. 6K) in lieu of pill 620A. Because no other users have joined the shared-content session, pill 620A is displayed having a grey appearance to indicate that other users have not yet joined the shared-content session that is provided through the link sent in message 642-4A. In the embodiment depicted in FIG. 6J, John's device 600A has started the shared-content session, but has not automatically started playback of the selected content (e.g., Track 3). In some embodiments, playback of the selected content is started automatically after starting the shared-content session.

In some embodiments, message notification 648 includes text 648-1 indicating the sender of the invitation, the recipient(s) of the invitation, an activity to be shared in the shared-content session, content selected to be shared in the shared-content session, and/or instructions or a prompt to join the shared-content session. In response to detecting input 605-12 selecting message notification 648, Jane's device 600B displays messages interface 640B, as shown in FIG. 6K. Messages interface 640B is similar to messages interface 640A and includes message conversation region 642B, including message 642-4B, which includes link 645B for joining the shared-content session with the Mountaineers group and status information 647B, which is similar to status information 647A. In FIG. 6K, status information 647B also indicates that one person (e.g., John) is active in the shared-content session.

In FIG. 6K, John's device 600A displays control region 615A in response to detecting input 605-11 on pill 620A in FIG. 6J. Because real-time communication is not enabled for the shared-content session, control region 615A has a light appearance and includes audio call option 615-8A and video call option 615-9A in lieu of speaker option 615-3A, mic option 615-4A, and camera option 615-5A. Audio call option 615-8A and video call option 615-9A can be selected to enable real-time communication at John's device 600A for the shared-content session. Specifically, audio call option 615-8A can be selected to initiate an audio call (without a live video channel) for the shared-content session, and video call option 615-9A can be selected to initiate a video call (optionally including a live audio channel) for the shared-content session. Status region 615-1A indicates that no users (other than John) have joined the shared-content session.

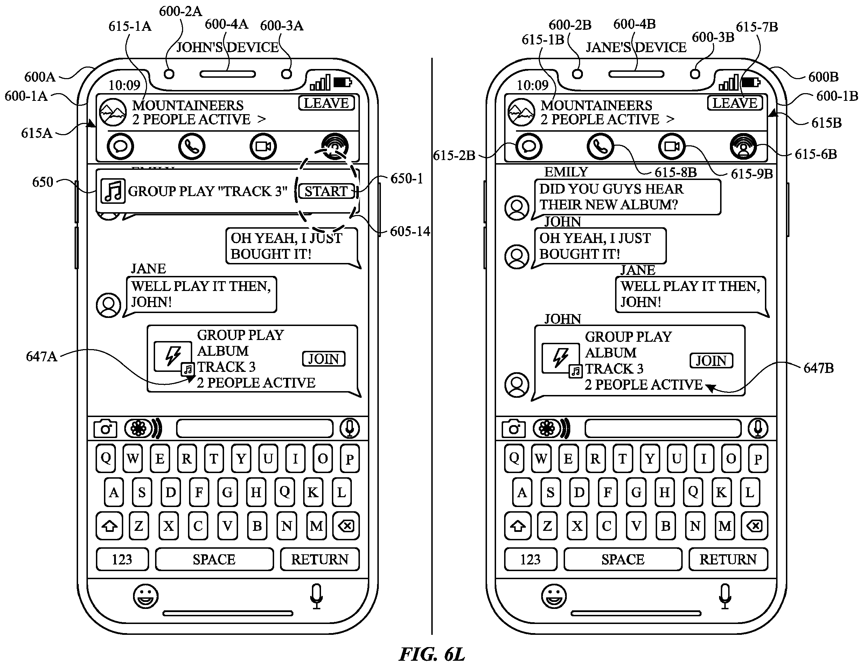

In FIG. 6L, Jane's device 600B joins the shared-content session in response to detecting input 605-13 selecting link 645B. Because the shared-content session was initiated via asynchronous communication (e.g., by selecting link 645B that was sent in a text message communication or via other input), Jane's device 600B joins the shared-content session with real-time communication disabled, similar to John's device 600A. Accordingly, Jane's device 600B displays control region 615B having the light appearance and including audio call option 615-8B and video call option 615-9B in lieu of speaker option 615-3B, mic option 615-4B, and camera option 615-5B. Audio call option 615-8B and video call option 615-9B are similar to audio call option 615-9A and video call option 615-9A, respectively, and can be selected to enable real-time communication at Jane's device 600B for the shared-content session. Status region 615-1B (and status information 647B) indicates that two people other than Jane (e.g., John and Emily) have joined the shared-content session, but content is not currently being shared with the participants of the shared-content session.

In FIG. 6L, John's device 600A updates status region 615-1A (and status information 647A) to indicate that two people other than John (e.g., Jane and Emily) have joined the shared-content session, but content is not currently being shared with the participants of the shared-content session. John's device 600A displays banner 650 prompting John to start playback of the content that was selected for sharing (e.g., Track 3). Banner 650 is similar to banner 634 and includes option 650-1, which is selectable to start playback of Track 3 for the participants of the shared-content session. In the embodiment depicted in FIG. 6L, John's device 600A automatically displays banner 650 and option 650-1 in response to detecting a threshold number of participants joining the shared-content session. For example, banner 650 and option 650-1 are automatically displayed when a first participant (other than John) joins the shared-content session. In some embodiments, John's device 600A displays banner 650 when initiating the shared-content session (e.g., in response to input 605-10 or other input), but does not display option 650-1 (or option 650-1 is not selectable) until the threshold number of participants join the shared-content session or until an input is received on banner 650. In some embodiments, pill 620A is displayed having the green color when a first participant other than John (or a threshold number of participants) joins the shared-content session.

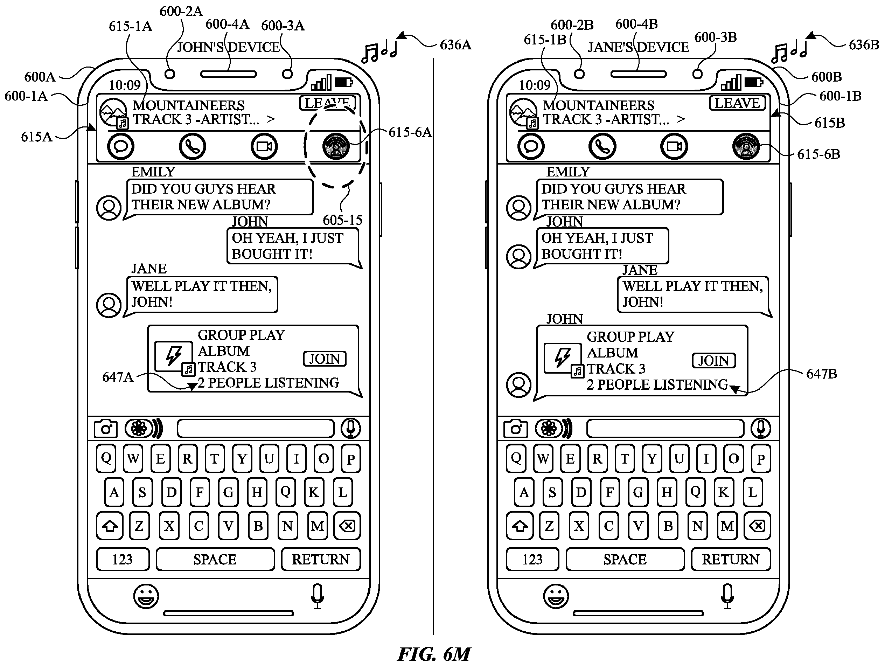

John's device 600A detects input 605-14 selecting option 650-1 and, in response, begins to play Track 3 for the participants of the shared-content session, as indicated by audio output 636A at John's device 600A and audio output 636B at Jane's device 600B, as shown in FIG. 6M In some embodiments, John's device 600A can play Track 3 for the participants of the shared-content session in response to a selection of play affordance 638 (e.g., shown in FIG. 6H) or in response to other inputs to play the content. Because content (e.g., Track 3) is being shared via the shared-content session, share options 615-6A and 615-6B are shown shaded in control regions 615A and 615B, respectively. Additionally, status regions 615-1A and 615-1B, and status information 647A and 647B, are updated to indicate that Track 3 is being played for the members of the Mountaineers group. Because real-time communication is not enabled at John's device 600A and Jane's device 600B for the shared-content session, John and Jane are unable to interact with other participants of the shared-content session via real-time communication.

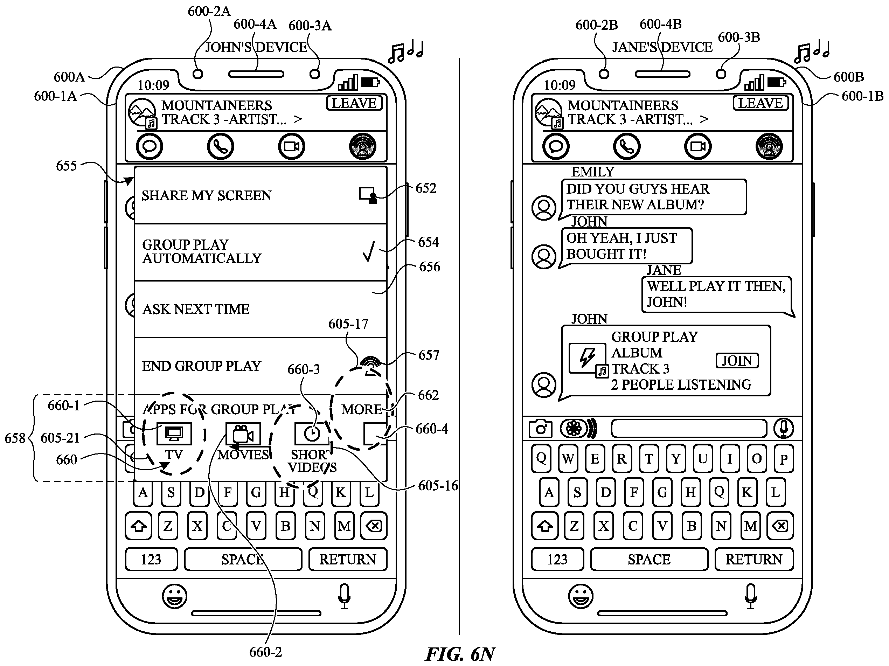

In FIG. 6M, John's device 600A detects input 605-15 selecting share option 615-6A and, in response, displays share menu 655, as shown in FIG. 6N. Share menu 655 includes various options for controlling operations, parameters, and/or settings of a shared-content session. In the embodiment depicted in FIG. 6N, share menu 655 includes screen share option 652, automatic playback option 654, manual playback option 656, end option 657, and application region 658, which includes application download option 662 and a list of applications 660 that are capable of providing content that can be shared in a shared-content session. Application region 658 also includes an application download option 662. Screen share option 652 can be selected to start sharing the content displayed on John's device 600A. When automatic playback option 654 is selected, as shown in FIG. 6N, content that is capable of being shared in a shared-content session is automatically shared with participants of the shared-content session without prompting the user to confirm playback for the participants. When manual playback option 656 is selected, the user is prompted to select playback of the content for the participants of the shared-content session. End option 657 can be selected to end playback of content that is being shared in the shared-content session. In some embodiments, end option 657 is not displayed when content is not being shared in the shared-content session. In some embodiments, share menu 655 includes an option that can be selected to display shared-content session settings. In some embodiments, share menu 655 includes an option that can be selected to display shared-content session settings for a respective application.

Application region 658 provides the user with quick access to various applications that support the sharing of content (e.g., synchronized content) in a shared-content session. For example, in FIG. 6N, John's device 600A includes TV application icon 660-1, music application icon 660-2, short videos application icon 660-3, and application icon 660-4, which is partly onscreen. The application icons can be selected to launch the corresponding application, as discussed in greater detail below. The list of applications 660 can be scrolled (e.g., in response to scroll input 605-16 or other input) to completely display application icon 660-4 as well as other application icons that are provided in the list. In some embodiments, the applications provided in the list of applications 660, and/or the order in which the application icons are listed, is determined based on various criteria such as, for example, the participants of the shared-content session, historical usage of the applications in shared-content sessions, participant entitlements/privileges for viewing content in the respective applications, and/or availability of the applications at John's device 600A. The applications displayed in the list of applications 660 includes applications that are downloaded and/or installed at John's device 600A as well as, in some embodiments, applications that are not currently downloaded and/or installed, but are capable of being downloaded and/or installed at John's device 600A.

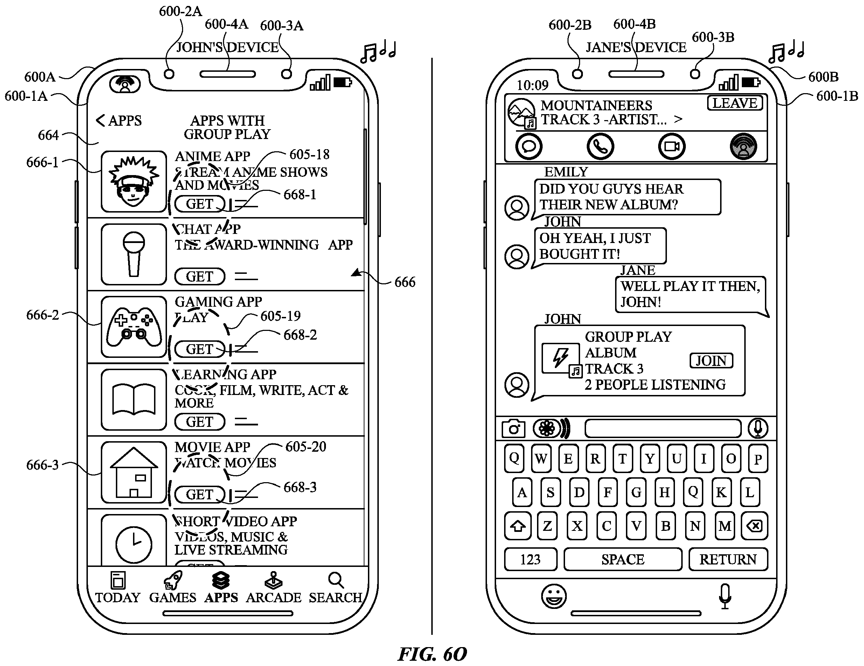

In FIG. 6O, John's device 600A displays application download interface 664 in response to detecting input 605-17 selecting application download option 662 in FIG. 6N. Application download interface 664 includes a list of applications 666 that are capable of providing content (e.g., synchronized content) that can be shared in a shared-content session and are available to be acquired by purchasing, downloading, and/or installing the respective applications at John's device 600A. Applications 666 represent a subset of a larger collection of applications that are capable of being acquired, and the applications in the subset are filtered from the larger collection of applications based on their ability to provide content for shared-content sessions. As shown in FIG. 6O, the applications are not currently downloaded and/or installed at John's device 600A, but are capable of being downloaded and/or installed at John's device 600A, where they can be accessed from John's home screen and/or listing of applications 660 in application region 658. For example, anime application 666-1 can be downloaded/installed at John's device 600A in response to input 605-18 selecting download icon 668-1. Gaming application 666-2 can be downloaded/installed at John's device 600A in response to input 605-19 selecting download icon 668-2. Similarly, movie application 666-3 can be downloaded/installed at John's device 600A in response to input 605-20 selecting download icon 668-3. In some embodiments, some of the applications need to be purchased before they are downloaded, installed, and/or accessible at John's device 600A. In such embodiments, after the application is purchased, the application is downloaded/installed at John's device 600A. In some embodiments, some of the applications require certain privileges and/or entitlements to access content in the respective application. In such embodiments, after the privileges and/or entitlements are acquired (e.g., purchased and/or granted) the content in the respective application is available to be accessed for playback and for being shared in a shared-content session.

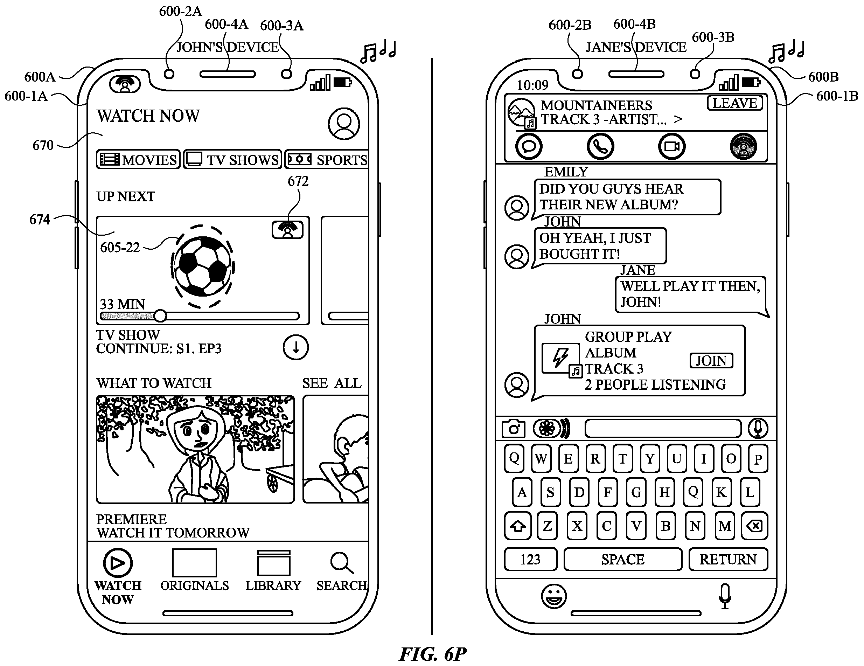

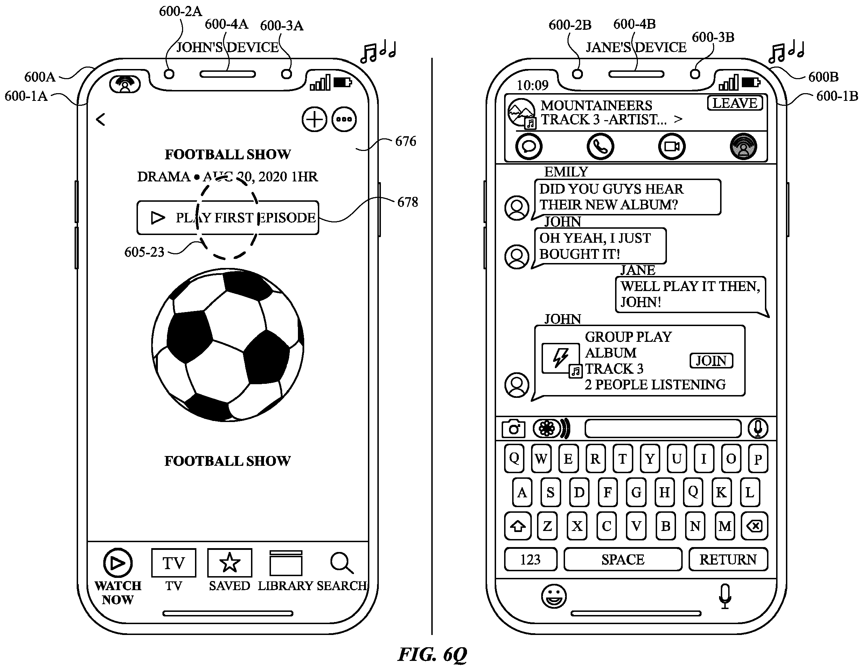

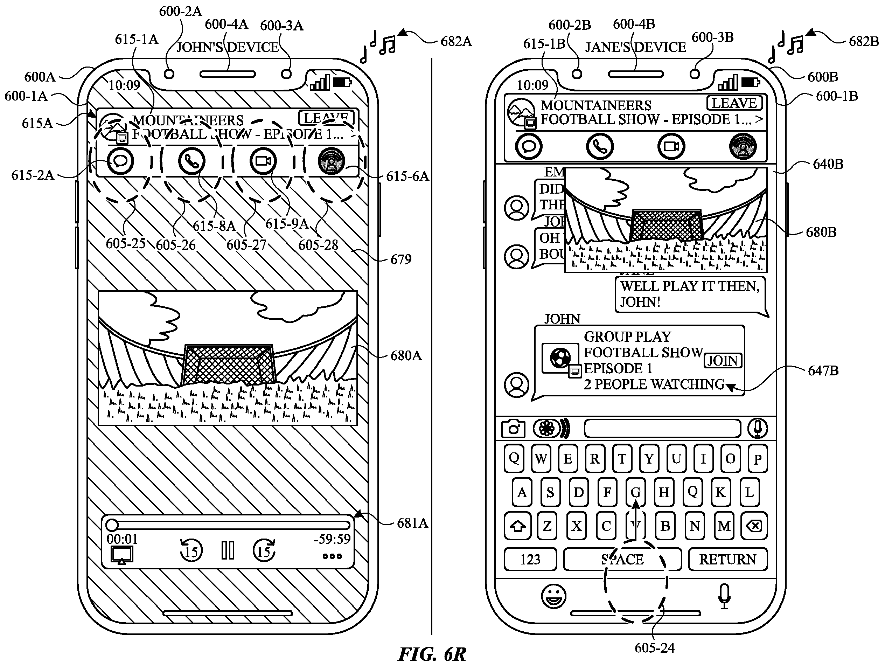

In FIG. 6P, John's device 600A displays TV application interface 670 in response to detecting input 605-21 selecting TV application icon 660-1 in FIG. 6N. TV application interface 670 provides content, such as shows and movies, that is capable of being shared in a shared-content session. In FIG. 6P, indicator 672 indicates that Football Show 674 is capable of being shared in a shared-content session. In response to input 605-22 selecting Football Show 674, John's device 600A displays media interface 676, as shown in FIG. 6Q. John's device 600A detects input 605-23 selecting play button 678, which starts playback of Football Show for the Mountaineers group, as shown in FIG. 6R. Because automatic playback option 654 is selected in FIG. 6N, John's device 600A automatically starts playback of Football Show for the Mountaineers group without prompting John to confirm that he wants to share the content in the shared-content session. However, if manual playback option 656 was selected in FIG. 6N, John's device 600A would display a prompt in response to input 605-23, and the prompt would provide John with an option to play Football Show at only John's device 600A (without starting playback of the show for the Mountaineers group) and an option to play Football Show for the Mountaineers group.

In FIG. 6R, John's device 600A has started playback of Football Show for the Mountaineers group. When playback of Football Show begins, John's device 600A displays media PiP 680A and playback controls 681A in media playback interface 679. Playback controls 681A present information regarding playback of the content and provide various controls that are selectable to control playback of content displayed in media PiP 680A. For example, playback controls 681A indicate a playback state of the content, such as being paused or actively playing, indicate a playback status relative to a duration of the media content (e.g., an elapsed playback time), and is selectable to scrub through the media content (e.g., moving a playback location of the media content commensurate with an input). Media PiP 680A displays media content being played at John's device 600A. Media PiP 680A can have a fixed position in an expanded or full-screen view (or using all of the screen outside of a portion of the screen designated for system status information and/or system controls) as shown in media playback interface 679, or displayed as a PiP that can be positioned over various user interfaces as discussed herein. In FIG. 6R, media PiP 680A is displayed in an expanded state while John's device 600A is in a portrait orientation. In some embodiments, however, if John's device 600A is rotated to a landscape orientation while media PiP 680A is in the expanded view, media PiP 680A expands to a full-screen view or an enlarged view that is greater than the view depicted in FIG. 6R. For the sake of simplicity, the displayed representation of the media is referred to hereinafter as media PiP 680A, which can be used to refer to the media in the expanded view or PiP format, depending on context.

As shown in FIG. 6R, media PiP 680A is displaying content of Football Show and audio 682A associated with Football Show is being output at John's device 600A (e.g., using speaker 600-7A). John's device 600A also displays control region 615A over media playback interface 679 with status region 615-1A updated to indicate that the Mountaineers group is now watching Football Show. Because real-time communication is not enabled for the shared-content session, control region 615A is displayed with the light appearance and including audio call option 615-8A and video call option 615-9A.

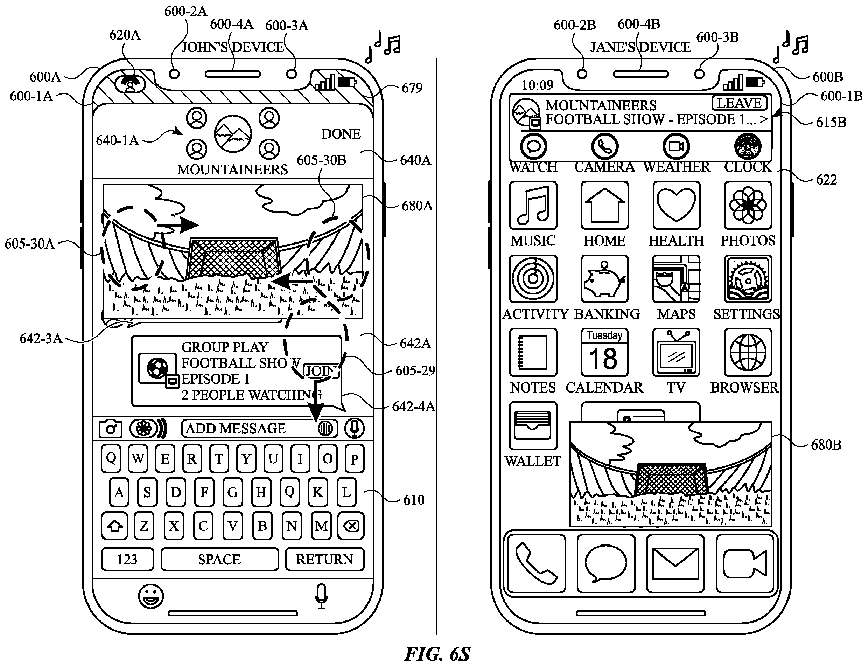

Because Football Show was started for the Mountaineers group, Jane's device 600B stops playing Track 3 and begins playing Football Show, as shown in FIG. 6R. Accordingly, Jane's device 600B displays media PiP 680B (similar to media PiP 680A) overlaying messages interface 640B and Football Show audio 682B is output using speaker 600-7B. Additionally, status information 647B and status region 615-1B are updated to indicate that the Mountaineers group is now watching Football Show. Playback of Football Show is synchronized at John's device 600A, Jane's device 600B, and the devices of other members of the Mountaineers group. Jane's device 600B detects input 605-24, which is a gesture that causes the device to display home screen 622, and displays home screen 622 in response to input 605-24, as shown in FIG. 6S. When displaying home screen 622, Jane's device 600B continues to display media PiP 680B, which is shown moved to a different location on the display and overlaying home screen 622.

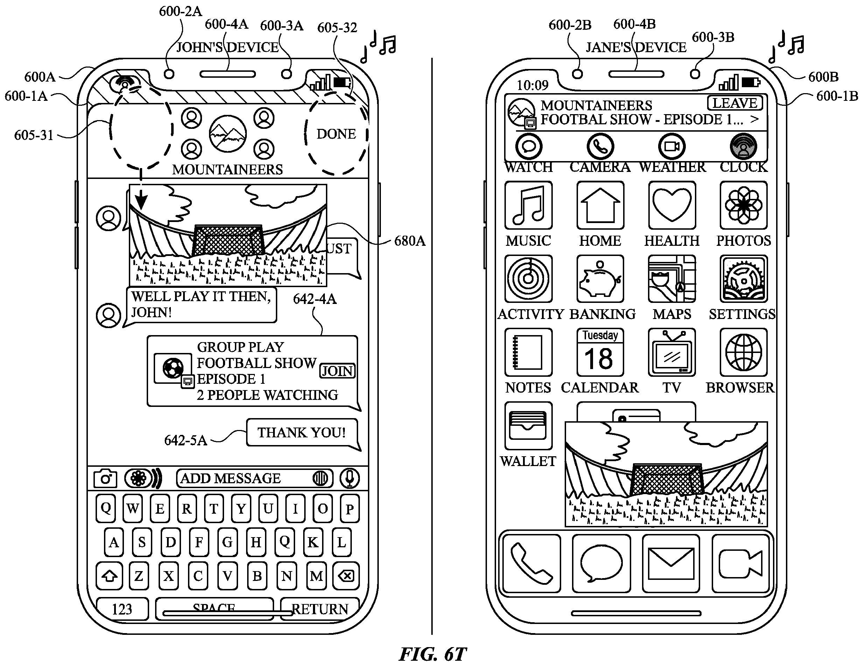

FIGS. 6S-6AC depict interfaces for various embodiments corresponding to inputs 605-25, 605-26, 605-27, and 605-28 depicted in FIG. 6R showing selection of the options in control region 615A. In response to input 605-25 selecting messages option 615-2A, John's device 600A displays messages interface 640A overlaying media playback interface 679. When messages interface 640A is displayed as an overlay, John's device 600A undocks media PiP 680A from media playback interface 679 and displays media PiP 680A over messages interface 640A, as shown in FIG. 6S. John's device 600A displays media PiP 680A at a location on the display that is positioned below recipient indication 640-1A, and above the most recent messages (e.g., messages 642-3A and 642-4A) in message conversation region 642A so that John can see who he is messaging and the most recent (and likely most relevant) messages in the conversation, while also being able to continue watching Football Show in media PiP 680A. In the embodiment depicted in FIG. 6S, John is able to interact with messages interface 640A by sending a message using keyboard 610 and scrolling the messages in message conversation region 642A (e.g., via input 605-29 or other input). John is also able to interact with media PiP 680A while it is displayed over messages interface 640A. For example, in FIG. 6S, John resizes media PiP 680A using a pinching gesture that is provided via concurrent inputs 605-30A and 605-30B. John can also move, minimize, expand, or otherwise interact with media PiP 680A, including tapping on media PiP 680A to display controls (e.g., similar to playback controls 681A) for controlling playback of Football Show. In FIG. 6T, John's device 600A is depicted after resizing media PiP 680A, sending message 642-5A, and scrolling the messages in message conversation region 642A. The overlay that includes messages interface 640A can be dismissed using various gestures or inputs including, for example, a swipe gesture provided via input 605-31 or input 605-32 selecting a done, close, or cancel affordance. In some embodiments, when messages interface 640A is dismissed, John's device 600A displays media playback interface 679 as shown in FIG. 6T or displays media PiP 680A overlaying a different user interface (e.g., TV application interface 670, media interface 676, or a home screen interface). In some embodiments, the messages interface overlay completely covers the underlying application interface on some device types and does not cover, or only partially covers, the underlying application interface on other device types. For example, in some embodiments, the messages interface overlay completely covers the underlying application interface on a device having a smaller screen size (e.g., a phone or wearable device) and does not cover (or partially covers) the underlying application interface on a device having a larger screen size (e.g., a tablet or laptop).

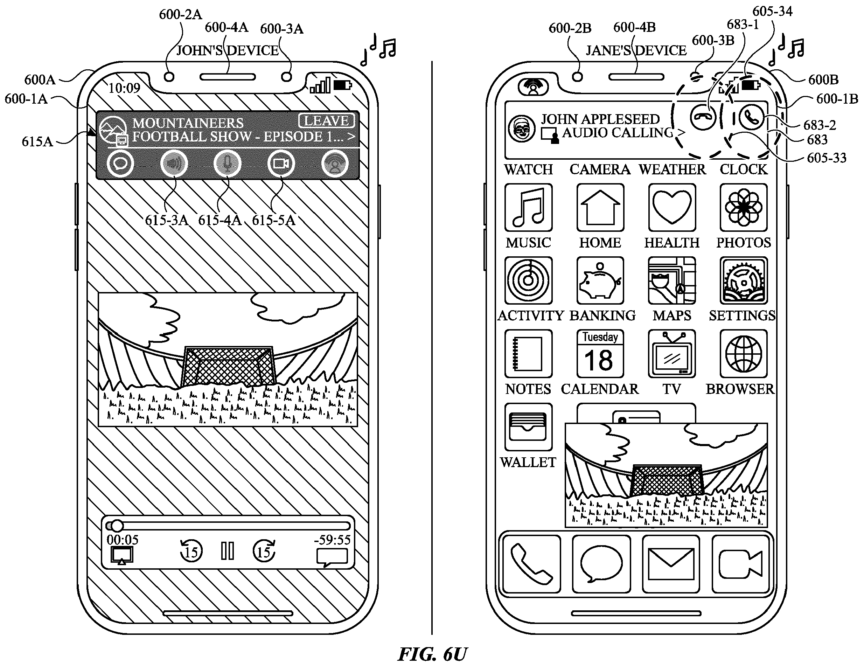

FIGS. 6U-6W depict interfaces for various embodiments in which John initiates an audio call by selecting audio call option 615-8A via input 605-26 in FIG. 6R. In response to detecting input 605-26 selecting audio call option 615-8A, John's device 600A enables real-time communication for the shared-content session and initiates an audio call with the participants of the Mountaineers group. Accordingly, John's device 600A changes the appearance of control region 615A to have the dark appearance, ceases to display audio call option 615-8A and video call option 615-9A, and displays speaker option 615-3A, mic option 615-4A, and camera option 615-5A. Because the audio call includes an active audio channel without an active video channel, speaker option 615-3A and mic option 615-4A are enabled (e.g., as indicated by shading) and camera option 615-5A is disabled (e.g., as indicated by a lack of shading).

Jane's device 600B receives an incoming audio call that was initiated by John's selection of audio call option 615-8A. As shown in FIG. 6U, Jane's device 600B displays incoming call notification 683 indicating that John has initiated an audio call for the shared-content session. Incoming call notification 683 includes a decline option 683-1 and an accept option 683-2. The incoming call can be accepted by selecting accept option 683-2 (e.g., via input 605-34 or other selection input). The incoming call can be declined by selecting decline option 683-1 (e.g., via input 605-33 or other selection input) or, in some embodiments, by failing to select accept option 683-2 within a predetermined amount of time. If Jane declines the audio call, Jane's device 600B remains in the shared-content session with real-time communication disabled. If Jane accepts the audio call invitation, Jane's device 600B remains in the shared-content session and enables real-time communication through an active audio channel.

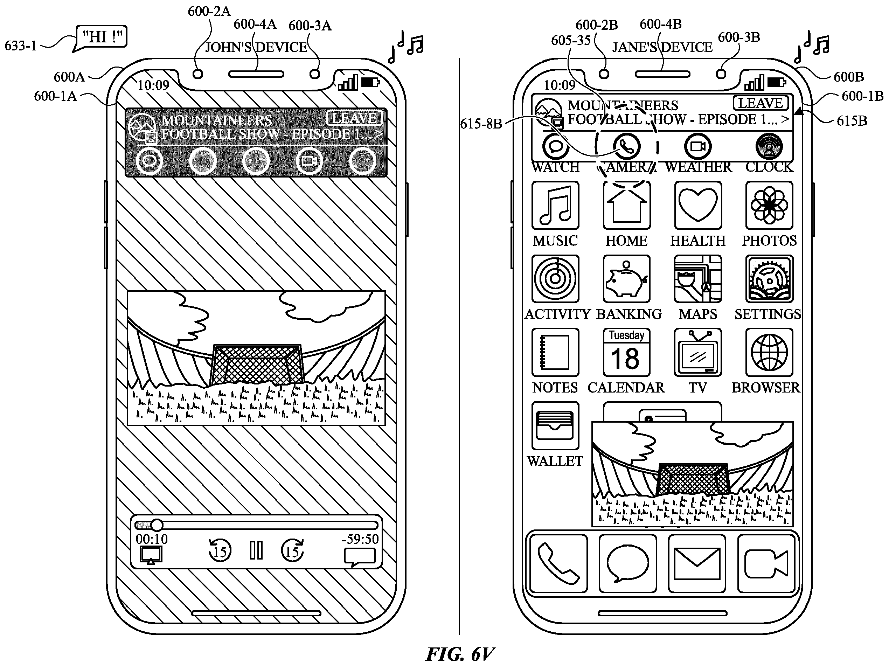

FIG. 6V depicts an embodiment where Jane's device 600B declines the incoming call in response to detecting input 605-33 on decline option 683-1. Accordingly, Jane's device 600B continues the shared-content session (continuing to play Football Show) with real-time communication disabled, as indicated by at least the appearance of control region 615B in FIG. 6V. In some embodiments, Jane can join the audio feed for the shared-content session by selecting audio call option 615-8B (e.g., via input 605-35 or other selection input). Although real-time audio is enabled at John's device 600A (as indicated by at least the appearance of control region 615A) and John's speaker and mic are enabled, Jane's device 600B did not enable real-time communication and, therefore, real-time audio is not provided from John's device 600A to Jane's device 600B. Therefore, as John speaks, as indicated by speech 633-1, the audio from John speaking is not output at Jane's device 600B. It should be appreciated, however, that John's audio can be output at other devices who have enabled real-time communication for the shared-content session. For example, when John selected audio call option 615-8A, an incoming call notification similar to notification 683 was displayed at Emily's device. If Emily accepted the incoming call, the audio channel was enabled for Emily's device and the audio from John speaking would be output at Emily's device (assuming the speaker is enabled at Emily's device).

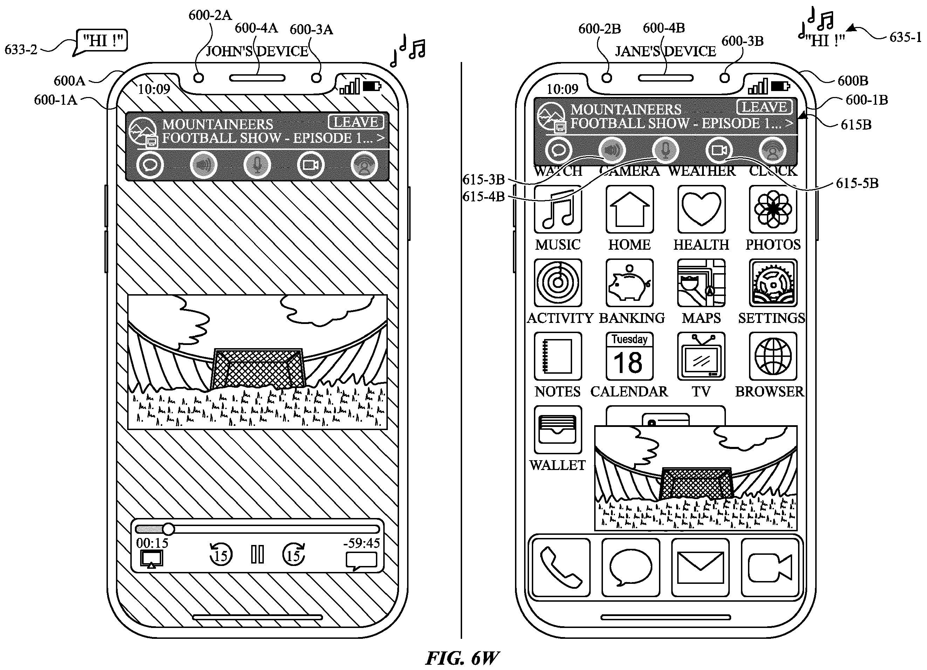

FIG. 6W depicts an embodiment where Jane's device 600B has enabled real-time communication in response to detecting input 605-34 selecting accept option 683-2 in FIG. 6U, or in response to detecting input 605-35 selecting audio call option 615-8B in FIG. 6V. In FIG. 6W, Jane's device 600B has enabled real-time audio as indicated by the dark appearance of control region 615B and the display of speaker option 615-3B, mic option 615-4B, and camera option 615-5B. Because the audio channel is active without an active video channel, speaker option 615-3B and mic option 615-4B are enabled and camera option 615-5B is disabled. Because real-time audio is enabled at John's device 600A and at Jane's device 600B, when John speaks (e.g., as indicated by speech 633-2), the audio from John speaking is output at Jane's device as indicated by output audio 635-1.

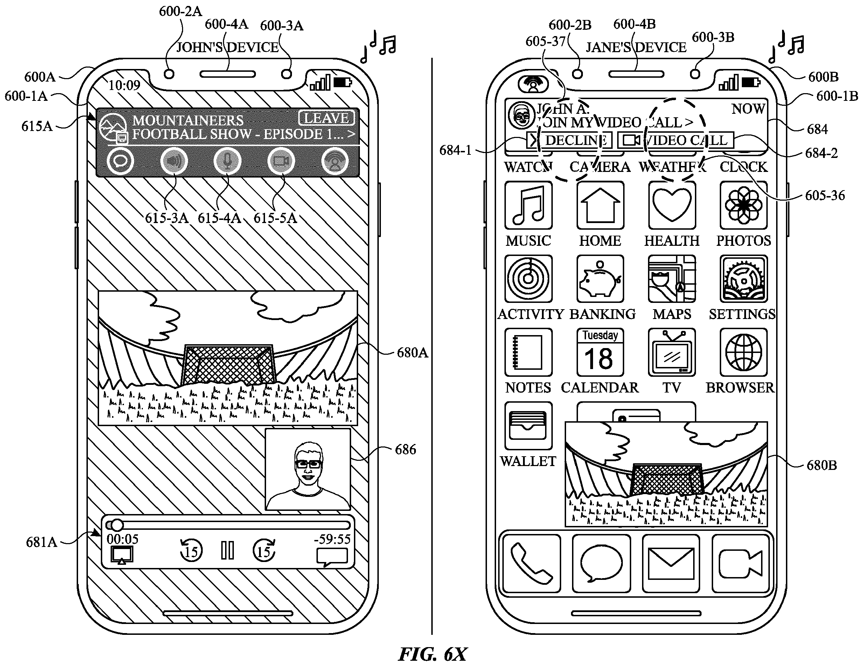

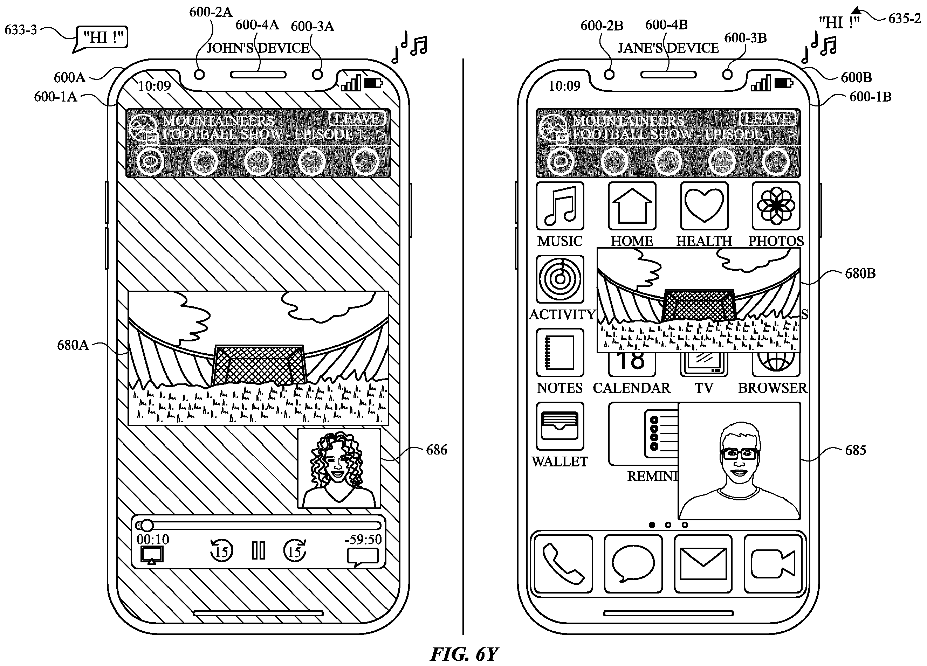

FIGS. 6X and 6Y depict interfaces for various embodiments in which John initiates a video call by selecting video call option 615-9A via input 605-27 in FIG. 6R. In response to detecting input 605-27 selecting video call option 615-9A, John's device 600A enables real-time communication for the shared-content session and initiates a video call with the participants of the Mountaineers group. Accordingly, John's device 600A changes the appearance of control region 615A to have the dark appearance, ceases to display audio call option 615-8A and video call option 615-9A, and displays speaker option 615-3A, mic option 615-4A, and camera option 615-5A. Because the video call includes an active audio channel and an active video channel, speaker option 615-3A, mic option 615-4A, and camera option 615-5A are enabled (e.g., as indicated by shading). John's device 600A also displays video feed 686, which currently shows John's self view because other participants have not yet joined the real-time communication session. In some embodiments, John's device 600A selectively places video feed 686 so as to avoid overlapping playback controls 681A and media PiP 680A. In some embodiments, video feed 686 is displayed within media PiP 680A, for example, when media PiP 680A is undocked from media playback interface 679.

Jane's device 600B receives an incoming video call that was initiated by John's selection of video call option 615-9A. As shown in FIG. 6X, Jane's device 600B displays incoming call notification 684 indicating that John has initiated a video call for the shared-content session. Incoming call notification 684 is similar to notification 616 and includes a decline option 684-1 and an accept option 684-2. The incoming video call can be accepted by selecting accept option 684-2 (e.g., via input 605-36 or other selection input). The incoming video call can be declined by selecting decline option 684-1 (e.g., via input 605-37 or other selection input) or, in some embodiments, by failing to select accept option 684-2 within a predetermined amount of time. If Jane declines the video call, Jane's device 600B remains in the shared-content session with real-time communication disabled. If Jane accepts the video call invitation, Jane's device 600B remains in the shared-content session and enables real-time communication through an active video channel and, optionally, an active audio channel.

FIG. 6Y depicts an embodiment in which Jane's device 600B has enabled real-time communication in response to detecting input 605-36 selecting accept option 684-2 in FIG. 6X. In FIG. 6Y, Jane's device 600B has enabled real-time audio and real-time video as indicated by the dark appearance of control region 615B, the display of speaker option 615-3B, mic option 615-4B, and camera option 615-5B, and the display of video feed 685. Because the audio channel and video channels are active, speaker option 615-3B, mic option 615-4B, and camera option 615-5B are enabled. Because real-time audio is enabled at John's device 600A and at Jane's device 600B, when John speaks (e.g., as indicated by speech 633-3), the audio from John speaking is output at Jane's device as indicated by output audio 635-2. Because real-time video is enabled at both devices (and both device cameras are enabled), Jane's device 600B displays video feed 685, which shows John's video feed, and John's device 600A displays Jane's video feed in video feed 686. Both devices continue to display media PiP 680 as Football Show continues to play and real-time communication is enabled, allowing the participants of the shared-content session to interact with one another as they watch Football Show.

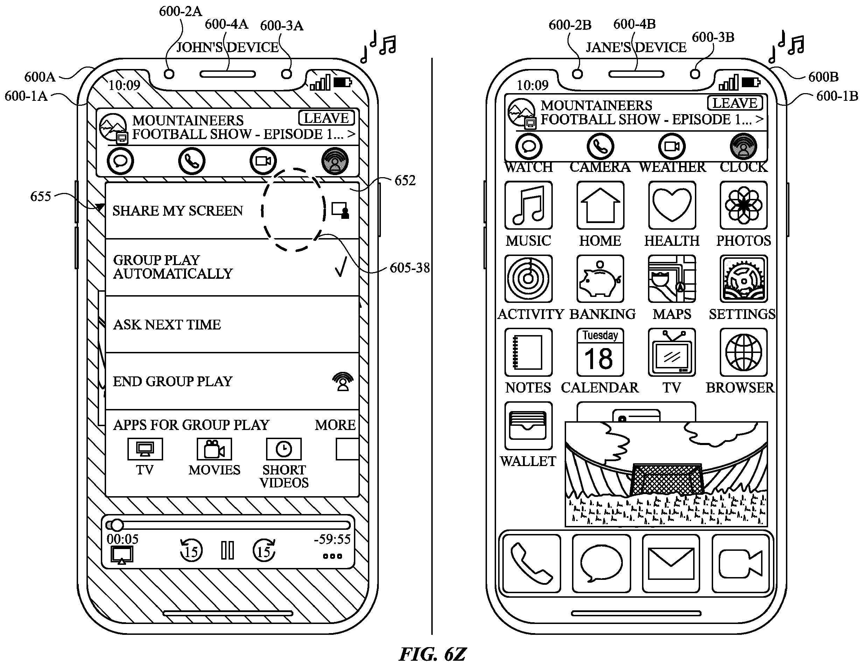

FIGS. 6Z-6AC depict interfaces for various embodiments in which John shares his screen with participants of the shared-content session. In response to detecting input 605-28 selecting share option 615-6A in FIG. 6R, John's device 600A displays share menu 655 as shown in FIG. 6Z. John's device 600A detects input 605-38 selecting screen share option 652 and, in response, enables real-time communication for the shared-content session and initiates an audio call with the participants of the Mountaineers group. Accordingly, John's device 600A changes the appearance of control region 615A to have the dark appearance, ceases to display audio call option 615-8A and video call option 615-9A, and displays speaker option 615-3A, mic option 615-4A, and camera option 615-5A. Because the audio call includes an active audio channel without an active video channel, speaker option 615-3A and mic option 615-4A are enabled (e.g., as indicated by shading) and camera option 615-5A is disabled (as indicated by a lack of shading). John's device 600A also temporarily displays countdown 687 in place of share option 615-6A, which provides a countdown of an amount of time remaining until John's device 600A begins to share the contents of display 600-1A (also referred to herein as screen-share content) in the shared-content session.

The screen-share content replaces the playback of other content that is currently being shared in the shared-content session. Thus, if a participant of the shared-content session accepts an invitation to view John's screen-share content, the screen-share content will replace playback of Football Show at the participant's device. If a participant declines the invitation to view John's screen-share content, the participant's device remains in the shared-content session, but does not continue to output the content shared in the shared-content session, which is the screen-share content.

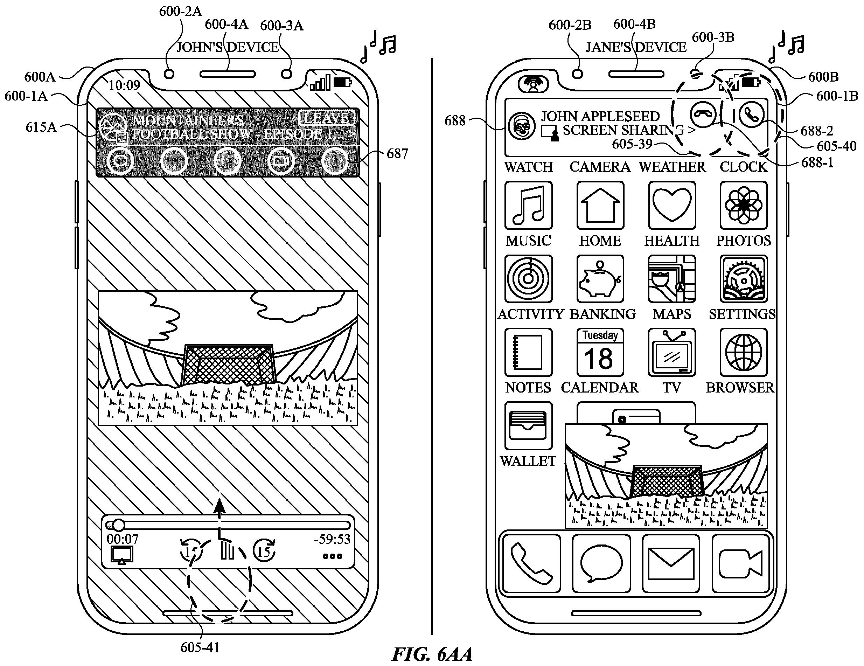

Jane's device 600B receives an incoming audio call that was initiated by John's selection of screen share option 652. The audio call is provided in conjunction with the sharing of John's screen and serves as an invitation to view John's screen-share content. As shown in FIG. 6AA, Jane's device 600B displays incoming call notification 688 (which is similar to notification 683) indicating that John is inviting the Mountaineers group to view his shared screen. Incoming call notification 688 includes a decline option 688-1 and an accept option 688-2. The invitation to view John's screen can be accepted by selecting accept option 688-2 (e.g., via input 605-40 or other selection input), and can be declined by selecting decline option 688-1 (e.g., via input 605-39 or other selection input) or, in some embodiments, by failing to select accept option 688-2 within a predetermined amount of time. If Jane declines the invitation, Jane's device 600B remains in the shared-content session with real-time communication disabled and ceases to display media PiP 680B. If Jane accepts the invitation, Jane's device 600B remains in the shared-content session, enables real-time communication through an active audio channel, and displays a PiP with the screen-share content from John's device 600A.

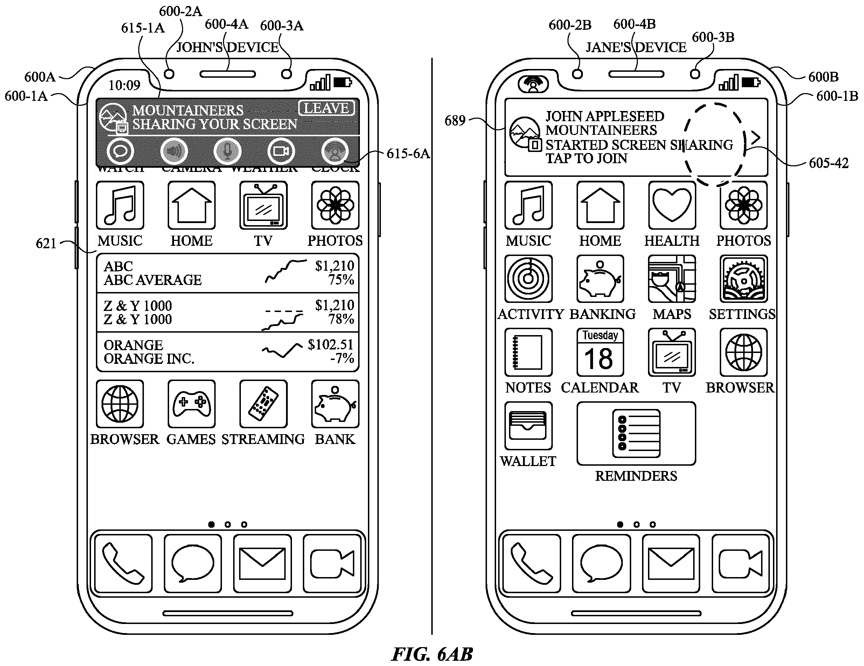

In FIG. 6AB, John's device 600A displays home screen 621 in response to detecting input 605-41 (which is a gesture that causes device 600A to display home screen 621). After countdown 687 expired, John's device 600A started sharing the contents of display 600-1A, which is home screen 621. In some embodiments, control region 615A is not included as part of the screen-share content. John's device 600A updates status region 615-1A to indicate that John is sharing the contents of his screen with the Mountaineers group.

In FIG. 6AB, Jane's device 600B has declined the invitation to view John's screen-share content in response to detecting input 605-39 on decline option 688-1 in FIG. 6AA. Jane's device 600B displays notification 689, which informs Jane that John is sharing his screen for the participants of the shared-content session, and prompts Jane to join in the sharing of the screen-share content. Because Jane declined the invitation to view John's screen-share content, Jane's device 600B does not enable real-time communication and remains in the shared-content session without displaying John's screen-share content or media PiP 680B, which was previously used to display Football Show. Furthermore, because Jane's device 600B remains in the shared-content session, Jane can replace the shared content (e.g., currently John's screen-share content) with other content. For example, Jane could resume playback of Football Show (or select other content for playback), which would replace John's screen-share content with Football Show, causing the participants of the shared-content session to switch from viewing John's screen-share content to viewing Football Show.

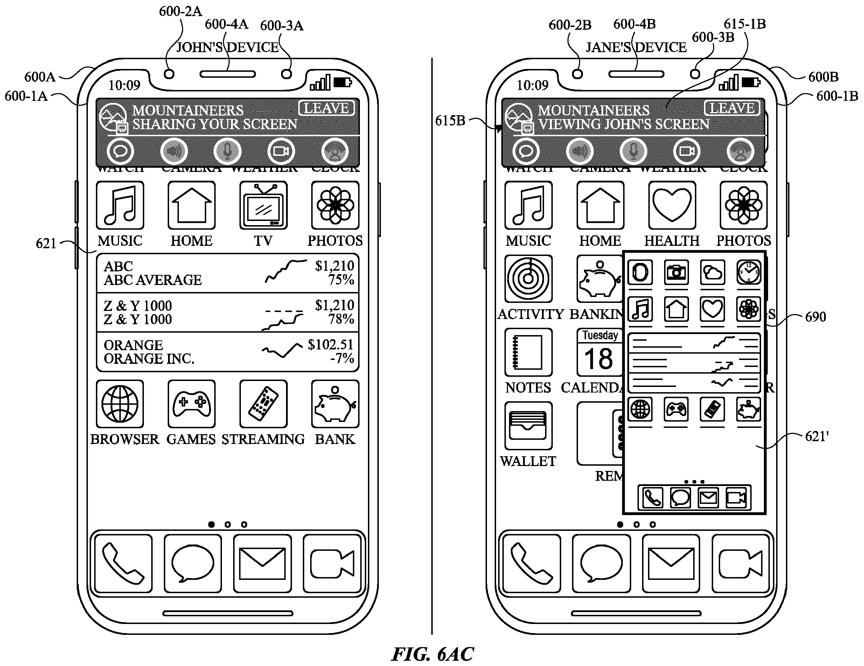

In FIG. 6AC, Jane's device 600B has joined in viewing John's screen-share content in response to input 605-40 selecting accept option 688-2 or in response to input 605-42 selecting notification 689. In some embodiments, Jane's device 600B can select audio call option 615-8B (or video call option 615-9B) to enable real-time communication and view John's screen-share content. In the embodiment depicted in FIG. 6AC, Jane's device 600B enables real-time communication through an active audio channel and displays screen-share PiP 690 with the screen-share content shared from John's device 600A, which includes representation 621' of John's home screen 621. Jane's device 600B updates control region 615B based on enabling the real-time communication session, including updating status region 615-1B to indicate that she is viewing John's screen in the shared-content session.

In the embodiments described above, the screen-share content is provided in conjunction with an audio call. It should be appreciated, however, that in some embodiments the screen-share content can be provided with a video call. In such embodiments, the real-time communication session can include a video feed that is shared with participants of the shared-content session while John's device shares the contents of display 600-1A.

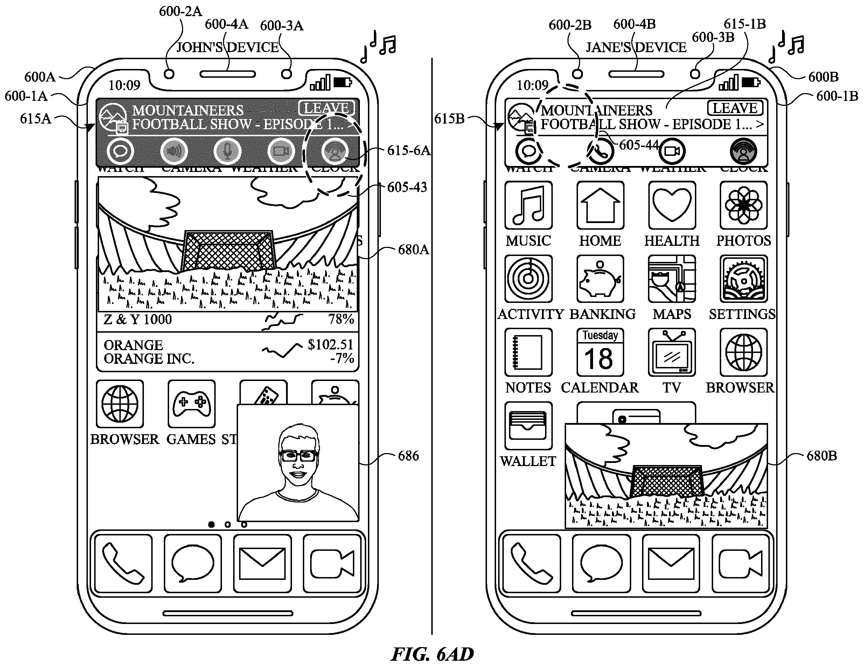

FIGS. 6AD-6AH depict interfaces for various embodiments in which John ends content for the shared-content session and Jane displays information for the shared-content session. In FIG. 6AD, the Mountaineers are watching Football Show in a shared-content session. John's device 600A is watching the show in the shared-content session with real-time communication enabled, and Jane's device 600B is watching the show in the shared-content session with real-time communication disabled. John's device detects input 605-43 selecting share option 615-6A, and Jane's device detects input 605-44 selecting status region 615-1B of control region 615B.

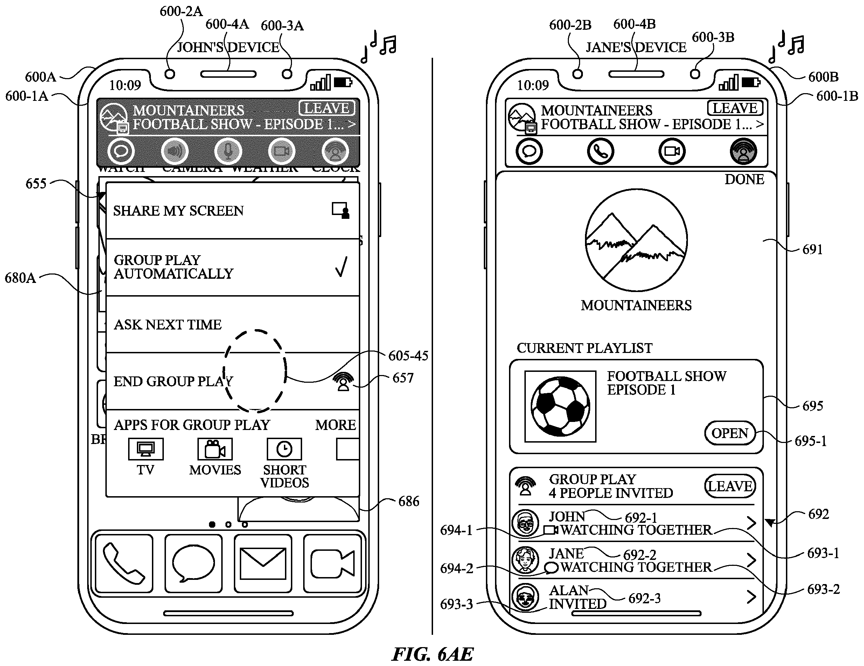

In FIG. 6AE, John's device 600A displays share menu 655 and detects input 605-45 selecting end option 657, which can be selected to end playback of content that is being shared in the shared-content session. In response to detecting input 605-44, Jane's device 600B displays group card interface 691, which provides information about the shared-content session. As shown in FIG. 6AE, group card interface 691 includes a list 692 of invited participants and status information for the respective participants. The status information includes an indication the participant's status with respect to the shared-content session, and an indication of whether or not the user has enabled real-time communication for the shared-content session. For example, list 692 includes John 692-1 with status information 693-1 showing that John is watching content in the shared-content session, and indicator 694-1 indicating that John has enabled real-time communication. In some embodiments, indicator 694-1 indicates that John joined the shared-content session via synchronous communication (e.g., a video call). List 692 also includes Jane 692-2 with status information 693-2 showing that Jane is watching content in the shared-content session, and indicator 694-2 indicating that Jane has not enabled real-time communication. In some embodiments, indicator 694-2 indicates that Jane joined the shared-content session via asynchronous communication (e.g., a message invitation). List 692 includes Alan 692-3 with status information 693-3 showing that Alan has been invited to join the shared-content session and that he has not yet accepted the invitation. Group card interface 691 also includes content information 695 which, for example, indicates content that is currently being shared, has previously been shared, or is suggested for sharing in a shared-content session with the Mountaineers group. In some embodiments, content information 695 includes options, such as option 695-1, that can be selected to start playback of content in the shared-content session. In some embodiments, group card interface 691 has different appearances depending on whether the device displaying group card interface 691 has enabled real-time communication. For example, in FIG. 6AE, group card interface 691 is shown having a light appearance because Jane's device 600B has not enabled real-time communication; however, if Jane's device 600B did have real-time communication enabled, group card interface 691 would be displayed having a dark appearance. In some embodiments, group card interface 691 includes options that are selectable to enable or disable real-time communication for the shared-content session (e.g., similar to audio call option 615-8 and/or video call option 615-9).

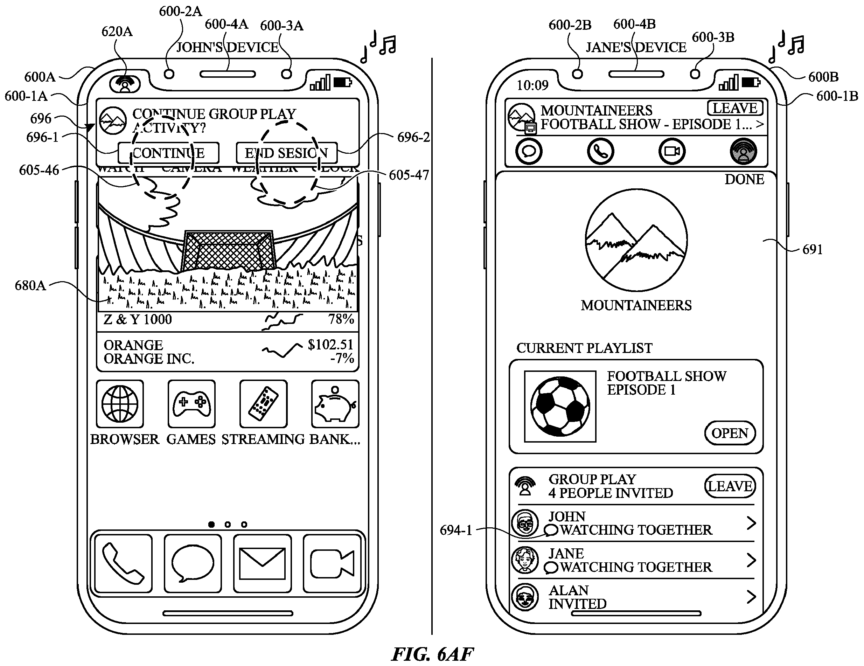

In response to detecting input 605-45 selecting end option 657, John's device 600A terminates the real-time communication session at John's device 600A while remaining in the shared-content session and continuing to play the shared content (e.g., Football Show). John's device 600A also displays continue notification 696 and, optionally, ceases to display control region 615A, as shown in FIG. 6AF. Continue notification 696 asks John if he wants to continue to play the shared content. Continue notification 696 includes continue option 696-1 and end session option 696-2. Continue option 696-1 is selectable to remain in the shared-content session and to continue with the shared activity (without real-time communication enabled). End session option 696-2 is selectable to end playback of the shared content. In some embodiments, the option to remain in the shared-content session with real-time communication disabled (e.g., via end option 657 and/or continue notification 696) is only available if John started the shared-content session from an asynchronous communication. When John's device 600A terminated its real-time communication session, Jane's device 600B updated the status of John in group card interface 691 to indicate that John does not have real-time communication enabled, as shown by indicator 694-1. In some embodiments, John can re-enable real-time communication for the shared-content session by selecting link 645A in message 642-4A or by selecting audio call option 615-8A or video call option 615-9A.

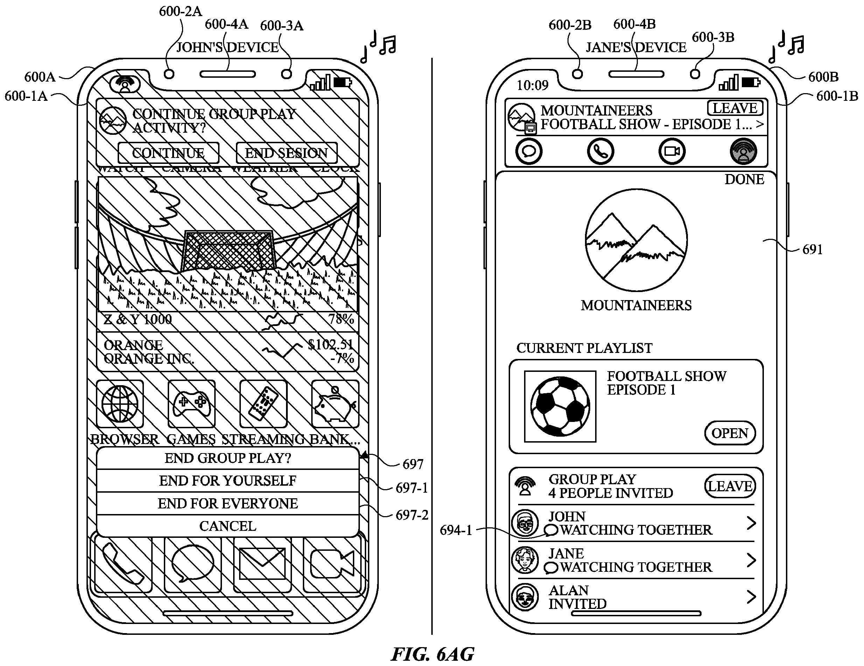

In FIG. 6AG, John's device 600A displays confirmation interface 697 in response to detecting input 605-47 selecting end session option 696-2 in FIG. 6AF. Confirmation interface 697 includes option 697-1 and option 697-2. Option 697-1 is selectable to end playback of the shared content (e.g., Football Show) for John's device 600A without ending playback of the content for other participants of the shared-content session. Option 697-2 is selectable to end playback of the shared content for John's device 600A and for the other participants of the shared-content session.

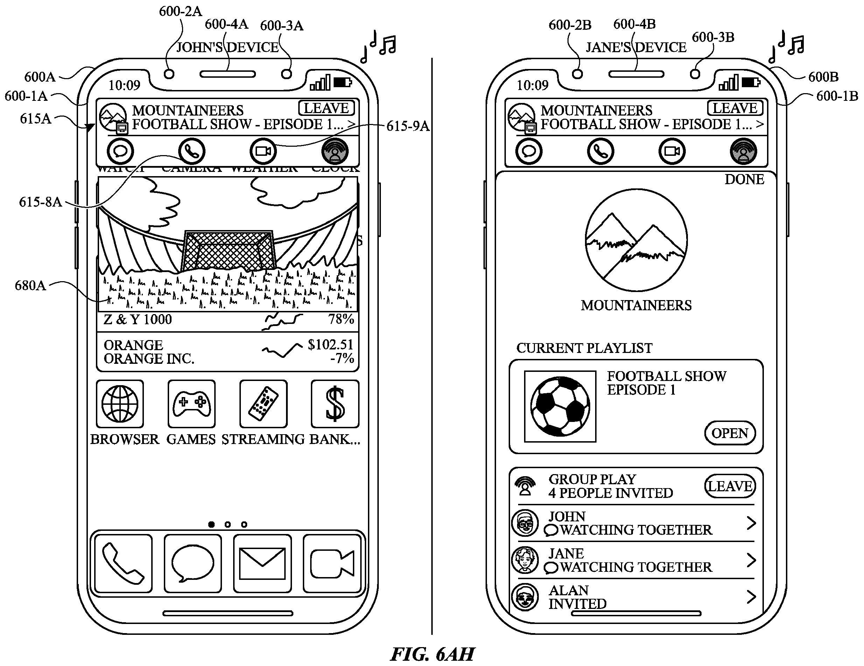

In FIG. 6AH, John's device 600A continues to play Football Show in media PiP 680A with real-time communication disabled in response to detecting input 605-46 selecting continue option 696-1 in FIG. 6AF. Because real-time communication is disabled, John's device 600A displays control region 615A having the light appearance and including audio call option 615-8A and video call option 615-9A.

FIG. 7 is a flow diagram illustrating a method for initiating a shared-content session using asynchronous communication using a computer system, in accordance with some embodiments. Method 700 is performed at a computer system (e.g., 100, 300, 500, and/or 600) (e.g., a smartphone, a tablet, a desktop, laptop computer, and/or a head-mounted device (e.g., a head-mounted augmented reality and/or extended reality device)) that is in communication with (e.g., includes and/or is connected to) one or more display generation components (e.g., 600-1) (e.g., a display controller, a touch-sensitive display system, a speaker, a bone conduction audio output device, a tactile output generator, a projector, a holographic display, and/or a head-mounted display system) and one or more input devices (e.g., 600-1, 600-2, and/or 600-3) (e.g., a touch-sensitive surface, a keyboard, mouse, trackpad, microphone, one or more optical sensors for detecting gestures, one or more capacitive sensors for detecting hover inputs, and/or accelerometer/gyroscope/inertial measurement units). Some operations in method 700 are, optionally, combined, the orders of some operations are, optionally, changed, and some operations are, optionally, omitted.

As described below, method 700 provides an intuitive way for initiating a shared-content session using asynchronous communication. The method reduces the cognitive burden on a user for managing shared-content sessions, thereby creating a more efficient human-machine interface. For battery-operated computing devices, enabling a user to initiate a shared-content session using asynchronous communication faster and more efficiently conserves power and increases the time between battery charges.

At method 700, while displaying, via the one or more display generation components (e.g., 600-1) (e.g., a display controller, a touch-sensitive display system, a speaker, a bone conduction audio output device, a tactile output generator, a projector, a holographic display, and/or a head-mounted display system), a user interface (e.g., 606, 608, and/or 640) (e.g., an invitation user interface that includes one or more options for selecting participants to join a shared-content session and/or for sending an invitation for joining the shared-content session via a synchronous or asynchronous communication, and/or a menu with one or more options for initiating a shared-content session and/or for sharing respective content in a shared-content session) for initiating a shared-content session with an external computer system (e.g., 600B) (e.g., one or more external computer systems (e.g., a computer system that is associated with (e.g., being operated by and/or logged into a user account associated with) a remote user)), the computer system (e.g., 600A) (e.g., a smartphone, a tablet, a desktop, laptop computer, and/or a head-mounted device (e.g., a head-mounted augmented reality and/or extended reality device)) receives (702), via the one or more input devices (e.g., 600-1, 600-2, and/or 600-3) (e.g., a touch-sensitive surface, a keyboard, mouse, trackpad, microphone, one or more optical sensors for detecting gestures, one or more capacitive sensors for detecting hover inputs, and/or accelerometer/gyroscope/inertial measurement units), a first set of one or more inputs (e.g., 605-1, 605-2, 605-3, 605-4, and/or 605-10) corresponding to a request to initiate a shared-content session with one or more external computer systems (e.g., 600B).

In response to receiving the first set of one or more inputs corresponding to a request to initiate a shared-content session with one or more external computer systems, the computer system (e.g., 600A) initiates (704) a shared-content session with one or more external computer systems (e.g., 600B) (e.g., creating a shared-content session, activating a shared-content session, and/or generating a link for a shared-content session), wherein the shared-content session, when active, enables the computer system to output respective content (e.g., synchronized content (e.g., audio and/or video data for which output is synchronized at the computer system and the external computer system) and/or screen-share content (e.g., image data generated by a device (e.g., the computer system or the external computer system) that provides a real-time representation of an image or video content that is currently displayed at the device)) while the respective content is being output by one or more external computer systems. In some embodiments, during the shared-content session, the respective content is concurrently output at both the computer system (e.g., 600A) and the external computer system (e.g., 600B). In some embodiments, the respective content is screen-share content (e.g., 690) from the computer system (e.g., content displayed on the display of the computer system) that is transmitted to the external computer system so that both computer systems are concurrently outputting the screen-share content from the computer system. In some embodiments, the respective content is screen-share content from the external computer system (e.g., content displayed on the display of the external computer system) that is transmitted to the computer system so that both computer systems are concurrently outputting the screen-share content from the external computer system. In some embodiments, the respective content is synchronized content (e.g., 636 and/or 680) that is output at the computer system and the external computer system. In some embodiments, the computer system and the external computer system each separately access the respective content (e.g., a video, a movie, a TV show, or a song) from a remote server and are synchronized in their respective output of the respective content such that the content is output (e.g., via an application local to the respective computer system) at both computer systems while each computer system separately accesses the respective content from the remote server(s). In some embodiments, the computer system and external computer system separately access the respective content (e.g., synchronized content) in response to a selection that is received at the computer system or at the external computer system for requesting output of the respective content.

The computer system (e.g., 600A) initiating the shared-content session with one or more external computer systems (e.g., 600B) includes, in accordance with a determination that the shared-content session was initiated via (e.g., using and/or in conjunction with) an asynchronous communication (e.g., 642-4A and/or 642-4B) (e.g., a message sent to the external computer system using a messaging application operating at the computer system and/or an email sent to the external computer system using an email application operating at the computer system), initiating (706) the shared-content session in a first mode (e.g., as shown in FIG. 6J, 6K, and/or 6L) in which a set of real-time communication features (e.g., a live camera feed and/or a live audio feed between the computer system and the external computer system) are disabled (e.g., turned off, initially disabled, and/or temporarily disabled) for the shared-content session. Initiating the shared-content session in the first mode in which a set of real-time communication features are disabled for the shared-content session in accordance with a determination that the shared-content session was initiated via an asynchronous communication enables the computer system to initiate a shared-content session with real-time communication disabled based on a user-selected communication style or preference without requiring a user to provide additional inputs to indicate the preference and disable the real-time communication controls. In some embodiments, initiating the shared-content session includes sending an invitation (e.g., 645B) to an external computer system, via an asynchronous communication (e.g., 642-4B), to join the shared-content session.

In some embodiments, the computer system (e.g., 600A) initiating the shared-content session with one or more external computer systems (e.g., 600B) includes, in accordance with a determination that the shared-content session was initiated via (e.g., using and/or in conjunction with) a synchronous communication (e.g., as shown in FIG. 6C and/or 6D) (e.g., the shared-content session was initiated via a real-time communication such as a video call, a video chat, and/or an audio call and/or a real-time communication application such as a video call application, a video chat application, and/or an audio call application), initiating the shared-content session in a second mode in which a set of real-time communication features are enabled for the shared-content session. Initiating the shared-content session in the second mode in which a set of real-time communication features are enabled for the shared-content session in accordance with a determination that the shared-content session was initiated via a synchronous communication enables the computer system to initiate a shared-content session with real-time communication enabled based on a user-selected communication style or preference without requiring a user to provide additional inputs to indicate the preference and enable the real-time communication controls. In some embodiments, initiating the shared-content session includes sending an invitation (e.g., 616, 683, 684, and/or 688) to an external computer system, via a synchronous communication, to join the shared-content session.

In some embodiments, displaying the user interface (e.g., 608) for initiating the shared-content session with the external computer system (e.g., 600B) includes displaying (e.g., concurrently displaying) a first option (e.g., 614 and/or 646) (e.g., a messages option and/or an email option) that is selectable (e.g., via one or more inputs (e.g., 605-4 and/or 605-10)) to initiate the shared-content session via an asynchronous communication (e.g., 642-4) and a second option (e.g., 612) (e.g., a video call option and/or an audio call option) that is selectable (e.g., via one or more inputs (e.g., 605-3)) to initiate the shared-content session via a synchronous communication (e.g., a real-time communication session and/or a communication session in which a live audio feed and/or a live video feed is communicated with an external computer system). Displaying the user interface for initiating the shared-content session including the first option that is selectable to initiate the shared-content session via an asynchronous communication and the second option that is selectable to initiate the shared-content session via a real-time communication session reduces the number of inputs needed to initiate the shared-content session with real-time communication features enabled or disabled by providing controls for enabling or disabling real-time communication when initiating the shared-content session via a particular communication style.

In some embodiments (e.g., as a part of initiating the shared-content session with one or more external computer systems (e.g., 600B)), in response to receiving the first set of one or more inputs corresponding to a request to initiate a shared-content session with one or more external computer systems and in accordance with a determination that the first set of one or more inputs corresponding to a request to initiate a shared-content session with one or more external computer systems includes a selection (e.g., 605-4) of the first option (e.g., 614) (e.g., a messages option and/or an email option), the computer system (e.g., 600A) displays, via the one or more display generation components (e.g., 600-1A), a message composition user interface (e.g., 640A and/or 644A) (e.g., a messages application interface). Displaying a message composition user interface in accordance with a determination that the first set of one or more inputs corresponding to a request to initiate a shared-content session with one or more external computer systems includes a selection of the first option causes the device to automatically display a user interface for enabling the user to communicate an invitation for joining the shared-content session and for providing additional communications to the one or more external computer systems without displaying additional controls or requiring additional input to display the message composition user interface. In some embodiments, the message composition user interface is displayed as a part of initiating a shared-content session via an asynchronous communication. In some embodiments, the messages composition user interface includes a user interface (e.g., 640A) for a messages application operating at the computer system. In some embodiments, the messages application interface includes a message composition region (e.g., 644A) that includes a displayed invitation (e.g., 645A) that can be sent, via the messages application, to one or more recipients (e.g., 600B) for joining the shared-content session via an asynchronous communication (e.g., the invitation sent via the messages application). In some embodiments, initiating the shared-content session with one or more external computer systems includes, in accordance with a determination that the first set of one or more inputs corresponding to a request to initiate a shared-content session with one or more external computer systems includes a selection (e.g., 605-3) of the second option (e.g., 612), initiating the shared-content session via a real-time communication session (e.g., using synchronous communication).

In some embodiments, the computer system (e.g., 600A) initiating the shared-content session with one or more external computer systems (e.g., 600B) includes, in accordance with a determination that a number of the one or more external computer systems that has joined the shared-content session meets (e.g., is greater than, or is equal to or greater than) a threshold number (e.g., a non-zero quantity of the external computer systems such as one, two, three, five, or ten and/or a non-zero percentage of the invited external computer systems such as 5%, 10%, 25%, 50%, 75%, 90%, 95%, or 100%), initiating playback of the respective content (e.g., 636, 680, and/or 682) in the shared-content session (e.g., outputting the respective content at the computer system and the external computer systems that have joined the shared-content session). In some embodiments, the computer system initiating the shared-content session with one or more external computer systems includes, in accordance with a determination that the number of the one or more external computer systems that has joined the shared-content session does not meet (e.g., is less than, or is equal to or less than) the threshold number, forgoing initiating playback of the respective content (e.g., refraining from outputting the respective content at the computer system and the external computer systems until the threshold number of external computer systems have joined the shared-content session). Initiating playback of the respective content in the shared-content session in accordance with a determination that at least a threshold number of the one or more external computer systems has joined the shared-content session, and forgoing initiating playback of the respective content in accordance with a determination that less than the threshold number of the one or more external computer systems has joined the shared-content session, improves the user experience of the shared-content session by delaying the start of the respective content until a number of the participants have joined the shared-content session.

In some embodiments, after initiating the shared-content session (e.g., while the shared-content session is active) and displaying a graphical object (e.g., 620A) (e.g., an icon, affordance, and/or graphical element) having a first displayed state (e.g., as shown in FIG. 6D) (e.g., a first color such as grey or purple, and/or a deemphasized or obscured appearance represented by a hatching or shading of the graphical object) and in accordance with a determination that (or in response to a determination that) a threshold number (e.g., a non-zero quantity of the external computer systems such as one, two, three, five, or ten and/or a non-zero percentage of the invited external computer systems such as 5%, 10%, 25%, 50%, 75%, 90%, 95%, or 100%) of the one or more external computer systems have joined the shared-content session, the computer system displays the graphical object (e.g., 620A) having a second displayed state that is different from the first displayed state (e.g., as shown in FIG. 6F) (e.g., a second color such as green or blue, and/or an emphasized or unobscured appearance represented by a lack of hatching or shading of the graphical object). Displaying the graphical object having the second displayed state that is different from the first displayed state in accordance with a determination that a threshold number of the one or more external computer systems have joined the shared-content session provides feedback about a state of the computer system (e.g., a state in which a number of participants are detected to have joined the shared-content session). In some embodiments, the computer system changes the graphical object from the first displayed state to the second displayed state when a first user joins the shared-content session.

In some embodiments, after initiating the shared-content session (and before any external computer systems have joined the shared-content session), the computer system (e.g., 600A) detects a first external computer system (e.g., 600B) joining the shared-content session (before any other external computer systems have joined the shared-content session). In some embodiments, in response to detecting the first external computer system joining the shared-content session, the computer system displays, via the one or more display generation components (e.g., 600-1A), a notification (e.g., 634, 634-1, 650, and/or 650-1) (e.g., a banner, text, and/or graphical alert) that is selectable (e.g., via one or more inputs (e.g., 605-9 or 605-14)) to enable playback of content (e.g., the respective content) for the shared-content session. Displaying a notification that is selectable to enable playback of content for the shared-content session in response to detecting the first external computer system joining the shared-content session reduces the number of inputs needed to start playback of the content for participants of the shared-content session by automatically displaying controls for starting playback of the content when a participant has joined the shared-content session. In some embodiments, the computer system starts playback of the content for the shared-content session in response to (e.g., immediately in response to) detecting a selection of the notification. In some embodiments, the computer system displays an option (e.g., 634-1 or 650-1) that is selectable to start playback of the content in response to detecting a selection of the notification (e.g., 634 or 650).

In some embodiments, the request to initiate the shared-content session with the one or more external computer systems (e.g., 600B) is associated with first content (e.g., "Track 3") (e.g., the respective content and/or content selected for the shared-content session), and the notification (e.g., 634 or 650) includes a first option (e.g., 634-1 or 650-1) (e.g., a "start" affordance or an "open" affordance) that is selectable (e.g., via one or more inputs) to initiate playback of the first content for the shared-content session. Displaying a first option that is selectable to initiate playback of the first content for the shared-content session reduces the number of inputs needed to start playback of the first content for participants of the shared-content session by automatically displaying controls for starting playback of the first content when a participant has joined the shared-content session.

In some embodiments, the request to initiate the shared-content session with the one or more external computer systems is associated with first content (e.g., "Track 3") (e.g., the respective content and/or content selected for the shared-content session). In some embodiments, while displaying the notification (e.g., 634 or 650) that is selectable (e.g., via one or more inputs) to enable playback of content for the shared-content session, the computer system (e.g., 600A) receives an input (e.g., 605-9 or 605-14) directed to the notification. In some embodiments, in response to receiving the input directed to the notification, the computer system displays, via the one or more display generation components, a second option (e.g., 634-1 or 650-1) (e.g., a "start" affordance and/or an "open" affordance) that is selectable (e.g., via one or more inputs) to initiate playback of the first content for the shared-content session (e.g., the respective content and/or content that was initially selected and/or shared with the external computer systems for the shared-content session). Displaying a second option that is selectable to initiate playback of the first content for the shared-content session in response to receiving the input directed to the notification causes the computer system to automatically provide controls for starting playback of the first content for participants of the shared-content session when a participant has joined the shared-content session.

In some embodiments, after initiating the shared-content session, the computer system (e.g., 600A) displays, via the one or more display generation components (e.g., 600-1A), a first control user interface (e.g., 615A) (e.g., a graphical object and/or menu). In some embodiments, displaying, via the one or more display generation components, a first control user interface includes, in accordance with a determination that the shared-content session is provided via an asynchronous communication session (e.g., 642-4) (e.g., the shared-content session is in the first mode, the shared-content session is in a first state, and/or the communication session associated with the shared-content session is currently an asynchronous communication session or a communication session in which real-time communication features, such as a live video feed and/or a live audio feed, are disabled), displaying the first control user interface having a first set of one or more control options (e.g., 615-8A and/or 615-9A) (e.g., a selectable graphical element, icon, text, and/or affordance) (e.g., a messages option, an audio call option, a video call option, and/or a sharing option). In some embodiments, displaying, via the one or more display generation components, a first control user interface includes, in accordance with a determination that the shared-content session is provided via a real-time communication session (e.g., the shared-content session is in a mode different from the first mode, the shared-content session is in a second state, and/or the communication session associated with the shared-content session is currently a synchronous communication session or a communication session in which real-time communication features, such as a live video feed and/or a live audio feed, are enabled), displaying the first control user interface having a second set of one or more control options (e.g., 615-3, 615-4, and/or 615-5) that is different from the first set of one or more control options (e.g., a messages option, an audio routing option, a mic on/off option, a speaker on/off option, a camera on/off option, and/or a sharing option). Displaying the first control user interface having a first set of one or more control options in accordance with a determination that the shared-content session is provided via an asynchronous communication session, and displaying the first control user interface having a second set of one or more control options in accordance with a determination that the shared-content session is provided via a real-time communication session enables the computer system to automatically provide controls for a shared-content session based on a communication type for the shared-content session. In some embodiments, the control user interface includes information (e.g., 615-1) associated with the shared-content session, information (e.g., 615-1) associated with a communication session, one or more selectable communication session function options (e.g., 615-2, 615-3, 615-4, 615-5, 615-6, 615-7, 615-8, and/or 615-9) that, when selected, cause the computer system to perform a respective function associated with a communication session, and/or one or more selectable shared-content session function options (e.g., 615-2, 615-3, 615-4, 615-5, 615-6, 615-7, 615-8, and/or 615-9) that, when selected, cause the computer system to perform a respective function associated with the shared-content session.

In some embodiments, after initiating the shared-content session, the computer system (e.g., 600A) displays, via the one or more display generation components (e.g., 600-1A), a second control user interface (e.g., 615A) (e.g., a graphical object and/or menu) (in some embodiments, the second control user interface is the first control user interface) having a first appearance while the shared-content session is in the first mode (e.g., 615A as shown in FIG. 6R) (e.g., a mode in which the shared-content session is provided via an asynchronous communication session and/or a mode in which real-time communication features are disabled for the shared-content session). In some embodiments, the computer system detects the shared-content session changing from the first mode to a third mode that is different from the first mode (e.g., as shown in FIG. 6U, 6X, and/or 6AA) (e.g., a mode in which the shared-content session is provided via a synchronous communication session and/or a mode in which real-time communication features are enabled for the shared-content session). In some embodiments, in response to detecting the shared-content session changing from the first mode to the third mode, the computer system displays the second control user interface having a second appearance that is different from the first appearance (e.g., 615A in FIG. 6U, 6X, and/or 6AA) (e.g., indicating the shared-content session changed from the first mode to the third mode) (e.g., changing the appearance of the second control user interface from the first appearance to the second appearance). Displaying the second control user interface having a second appearance that is different from the first appearance in response to detecting the shared-content session changing from the first mode to the third mode enables the computer system to automatically update the second control user interface based on the mode of the shared-content session and provides feedback about a state of the computer system (e.g., a state in which real-time communication features are enabled for the shared-content session).

In some embodiments, the computer system (e.g., 600A) displaying the second control user interface having the first appearance (e.g., 615A in FIG. 6R) includes displaying (e.g., in the second control user interface) a first set of one or more selectable control options (e.g., 615-8A and/or 615-9A) (e.g., a selectable graphical element, icon, text, and/or affordance), and the computer system displaying the second control user interface having the second appearance (e.g., 615A in FIG. 6U, 6X, and/or 6AA) includes displaying (e.g., in the second control user interface) a second set of one or more selectable control options that is different from the first set of one or more selectable control options (e.g., 615-3, 615-4, and/or 615-5). Displaying the first set of one or more selectable control options when the second control user interface has the first appearance, and displaying the second set of one or more selectable control options when the second control user interface has the second appearance enables the computer system to automatically update the control options provided in the second control user interface based on the mode of the shared-content session. In some embodiments, when the second control user interface has the first appearance, the control user interface includes an audio call option (e.g., 615-8) and a video call option (e.g., 615-9), and does not include a mic on/off option (e.g., 615-4), a speaker on/off option (e.g., 615-3), or a camera on/off option (e.g., 615-5). In some embodiments, when the second control user interface has the second appearance, the control user interface includes a mic on/off option (e.g., 615-4), a speaker on/off option (e.g., 615-3), and a camera on/off option (e.g., 615-5), and does not include an audio call option (e.g., 615-8) or a video call option (e.g., 615-9).

In some embodiments, the computer system (e.g., 600A) displaying the second control user interface having the first appearance (e.g., 615A in FIG. 6R) includes displaying (e.g., in the second control user interface) a background of the second control user interface having a first state (e.g., a first background color (e.g., a light color such as white or yellow) and/or first shaded state (e.g., an unshaded or lightly shaded state)), and the computer system displaying the second control user interface having the second appearance (e.g., 615A in FIG. 6U, 6X, and/or 6AA) includes displaying the background of the second control user interface having a second state different from the first state (e.g., a second background color (e.g., a dark color such as grey or black) and/or a second shaded state (e.g., a shaded or heavily shaded state)). Displaying the background of the second control user interface having a first state when the second control user interface has the first appearance, and displaying the background of the second control user interface having the second state when the second control user interface has the second appearance, provides feedback about a state of the computer system (e.g., a state of the shared-content session at the computer system). In some embodiments, the control user interface is displayed with different background colors depending on the mode of the shared-content session. For example, when the shared-content session is provided via an asynchronous communication session, the control user interface background has a light color, and when the shared-content session is provided via a synchronous (e.g., real-time) communication session, the control user interface background has a dark color. In some embodiments, the computer system displays the background of the second control user interface changing from the first background to the second background in response to detecting the shared-content session changing from the first mode to the third mode, and vice-versa.

In some embodiments, the third mode is a mode in which one or more real-time communication features (e.g., a live camera feed and/or a live audio feed between the computer system and the external computer system) are enabled for the shared-content session, and the appearance of the second control user interface changes based on a change in state of the computer system (e.g., 600A) when the shared-content session changes from the first mode (e.g., in FIG. 6R) to the third mode (e.g., in FIG. 6U, 6X, and/or 6AA) (e.g., and vice-versa) (e.g., and is not based on a state of the shared-content session for external computer systems participating in the shared-content session). Changing the appearance of the second control user interface based on a change in state of the computer system when the shared-content session changes from the first mode to the third mode provides feedback about a state of the computer system (e.g., a state of the shared-content session at the computer system).

In some embodiments, the request to initiate the shared-content session includes sending (e.g., sharing and/or transmitting) a link (e.g., 645) (e.g., displayed in a message in the messages UI (e.g., 640)) to the one or more external computer systems (e.g., 600B) for joining the shared-content session. Sending a link to the one or more external computer systems for joining the shared-content session reduces the number of inputs needed to join the shared-content session by providing a convenient and easily accessible link for joining the shared-content session at the one or more external computer systems.

In some embodiments, the link (e.g., displayed in the message (e.g., 642-4)) includes a join option (e.g., 645) (e.g., a "join" or "open" option). In some embodiments, the computer system detects, via the one or more input devices, one or more inputs (e.g., 605-13) corresponding to a selection of the join option (e.g., 645A or 645B). In some embodiments, in response to detecting the one or more inputs corresponding to a selection of the join option, the computer system (e.g., 600A and/or 600B) initiates a process for joining the shared-content session (e.g., joining an ongoing shared-content session, rejoining an ongoing shared-content session, and/or initiating a new shared-content session). Initiating a process for joining the shared-content session in response to detecting the one or more inputs corresponding to a selection of the join option enables the computer system to join a shared-content session without displaying additional controls, which provides additional control options without cluttering the user interface. In some embodiments, the link (e.g., 645A) is displayed at the computer system (e.g., 600A). In some embodiments, the link (e.g., 645B) is displayed at the one or more external computer systems (e.g., 600B). In some embodiments, content (e.g., 645 and/or 647) in the message (e.g., 642-4) (e.g., at the computer system and/or the one or more external computer systems) changes over time to indicate the state of the shared-content session. For example, the message can include an indication (e.g., 647) of the respective content being output during the shared-content session, and the indication changes over time when the respective content changes. As another example, the selectable option (e.g., 645) displayed in the message can change from "join" to "leave" when the computer system is participating in the shared-content session. As another example, the message can include a status of the shared-content session such as, for example, an indication of the activity being performed (e.g., watching a movie or listening to a song), which can update as the activity changes.

In some embodiments, after initiating the shared-content session with one or more external computer systems (e.g., 600), the computer system (e.g., 600) displays, via the one or more display generation components (e.g., 600-1), a status user interface (e.g., 691) (e.g., a user interface with status information about the shared-content session (e.g., a group card), such as, e.g., users, user status, and/or content associated with the shared-content session) including a call option (e.g., 615-8 and/or 615-9) (e.g., a video call option and/or an audio call option). In some embodiments, while displaying the status user interface including the call option, the computer system detects, via the one or more input devices (e.g., 600-1), one or more inputs corresponding to a selection of the call option. In some embodiments, in response to detecting the one or more inputs corresponding to a selection of the call option, the computer system initiates a process for enabling real-time communication for the shared-content session (e.g., initiating an audio call to establish an audio feed for the shared-content session and/or initiating a video call to establish a video feed and, optionally, an audio feed for the shared-content session). Initiating a process for enabling real-time communication for the shared-content session in response to detecting the one or more inputs corresponding to a selection of the call option enables the computer system to enable real-time communication for a shared-content session without displaying additional controls, which provides additional control options without cluttering the user interface.

In some embodiments, after initiating the shared-content session with one or more external computer systems, the computer system (e.g., 600) displays, via the one or more display generation components (e.g., 600-1), a user status interface (e.g., 691) (e.g., a user interface with status information about the shared-content session (e.g., a group card), such as, e.g., users, user status, and/or content associated with the shared-content session) that includes an indication (e.g., 694-1 in FIG. 6AE) (e.g., text, a graphical indicator, an icon, and/or an affordance) of participants (e.g., one or more users and/or user accounts associated with the external computer systems) of the shared-content session that are participating in the shared-content session with real-time communication enabled (e.g., one or more real-time communication features such as a live audio feed and/or a live video feed are enabled) and an indication (e.g., 694-2 in FIG. 6AE) (e.g., text, a graphical indicator, an icon, and/or an affordance) of participants of the shared-content session that are participating in the shared-content session with real-time communication disabled (e.g., without real-time communication and/or no real-time communication features are enabled). Displaying a user status interface that includes an indication of participants of the shared-content session that are participating in the shared-content session with real-time communication enabled and an indication of participants of the shared-content session that are participating with real-time communication disabled provides feedback about a state of participants of the shared-content session.

In some embodiments, while the shared-content session is in the first mode at the computer system (e.g., 600) (e.g., real-time communication features are disabled for the computer system for the shared-content session), and in response to a second external computer system (e.g., 600) enabling real-time communication for the shared-content session at the second external computer system, the computer system displays an incoming communication user interface (e.g., 616, 683, 684, and/or 688) (e.g., a banner or alert indicating an incoming invitation (e.g., audio call and/or video call) to enable real-time communication at the computer system for the shared-content session) that includes an accept option (e.g., 616-2, 683-2, 684-2, and/or 688-2) (e.g., a "join" option and/or an "accept" option). In some embodiments, while displaying the incoming communication user interface that includes the accept option, the computer system detects, via the one or more input devices (e.g., 600-1), one or more inputs corresponding to a selection of the accept option (e.g., 605-6, 605-34, 605-36, and/or 605-40). In some embodiments, in response to detecting the one or more inputs corresponding to a selection of the accept option, the computer system initiates a process for enabling real-time communication at the computer system for the shared-content session (e.g., establishing a real-time communication session with the second external computer system and, in some embodiments, other participants of the shared-content session). Initiating a process for enabling real-time communication at the computer system for the shared-content session in response to detecting the one or more inputs corresponding to a selection of the accept option enables the computer system to enable real-time communication at the computer system for a shared-content session without displaying additional controls, which provides additional control options without cluttering the user interface.

In some embodiments, while the shared-content session is in a fourth mode in which the set of real-time communication features are enabled for the shared-content session (e.g., 600A in FIG. 6AE), the computer system (e.g., 600A) receives, via the one or more input devices (e.g., 600-1A), a request to transition the shared-content session from the fourth mode (e.g., 605-43, 605-45, 605-47, a selection of option 697-1, and/or a selection of option 697-2) (e.g., a set of one or more inputs corresponding to a request to end real-time communication for the shared-content session, a set of one or more inputs corresponding to a request to end the shared-content session, and/or a set of one or more inputs corresponding to a request to transition the shared-content session from the fourth mode to the first mode). In some embodiments, while the shared-content session is in a fourth mode in which the set of real-time communication features are enabled for the shared-content session and in response to receiving the request to transition the shared-content session from the fourth mode, the computer system displays, via the one or more display generation components (e.g., 600-1), a session option user interface (e.g., 696 and/or 697). In some embodiments, the session option user interface includes a termination option (e.g., 696-2, 697-1, and/or 697-2) (e.g., a "leave" option, a "end session" option, an icon, an affordance, and/or a graphical element) that is selectable (e.g., via one or more inputs) to terminate the shared-content session at the computer system. In some embodiments, the session option user interface includes a continuation option (e.g., 696-1) (e.g., a "continue" option, a "cancel" option (e.g., in confirmation interface 697), an icon, an affordance, and/or a graphical element) that is selectable (e.g., via one or more inputs) to continue the shared-content session at the computer system (e.g., with the real-time communication features disabled or with the real-time communication features enabled). Displaying, in response to receiving the request to transition the shared-content session from the fourth mode, a session option user interface including a termination option that is selectable to terminate the shared-content session at the computer system and a continuation option that is selectable to continue the shared-content session at the computer system causes the computer system to automatically display options for continuing or terminating the shared-content session when a request is received to transition the shared-content session from the fourth mode. In some embodiments, the computer system detects, via the one or more input devices, a selection (e.g., 605-47) of the termination option (e.g., 696-2). In some embodiments, when the termination option (e.g., 696-2 and/or 697-1) is selected, the shared-content session is terminated at the computer system (e.g., 600A) while the shared-content session continues for other participants (e.g., 600B) of the shared-content session. In some embodiments, when the termination option (e.g., 696-2 and/or 697-2) is selected, the shared-content session is terminated for all participants of the shared-content session. In some embodiments, when the termination option (e.g., 696-2) is selected, the computer system displays an option (e.g., 697, 697-1, and/or 697-2) to terminate the shared-content session for all participants of the shared-content session or for only the computer system.

In some embodiments, in response to receiving the request (e.g., 605-46) to transition the shared-content session from the fourth mode, the computer system (e.g., 600A) ceases to display a third control user interface (e.g., 615A is no longer displayed in FIG. 6AF) (e.g., a graphical object and/or menu) for the shared-content session (e.g., replacing the third control user interface with the session option user interface). In some embodiments, the computer system displays the session option user interface (e.g., 696) at a location that at least partially overlaps a location at which the third control user interface (e.g., 615A) was previously displayed (e.g., in FIG. 6AE). In some embodiments, the third control user interface includes information associated with the shared-content session, information associated with a communication session, one or more selectable communication session function options that, when selected, cause the computer system to perform a respective function associated with a communication session, and/or one or more selectable shared-content session function options that, when selected, cause the computer system to perform a respective function associated with the shared-content session.

In some embodiments, the computer system (e.g., 600A) receives, via the one or more input devices (e.g., 600-1), a selection (e.g., 605-46) of the continuation option (e.g., 696-1) (e.g., a set of one or more inputs directed to the continuation option). In some embodiments, in response to receiving the selection of the continuation option, the computer system transitions the shared-content session from the fourth mode to the first mode (e.g., as shown in FIG. 6AH) (e.g., continuing the shared-content session with the set of real-time communication features disabled). Transitioning the shared-content session from the fourth mode to the first mode in response to receiving the selection of the continuation option causes the computer system to automatically continue the shared-content session in the first mode.

In some embodiments, the computer system (e.g., 600A) displaying the session option user interface (e.g., 696) includes, in accordance with a determination that the shared-content session was initiated via an asynchronous communication, displaying the continuation option (e.g., 696 and/or 696-1) that is selectable to continue the shared-content session at the computer system. In some embodiments, the computer system displaying the session option user interface includes, in accordance with a determination that the shared-content session was not initiated via an asynchronous communication, forgoing displaying the continuation option that is selectable to continue the shared-content session at the computer system. Displaying the continuation option in accordance with a determination that the shared-content session was initiated via an asynchronous communication, and forgoing displaying the continuation option in accordance with a determination that the shared-content session was not initiated via an asynchronous communication causes the computer system to automatically display an option to continue the shared-content session in the first mode if the shared-content session was initiated via an asynchronous communication session. In some embodiments, the option to continue the shared-content session with real-time communication features disabled is only available when the shared-content session was initiated via an asynchronous communication. In some embodiments, when the shared-content session was not initiated via an asynchronous communication, the computer system continues the shared-content session in the fourth mode (e.g., with real-time communication features enabled) in response to a selection of the continuation option. In some embodiments, when the shared-content session was not initiated via an asynchronous communication, the computer system does not display the option to continue the shared-content session.

In some embodiments, after transitioning the shared-content session from the fourth mode to the first mode (e.g., as shown in FIG. 6AH) (e.g., after disabling real-time communication at the computer system for the shared-content session), the computer system (e.g., 600A) receives, via the one or more input devices (e.g., 600-1A), a set of one or more inputs (e.g., 605-25) corresponding to a request to display a messages user interface (e.g., 640A) (e.g., a user interface of a messages application at the computer system). In some embodiments, in response to receiving the set of one or more inputs corresponding to a request to display a messages user interface, the computer system displays, via the one or more display generation components, the messages user interface (e.g., 640A). In some embodiments, displaying via the one or more display generation components, the messages user interface, includes displaying, in the messages user interface (e.g., in a message in the messages user interface), a rejoin option (e.g., 645A) (e.g., a graphical element, icon, and/or affordance) that is selectable (e.g., via one or more inputs) to transition the shared-content session at the computer system from the first mode to the fourth mode (e.g., to reenable the real-time communication features for the shared-content session). Displaying a rejoin option that is selectable to transition the shared-content session from the first mode to the fourth mode enables the device to provide the user with an option to switch the mode of the shared-content session without having to display additional controls for the shared-content session.

In some embodiments, the asynchronous communication includes text-based messaging communication (e.g., 642-4) (e.g., instant messaging, text messaging, SMS, MMS, and/or email).

In some embodiments, while first content (e.g., a first movie, show, and/or music) is being output as the respective content for the shared-content session (e.g., while "Track 3" is playing in FIG. 6Q), the computer system (e.g., 600A) receives, via the one or more input devices (e.g., 600-1A), a request (e.g., 605-23) to initiate playback of second content (e.g., "Football Show") (e.g., a second movie, show, and/or music) at the computer system, wherein the second content is different from the first content. In some embodiments, in response to receiving the request to initiate playback of the second content at the computer system, the computer system outputs the second content (e.g., 680) as the respective content for the shared-content session (e.g., and ceasing outputting the first content as the respective content for the shared-content session). Outputting the second content as the respective content for the shared-content session in response to receiving the request to initiate playback of the second content at the computer system causes the computer system to automatically update the respective content for the shared-content session based on the content that is selected for playback at the computer system.

In some embodiments, while the shared-content session is active and a first user interface is displayed (e.g., 679 in FIG. 6R), the computer system (e.g., 600A) receives, via the one or more input devices (e.g., 600-1), a request (e.g., 605-25) to display a messages user interface (e.g., a selection of a messages option (e.g., 615-2A) in a control user interface (e.g., 615A)). In some embodiments, in response to receiving the request to display the messages user interface (e.g., a user interface for a messages application at the computer system), the computer system displays the messages user interface (e.g., 640A in FIG. 6S) over at least a portion of the first user interface (e.g., partially overlapping or completely overlapping the first user interface). Displaying the messages user interface over at least a portion of the first user interface in response to receiving the request to display the messages user interface causes the computer system to automatically display a messages user interface for communicating with other users while the shared-content session is active.

In some embodiments, while displaying (e.g., in FIG. 6S) the messages user interface (e.g., 640A) over at least a portion of the first user interface (e.g., 679), the computer system (e.g., 600A) receives, via the one or more input devices, a set of one or more inputs (e.g., 605-31 and/or 605-32) corresponding to a request to dismiss the messages user interface (e.g., a tap input, a swipe gesture from a respective location or region of the display generation component, a selection of a graphical element such as a done affordance, icon, and/or text). In some embodiments, in response to receiving the set of one or more inputs corresponding to a request to dismiss the messages user interface (and/or, optionally, in accordance with a determination that the set of one or more inputs satisfies a set of criteria (e.g., a set of criteria for dismissing the messages user interface)), the computer system ceases to display the messages user interface (e.g., 640A) and displays the first user interface (e.g., 679) (e.g., continuing to display at least a portion the first user interface and/or redisplaying at least a portion of the first user interface). Ceasing to display the messages user interface and displaying the first user interface in response to receiving the set of one or more inputs corresponding to a request to dismiss the messages user interface causes the computer system to automatically dismiss the messages user interface and display the first user interface.

In some embodiments, the first user interface (e.g., 679) includes a representation of media (e.g., 680A) (e.g., a window or PiP displaying the output content) output as the respective content for the shared-content session. In some embodiments, the computer system (e.g., 600A) displaying the messages user interface (e.g., 640A) over at least a portion of the first user interface (e.g., 679) includes displaying the representation of the media (e.g., 680A) at a location that at least partially overlaps the messages user interface region without overlapping a recipient region (e.g., 640-1A) of the messages user interface (e.g., a region of the messages user interface that indicates one or more recipients of the messages in the messages user interface) and without overlapping at least a portion of a message display region (e.g., 642A) of the messages user interface (e.g., a region of the messages user interface that includes one or more messages (e.g., 642-4 and/or 642-5) transmitted as part of a messages conversation). Displaying the representation of the media at a location that at least partially overlaps the messages user interface region without overlapping a recipient region of the messages user interface and without overlapping at least a portion of a message display region of the messages user interface enhances the user experience of the shared-content session by allowing the user to continue to view the respective content while also being able to communicate with other users via the messages user interface (including being able to view the recipients of the messages).

In some embodiments, the computer system (e.g., 600A) displaying the messages user interface (e.g., 640A) over at least a portion of the first user interface (e.g., 679) includes, in accordance with a determination that the computer system is a first type of device (e.g., a tablet, laptop, and/or desktop), displaying the messages user interface concurrently with at least a portion of the first user interface (e.g., the messages user interface partially overlays the first user interface). In some embodiments, the computer system displaying the messages user interface over at least a portion of the first user interface includes, in accordance with a determination that the computer system is a second type of device (e.g., a smartphone and/or wearable device), displaying the messages user interface without displaying at least a portion of the first user interface (e.g., the messages user interface completely overlays the first user interface).

In some embodiments, while the shared-content session is in the first mode (e.g., as shown in FIG. 6R and/or 6Z) (e.g., real-time communication features are disabled), the computer system (e.g., 600A) receives a set of one or more inputs (e.g., 605-28 and/or 605-38) corresponding to a request to select screen-share content (e.g., a screen and/or application interface that is being displayed by the computer system) as the respective content for the shared-content session. In some embodiments, in response to receiving the set of one or more inputs corresponding to a request to select screen-share content as the respective content for the shared-content session, the computer system selects the screen-share content as the respective content for the shared-content session (in some embodiments, including outputting the screen-share content as the respective content for the shared-content session) and transitions the shared-content session from the first mode to a fifth mode in which a real-time audio channel (e.g., an audio feed) is active for the shared content session (e.g., as shown in FIG. 6AA). Selecting the screen-share content as the respective content for the shared-content session and transitioning the shared-content session from the first mode to the fifth mode in response to receiving the set of one or more inputs corresponding to a request to select screen-share content as the respective content for the shared-content session causes the computer system to automatically enable real-time communication for the shared-content session when the respective content is screen-share content. In some embodiments, the audio channel is active without a real-time video channel being active when the shared-content session is in the fifth mode. In some embodiments, the real-time audio channel and a real-time video channel are both active when the shared-content session is in the fifth mode.

Note that details of the processes described above with respect to method 700 (e.g., FIG. 7) are also applicable in an analogous manner to the methods described below. For example, any of methods 800, 900, and/or 1100 optionally include one or more of the characteristics of the various methods described above with reference to method 700. For example, any of the aspects discussed with respect to method 700 for initiating a shared-content session using asynchronous communication can be applied to a shared-content session described with respect to any of methods 800, 900, and/or 1100. For brevity, these details are not repeated.

FIG. 8 is a flow diagram illustrating a method for managing real-time communication features for a shared-content session using a computer system, in accordance with some embodiments. Method 800 is performed at a computer system (e.g., 100, 300, 500, and/or 600) (e.g., a smartphone, a tablet, a desktop, laptop computer, and/or a head-mounted device (e.g., a head-mounted augmented reality and/or extended reality device)) that is in communication with (e.g., includes and/or is connected to) one or more display generation components (e.g., 600-1) (e.g., a display controller, a touch-sensitive display system, a speaker, a bone conduction audio output device, a tactile output generator, a projector, a holographic display, and/or a head-mounted display system) and one or more input devices (e.g., 600-1, 600-2, and/or 600-3) (e.g., a touch-sensitive surface, a keyboard, mouse, trackpad, microphone, one or more optical sensors for detecting gestures, one or more capacitive sensors for detecting hover inputs, and/or accelerometer/gyroscope/inertial measurement units). Some operations in method 800 are, optionally, combined, the orders of some operations are, optionally, changed, and some operations are, optionally, omitted.

As described below, method 800 provides an intuitive way for managing real-time communication features for a shared-content session. The method reduces the cognitive burden on a user for managing real-time communication features for a shared-content session, thereby creating a more efficient human-machine interface. For battery-operated computing devices, enabling a user to manage real-time communication features for a shared-content session faster and more efficiently conserves power and increases the time between battery charges.

At method 800, while the computer system (e.g., 600B) (e.g., a smartphone, a tablet, a desktop, laptop computer, and/or a head-mounted device (e.g., a head-mounted augmented reality and/or extended reality device)) is in a shared-content session in which synchronized content is enabled for sharing (e.g., as shown in FIG. 6U, 6X, and/or 6AA) (e.g., enabled and/or selected for sharing while being output at the external computer system, or enabled and/or selected for sharing while not being output at the external computer system (e.g., the synchronized content is added to the shared-content session but is not actively being output at the external computer system because playback of the content has not been started by the remote user, playback is paused, or playback has been stopped)) with an external computer system (e.g., 600A) (e.g., one or more external computer systems (e.g., a computer system that is associated with (e.g., being operated by and/or logged into a user account associated with) a remote user), and while a real-time communication session (e.g., a communication session in which a live audio feed and/or a live video feed is communicated with an external computer system)) is not enabled (e.g., as shown in FIG. 6U, 6X, and/or 6AA) (e.g., the shared-content session is in a first mode in which a set of real-time communication features (e.g., a live camera feed and/or a live audio feed between the computer system and the external computer system) are disabled (e.g., temporarily disabled or turned off) for the shared-content session), the computer system receives (802) an invitation (e.g., 683, 684, and/or 688) to join a real-time communication session (e.g., a real-time communication session with the external computer system and, optionally, a different computer system) (in some embodiments, the real-time communication session is provided as part of the shared-content session) and displays (804) (e.g., in response to receiving the invitation to join a real-time communication session), via the one or more display generation components (e.g., 600-1B) (e.g., a display controller, a touch-sensitive display system, a speaker, a bone conduction audio output device, a tactile output generator, a projector, a holographic display, and/or a head-mounted display system), an option (e.g., 683-2, 684-2, and/or 688-2) (e.g., a selectable graphical element, icon, text, and/or affordance) to accept the invitation to join the real-time communication session. In some embodiments, the shared-content session, when active, enables the computer system to output respective content (e.g., synchronized content and/or screen-share content) while the respective content is being output by the external computer system. In some embodiments, the invitation to join the real-time communication session is an invitation to initiate and/or join a new real-time communication session. In some embodiments, the invitation to join the real-time communication session is an invitation to join an ongoing real-time communication session. In some embodiments, the computer system displays a representation (e.g., 683, 684, and/or 688) of the invitation. In some embodiments, the representation of the invitation includes the option to accept the invitation to join the real-time communication session.

At step 806 of method 800, after receiving the invitation to join the real-time communication session (and, in some embodiments, after displaying the invitation) and in accordance with a determination that the option to accept the invitation to join the real-time communication session (e.g., 683-2, 684-2, and/or 688-2) has been selected (e.g., in response to detecting selection (e.g., 605-34, 605-36, and/or 605-40) of the option to accept the invitation to join the real-time communication session), the computer system (e.g., 600B) joins (808) the real-time communication session (e.g., as shown in FIG. 6W, 6Y, and/or 6AC) (in some embodiments, while continuing the shared-content session in which synchronized content is selected for sharing with the external computer system). In some embodiments, joining the real-time communication session includes enabling a set of real-time communication features (e.g., a live camera feed and/or a live audio feed between the computer system and the external computer system) for the shared-content session.

At step 806 of method 800, after receiving the invitation to join the real-time communication session and in accordance with a determination that the option to accept the invitation to join the real-time communication session (e.g., 683-2, 684-2, and/or 688-2) has not been selected (e.g., the option has not been selected after a predetermined amount of time and/or the computer system has received a set of one or more inputs (e.g., 605-33, 605-37, and/or 605-39) that include an instruction to dismiss the invitation, to ignore the invitation, and/or to decline the invitation), the computer system forgoes (810) joining the real-time communication session (e.g., as shown in FIG. 6V and/or 6AB) (in some embodiments, while continuing the shared-content session in which synchronized content is selected for sharing with the external computer system). Joining the real-time communication session in accordance with a determination that the option to accept the invitation to join the real-time communication session has been selected, and forgoing joining the real-time communication session in accordance with a determination that the option to accept the invitation has not been selected, enables a user to join or decline the real-time communication session while in the shared-content session without having to display additional controls.

In some embodiments, the computer system (e.g., 600) displays, via the one or more display generation components (e.g., 600-1), and concurrently with the option to accept the invitation to join the real-time communication session (e.g., 683-2, 684-2, and/or 688-2), a graphical object (e.g., 620) (e.g., an icon, affordance, and/or graphical element) that is selectable (e.g., via one or more inputs) to display a set of controls (e.g., 615) for the shared-content session (e.g., a control user interface). Displaying the option to accept the invitation to join the real-time communication session concurrently with the graphical object that is selectable to display a set of controls for the shared-content session enables a user to join the real-time communication session while in the shared-content session without having to display the set of controls for the shared-content session.

In some embodiments (e.g., after and/or while receiving the invitation to join the real-time communication session), the computer system (e.g., 600B) displays, via the one or more display generation components (e.g., 600-1B), an option (e.g., 683-1, 684-1, and/or 688-1) (e.g., a selectable graphical element, icon, text, and/or affordance) to decline the invitation to join the real-time communication session. In some embodiments, after receiving the invitation to join the real-time communication session and in accordance with a determination that the option to decline the invitation to join the real-time communication session has been selected (e.g., 605-33, 605-37, and/or 605-39) (e.g., in response to detecting selection of the option to decline the invitation to join the real-time communication session), the computer system declines (e.g., terminating and/or ceasing to display) the invitation to join the real-time communication session (e.g., without joining the real-time communication session) (in some embodiments, while continuing the shared-content session in which synchronized content is selected for sharing with the external computer system). In some embodiments, after receiving the invitation to join the real-time communication session and in accordance with a determination that the option to decline the invitation to join the real-time communication session has not been selected, the computer system forgoes declining the invitation to join the real-time communication session (e.g., continuing to display, at least temporarily, the invitation to join the real-time communication session). Declining the invitation to join the real-time communication session in accordance with a determination that the option to decline the invitation to join the real-time communication has been selected, and forgoing declining the invitation to join the real-time communication session in accordance with a determination that the option to decline the invitation has not been selected, enables a user to decline the invitation to join a real-time communication session while in the shared-content session without having to display additional controls.

In some embodiments, after receiving the invitation to join the real-time communication session and in accordance with a determination that the option to accept the invitation to join the real-time communication session (e.g., 683-2, 684-2, and/or 688-2) has not been selected for at least a threshold amount of time (e.g., 5 seconds, 7 seconds, or 10 seconds), the computer system (e.g., 600B) ceases to display the invitation (e.g., 683, 684, and/or 688) to join the real-time communication session (e.g., without joining the real-time communication session) (in some embodiments, while continuing the shared-content session in which synchronized content is selected for sharing with the external computer system). Ceasing to display the invitation to join the real-time communication session in accordance with a determination that the option to accept the invitation to join the real-time communication has not been selected for at least a threshold amount of time causes the computer system to automatically cease displaying (and, in some embodiments, decline) the invitation to join a real-time communication session while in the shared-content session when the invitation is not accepted within a threshold amount of time. In some embodiments, in accordance with a determination that the option to accept the invitation to join the real-time communication session has not been selected for at least a threshold amount of time, the computer system declines the invitation to join the real-time communication session.

In some embodiments, in response to receiving the invitation to join the real-time communication session, the computer system (e.g., 600B) displays, via the one or more display generation components (e.g., 600-1B), a notification (e.g., 648, 683, 684, and/or 688) (e.g., a banner and/or graphical user interface object) that corresponds to (e.g., represents and/or includes an indication of) the invitation to join the real-time communication session. Displaying the notification that corresponds to the invitation to join the real-time communication session provides feedback about a state of the computer system (e.g., a state in which the invitation has been received). In some embodiments, the notification includes the option to accept (e.g., 683-2, 684-2, and/or 688-2) (and/or the option to decline (e.g., 683-1, 684-1, and/or 688-1)) the invitation to join the real-time communication session.

In some embodiments, while displaying the notification (e.g., 648, 683, 684, and/or 688), the computer system (e.g., 600B) receives, via the one or more input devices (e.g., 600-1B), a selection (e.g., 605-12) of the notification (e.g., 648) (e.g., a set of one or more inputs that includes a selection of the notification). In some embodiments, in response to receiving the selection of the notification, the computer system displays, via the one or more display generation components (e.g., 600-1B), an asynchronous communication user interface (e.g., 640B) (e.g., a user interface for a messages application at the computer system and/or a user interface for an email application at the computer system). Displaying an asynchronous communication user interface in response to receiving the selection of the notification reduces the number of inputs needed to display a user interface for providing asynchronous communication (e.g., to participants of the shared-content session and/or a user account that is associated with an external computer system that sent the invitation to join the real-time communication session). In some embodiments, the asynchronous communication user interface enables the computer system to provide asynchronous communication (e.g., a text message, an SMS message, a MMS message, and/or an email) to participants (e.g., 600A) of the shared-content session and/or to a user account that is associated with an external computer system that sent the invitation to join the real-time communication session. In some embodiments, the asynchronous communication user interface includes indications (e.g., 640-1) of participants of a messages conversation (e.g., recipients of a text message, SMS message, MMS message, and/or email), content of messages (e.g., 642-1, 642-2, 642-3, and/or 642-4) sent between participants, and/or a message compose user interface (e.g., 644) for composing and/or sending a new message to other participants.

In some embodiments, prior to the computer system (e.g., 600B) being in the shared-content session in which synchronized content is enabled for sharing with the external computer system, the computer system receives an invitation (e.g., 645 and/or 648) to join the shared-content session. In some embodiments, the invitation to join the shared-content session is received via an asynchronous communication (e.g., 642-4B) (e.g., a SMS message, a MMS message, or an email received at the computer system) provided using an asynchronous communication application (e.g., a messages application or an email application operating at the computer system).

In some embodiments, the asynchronous communication (e.g., 642-4B) includes an indication (e.g., 647B) (e.g., text, an icon, and/or a graphical element that represents the synchronized content selected for the shared-content session) of the synchronized content for the shared-content session. Including an indication of the synchronized content with the asynchronous communication provides feedback indicating which content is selected for sharing via the shared-content session.

In some embodiments, the asynchronous communication (e.g., 642-4B) includes an option (e.g., 645B) (e.g., a selectable graphical element, icon, text, and/or affordance) that is selectable (e.g., via one or more inputs) to join the shared-content session. Including an option that is selectable to join the shared-content session with the asynchronous communication reduces the number of inputs needed to join the shared-content session by providing an option that can be easily and conveniently selected by a user of the computer system without having to navigate to another user interface.

In some embodiments, the invitation (e.g., 683 and/or 684) to join the real-time communication session was initiated (e.g., at the external computer system (e.g., 600A)) via a selection (e.g., 605-26 or 605-27) of a call option (e.g., 615-8A or 615-9A) (e.g., a selectable graphical element, icon, text, and/or affordance) (e.g., an audio call option or a video call option) in a synchronized content session user interface (e.g., 615A) at the external computer system (e.g., 600A) (e.g., a control user interface displayed at the external computer system).

In some embodiments, the invitation (e.g., 688) to join the real-time communication session was initiated (e.g., at the external computer system (e.g., 600A)) via a selection (e.g., 605-28 and/or 605-38) of a screen-sharing option (e.g., 615-6A and/or 652) (e.g., a selectable graphical element, icon, text, and/or affordance) in a synchronized content session user interface (e.g., 615A and/or 655) at the external computer system (e.g., 600A) (e.g., a control user interface displayed at the external computer system).

In some embodiments, the option to accept the invitation to join the real-time communication session (e.g., 688) includes an indication (e.g., as shown in FIG. 6AA) that a respective user is sharing screen content (e.g., image data generated by a device (e.g., the computer system; the external computer system) that provides a real-time representation of an image or video content that is currently displayed at the device) from an external computer system (e.g., 600A) associated with the respective user. Displaying the indication that a respective user is sharing screen content from an external computer system associated with the respective user provides feedback about the type of content that is being shared with the computer system via the shared-content session. In some embodiments, the computer system displays a notification and/or banner for the incoming invitation that includes an indication that a user is sharing their screen.

In some embodiments, after forgoing joining the real-time communication session (e.g., in response to declining to join the real-time communication session (e.g., input 605-39 on decline option 688-1) and/or in response to a failure to select the option to accept the invitation to join the real-time communication session (e.g., 688-2)), the computer system (e.g., 600B) displays, via the one or more display generation components (e.g., 600-1B), an indication of activity (e.g., the sharing of screen-share content) occurring in the shared-content session and a prompt to join the real-time communication session (e.g., 689) (e.g., text indicating that a user of the computer system can join the real-time communication session to view the screen-share content). Displaying the indication of activity occurring in the shared-content session and the prompt to join the real-time communication session provide feedback about a state of the computer system (e.g., a state in which the computer system is not participating in the screen-share content, but can participate in the shared content by joining the real-time communication session).

In some embodiments, after forgoing joining the real-time communication session (e.g., in response to declining to join the real-time communication session (e.g., input 605-39 on decline option 688-1) and/or in response to a failure to select the option to accept the invitation to join the real-time communication session (e.g., 688-2)), the computer system (e.g., 600B) displays, via the one or more display generation components (e.g., 600-1B), a control user interface (e.g., 615B) for the shared-content session (e.g., a graphical object and/or menu) having a first control option (e.g., 615-8B and/or 615-9B) (e.g., a selectable graphical element, icon, text, and/or affordance) (e.g., a messages option, an audio call option, a video call option, and/or a sharing option). In some embodiments, the computer system receives, via the one or more input devices (e.g., 600-1B), a set of one or more inputs that includes a selection (e.g., 605-35) of the first control option. In some embodiments, in response to receiving the set of one or more inputs that includes a selection of the first control option, the computer system initiates a process for joining the real-time communication session (e.g., as shown in FIG. 6W) (e.g., joining or rejoining an ongoing an audio call to establish an audio feed for the shared-content session and/or joining or rejoining an ongoing video call to establish a video feed and, optionally, an audio feed for the shared-content session). Initiating a process for joining the real-time communication session in response to receiving the set of one or more inputs that includes a selection of the first control option enables the computer system to automatically join the real-time communication session after forgoing joining the real-time communication session. In some embodiments, after declining or failing to join the real-time communication session, the computer system can join the real-time communication session in response to a selection of an option (e.g., an audio call option and/or a video call option) in a control user interface that is displayed for the shared-content session. In some embodiments, after joining the real-time communication session, the computer system enables a user to communicate with participants of the shared-content session using real-time communication such as a live audio feed and/or a live video feed.

Note that details of the processes described above with respect to method 800 (e.g., FIG. 8) are also applicable in an analogous manner to the methods described above and/or below. For example, any of methods 700, 900, and/or 1100 optionally include one or more of the characteristics of the various methods described above with reference to method 800. For example, any of the aspects discussed with respect to method 800 for managing real-time communication features for a shared-content session can be applied to a shared-content session described with respect to any of methods 700, 900, and/or 1100. For brevity, these details are not repeated.

FIG. 9 is a flow diagram illustrating a method for in managing a shared-content session using a computer system, in accordance with some embodiments. Method 900 is performed at a computer system (e.g., 100, 300, 500, and/or 600) (e.g., a smartphone, a tablet, a desktop, laptop computer, and/or a head-mounted device (e.g., a head-mounted augmented reality and/or extended reality device)) that is in communication with (e.g., includes and/or is connected to) one or more display generation components (e.g., 600-1) (e.g., a display controller, a touch-sensitive display system, a speaker, a bone conduction audio output device, a tactile output generator, a projector, a holographic display, and/or a head-mounted display system) and one or more input devices (e.g., 600-1, 600-2, and/or 600-3) (e.g., a touch-sensitive surface, a keyboard, mouse, trackpad, microphone, one or more optical sensors for detecting gestures, one or more capacitive sensors for detecting hover inputs, and/or accelerometer/gyroscope/inertial measurement units). Some operations in method 900 are, optionally, combined, the orders of some operations are, optionally, changed, and some operations are, optionally, omitted.

As described below, method 900 provides an intuitive way for managing a shared-content session. The method reduces the cognitive burden on a user for managing shared-content sessions, thereby creating a more efficient human-machine interface. For battery-operated computing devices, enabling a user to manage a shared-content session faster and more efficiently conserves power and increases the time between battery charges.

At method 900, while the computer system (e.g., 600A) is in a communication session (e.g., a real-time communication session, an asynchronous communication session, and/or a shared-content session) with an external computer system (e.g., 600B) (e.g., one or more external computer systems) (e.g., a computer system that is associated with (e.g., being operated by and/or logged into a user account associated with) a remote user) (and, optionally, while the computer system is in a shared-content session with the external computer system), the computer system (e.g., a smartphone, a tablet, a desktop, laptop computer, and/or a head-mounted device (e.g., a head-mounted augmented reality and/or extended reality device)) displays (902), via the one or more display generation components (e.g., 600-1A) (e.g., a display controller, a touch-sensitive display system, a speaker, a bone conduction audio output device, a tactile output generator, a projector, a holographic display, and/or a head-mounted display system), a control user interface (e.g., 615A) (e.g., a graphical object and/or menu) for controlling one or more settings of the communication session, wherein the control user interface includes a first control option (e.g., 615-6A) (e.g., a selectable graphical element, icon, text, and/or affordance) (e.g., a sharing option and/or an option for displaying information associated with a shared-content session). In some embodiments, the control user interface for controlling one or more settings of the communication session includes information associated with the communication session, information associated with a shared-content session, one or more selectable communication session function options that, when selected, cause the computer system to perform a respective function associated with the communication session, and/or one or more selectable shared-content session function options that, when selected, cause the computer system to perform a respective function associated with a shared-content session.

While the computer system (e.g., 600A) is in a communication session with an external computer system (e.g., 600B), the computer system detects (904), via the one or more input devices (e.g., 600-1A) (e.g., a touch-sensitive surface, a keyboard, mouse, trackpad, one or more optical sensors for detecting gestures, one or more capacitive sensors for detecting hover inputs, and/or accelerometer/gyroscope/inertial measurement units), a set of one or more inputs (e.g., 605-15, 605-28, and/or 605-43) directed to the control user interface (e.g., 615A), wherein the set of one or more inputs includes a selection of the first control option (e.g., 615-6A).

While the computer system (e.g., 600A) is in a communication session with an external computer system (e.g., 600B) and in response to detecting the selection (e.g., 605-15, 605-28, and/or 605-43) of the first control option (e.g., 615-6A), the computer system displays (906) a representation (e.g., 660, 660-1, 660-2, 660-3, and/or 660-4) (e.g., a graphical element, icon, text, and/or affordance) of one or more applications available (e.g., downloaded, stored, and/or installed) on the computer system that are configured to provide content that can be played (e.g., output, shared immediately, and/or added to a queue) as synchronized content (e.g., audio and/or video data for respective content (e.g., a show, movie, video, song, album, game, browsing experience, or other interactive experience) for which output is synchronized at the computer system and one or more external computer systems) during (e.g., concurrently with and/or as a part of) the communication session (e.g., a shared-content session in which the provided content is output as synchronized content for the shared-content session). Displaying a representation of one or more applications available on the computer system that are configured to provide content that can be played as synchronized content during the communication session in response to detecting the selection of the first control option enables the computer system to automatically provide a user to with a set of applications that support playback of synchronized content without requiring additional input to filter the applications or determine such applications through a trial-and-error process. In some embodiments, the computer system forgoes displaying a representation of applications that are not configured to provide content that can be played as synchronized content during the communication session (e.g., in a shared-content session and/or a real-time communication session). In some embodiments, of the applications that are available on the computer system, some of the applications are configured to provide content that can be played in a shared-content session and some of the applications are not configured to provide content that can be played in a shared-content session. In some embodiments, the one or more applications that are configured to provide content that can be played as synchronized content is a subset of applications available at the computer system, wherein the applications in the subset correspond to applications that are capable of streaming content such as synchronized content. In some embodiments, the representation of one or more applications includes a representation of one or more applications that are associated with a user of the computer system (e.g., applications corresponding to user accounts that the user has or applications that the user has previously used even if those applications are not currently downloaded on the computer system).

In some embodiments, in response to detecting the selection (e.g., 605-15, 605-28, and/or 605-43) of the first control option (e.g., 615-6A), the computer system (e.g., 600A) displays, via the one or more display generation components (e.g., 600-1A), a screen-share option (e.g., 652) (e.g., a selectable graphical element, icon, text, and/or affordance) that is selectable (e.g., via one or more inputs (e.g., 605-38)) to initiate a process for selecting screen-share content (e.g., 690) (e.g., a screen and/or application interface that is being displayed by the computer system) for the communication session (e.g., the communication session is a shared-content session, and the screen-share content is selected for sharing in the shared-content session). Displaying a screen-share option that is selectable to initiate a process for selecting screen-share content for the communication session in response to detecting the selection of the first control option causes the computer system to automatically display controls for sharing the displayed content of the computer system's screen in the communication session. In some embodiments, the screen-share option is a second control option (e.g., 615-6A) in the control user interface (e.g., 615A).

In some embodiments, in response to detecting the selection (e.g., 605-15, 605-28, and/or 605-43) of the first control option (e.g., 615-6A), the computer system (e.g., 600A) displays, via the one or more display generation components (e.g., 600-1A), a settings option (e.g., a selectable graphical element, icon, text, and/or affordance) that is selectable (e.g., via one or more inputs) to display settings controls (or to change settings) for an application associated with the communication session (e.g., controls for enabling, disabling, and/or modifying one or more settings of an application configured to provide content for the shared-content session and/or an application that provides or enables one or more features (e.g., real-time audio, real-time video, and/or messaging) of the communication session). Displaying a settings option that is selectable to display settings controls for an application associated with the communication session in response to detecting the selection of the first control option causes the computer system to automatically display controls for enabling, disabling, and/or modifying one or more settings of the communication session. In some embodiments, the settings controls apply globally to shared-content sessions at the computer system. In some embodiments, the settings controls apply to a particular application that is operating at the computer system and is configured to provide content for the shared-content session. In some embodiments, the settings option includes automatic playback option 652. In some embodiments, the settings option includes manual playback option 654. In some embodiments, the settings option includes a settings option other than the automatic playback option or the manual playback option.

In some embodiments, displaying the representation (e.g., 660, 660-1, 660-2, 660-3, and/or 660-4) of one or more applications available on the computer system (e.g., 600A) that are configured to provide content that can be played as synchronized content during the communication session includes displaying a list (e.g., 660) of applications (e.g., application icons, affordances, and/or graphical elements) that is arranged (e.g., organized, sorted, and/or filtered) based on use criteria (e.g., criteria that is based on use of a respective application in the listing of applications such as, for example, recency of use and/or frequency of use (e.g., more recently used or more frequently used applications are displayed higher or earlier in the list than less recently used or less frequently used applications)). Displaying the listing of applications that is arranged based on use criteria causes the computer system to automatically organize and display relevant applications to a user of the computer system based on use of the respective applications. In some embodiments, the computer system displays a first application icon (e.g., 660-1) having a first position in the listing when the first application is used more recently (or frequently) than a second application and a third application, and displays a second application icon (e.g., 660-2) having a second position in the listing when the second application is used more recently (or frequently) than the third application and less recently (or frequently) than the first application, and displays a third application icon (e.g., 660-3) having a third position in the listing when the third application is used less recently (or frequently) than the first application and the second application.

In some embodiments, while displaying the representation (e.g., 660, 660-1, 660-2, 660-3, and/or 660-4) of one or more applications available on the computer system (e.g., 600A) that are configured to provide content that can be played as synchronized content during the communication session, the computer system detects, via the one or more input devices (e.g., 600-1A), a selection (e.g., 605-21) of a first application (e.g., 660-1) (e.g., selection of an icon, affordance, text, and/or graphical element corresponding to the first application) in the one or more applications. In some embodiments, in response to detecting the selection of the first application in the one or more applications, the computer system displays, via the one or more display generation components, a user interface (e.g., 670) for the first application. Displaying a user interface for the first application in response to detecting the selection of the first application enables the computer system to switch to the user interface for the first application without displaying additional controls. In some embodiments, the computer system launches and/or activates the first application as a part of displaying the user interface for the first application.

In some embodiments, the computer system (e.g., 600A) displaying the user interface (e.g., 670) for the first application (e.g., 660-1) includes displaying the user interface for the first application without initiating playback of first content (e.g., Football Show) (e.g., a song, music, show, movie, game, browsing experience, or other interactive experience) associated with the first application as synchronized content during the communication session (e.g., the first application is selected without sharing the first content). In some embodiments, the computer system detects, via the one or more input devices (e.g., 600-1A), a selection (e.g., 605-22 and/or 605-23) of second content (e.g., 674) (e.g., the first content or content different from the first content) for playback (e.g., at the computer system and/or the one or more external computer systems). In some embodiments, in response to detecting selection of the second content for playback (e.g., at the external computer system or at the computer system) (in some embodiments, and in accordance with a determination that the second content is capable of being played as synchronized content during the communication session), the computer system initiates playback of the second content (e.g., Football Show) as synchronized content during the communication session (e.g., as shown in FIG. 6R). Initiating playback of the second content as synchronized content during the communication session in response to detecting selection of the second content for playback causes the computer system to automatically play the second content when it is selected for playback in the communication session and is capable of being played as synchronized content. In some embodiments, an application can be selected without initiating playback of content associated with the application as synchronized content for the communication session. However, when content that is capable of being played as synchronized content is selected for playback, the content is shared with participants of the communication session (e.g., the shared-content session) as synchronized content.

In some embodiments, in response to detecting the selection (e.g., 605-15, 605-28, and/or 605-43) of the first control option (e.g., 615-6A), the computer system (e.g., 600A) displays, via the one or more display generation components (e.g., 600-1A), a set of one or more playback options (e.g., 645 and/or 656) (e.g., a set of one or more selectable graphical elements, icons, text, and/or affordances) that are selectable (e.g., via one or more inputs) to set (e.g., enable, disable, and/or modify) an automatic playback setting for synchronized content for the communication session (e.g., controls for enabling, disabling, and/or modifying automatic playback of synchronized content for the communication session). In some embodiments, while displaying the set of one or more playback options, the computer system detects, via the one or more input devices, a set of one or more inputs that includes a selection of one of the playback options. In some embodiments, in response to detecting the set of one or more inputs that includes a selection of one of the playback options and in accordance with a determination that the selected playback option is a first playback option (e.g., an automatic playback option 652), the computer system enables a mode in which synchronized content (e.g., future synchronized content) is automatically output at the computer system during the communication session (e.g., without requiring manual confirmation of the playback). In some embodiments, in response to detecting the set of one or more inputs that includes a selection of one of the playback options and in accordance with a determination that the selected playback option is a second playback option (e.g., 654) (e.g., an "ask next time" option), the computer system enables a mode in which synchronized content (e.g., future synchronized content) is not automatically output at the computer system (e.g., manual confirmation is required to initiate playback of the synchronized content). Displaying a set of one or more playback options that are selectable to set an automatic playback setting for synchronized content for the communication session reduces the number of inputs that are required to set an automatic playback setting for synchronized content for the communication session.

In some embodiments, in response to detecting the selection (e.g., 605-15, 605-28, and/or 605-43) of the first control option (e.g., 615-6A), the computer system (e.g., 600A) displays (e.g., concurrently with the representation of one or more applications available on the computer system that are configured to provide content that can be played as synchronized content during the communication session), via the one or more display generation components (e.g., 600-1A), an application store option (e.g., 662) (e.g., a selectable graphical element, icon, text, and/or affordance). In some embodiments, while displaying the application store option, the computer system detects, via the one or more input devices, a set of one or more inputs that corresponds to a selection (e.g., 605-17) of the application store option. In some embodiments, in response to detecting the set of one or more inputs that corresponds to a selection of the application store option, the computer system displays, via the one or more display generation components, a user interface (e.g., 664) (e.g., an application store interface) that provides a capability to obtain (e.g., download) an application (e.g., an application that is configured to provide content that can be played as synchronized content during the communication session). Displaying a user interface that provides a capability to obtain an application in response to detecting the selection of the application store option reduces the number of inputs needed to access the user interface for obtaining applications for the computer system.

In some embodiments, the user interface (e.g., 664) that provides a capability to obtain an application includes a list (e.g., 666) of one or more applications (e.g., 666-1, 666-2, and/or 666-3) that are configured to provide content that can be played as synchronized content during the communication session (e.g., without displaying applications that are not configured to provide content that can be played as synchronized content during the communication session). Displaying the user interface including a list of one or more applications that are configured to provide content that can be played as synchronized content during the communication session reduces inputs by providing a filtered list of applications that are configured to provide content that can be played as synchronized content without requiring additional user input.

In some embodiments, while displaying the representation (e.g., 660, 660-1, 660-2, 660-3, and/or 660-4) of one or more applications available on the computer system (e.g., 600A) that are configured to provide content that can be played as synchronized content during the communication session, the computer system detects a selection (e.g., 605-21) of a respective application (e.g., 660-1) in the one or more applications available on the computer system (e.g., selection of an icon, affordance, text, and/or graphical element corresponding to the respective application). In some embodiments, in response to detecting the selection of the respective application, the computer system displays, via the one or more display generation components (e.g., 600-1A), a user interface (e.g., 670) for the respective application, wherein the user interface for the respective application includes an indication (e.g., 672 and/or 674) (e.g., text, icon, affordance, highlighting, bolding, color, and/or graphical element) of respective content provided by the respective application that can be played as synchronized content during the communication session (e.g., the respective content is associated with an indicator that indicates the content is capable of being played as synchronized content during the communication session). Displaying the user interface for the respective application including an indication of respective content provided by the respective application that can be played as synchronized content during the communication session provides feedback about a state of the computer system (e.g., a state in which the computer system is capable of playing the respective content as synchronized content during the communication session). In some embodiments, the computer system launches and/or activates the respective application when displaying the user interface for the respective application. In some embodiments, the computer system does not display the indication for content that is not capable of being played as synchronized content during the communication session.

In some embodiments, in response to detecting the selection (e.g., 605-15, 605-28, and/or 605-43) of the first control option (e.g., 615-6A), the computer system (e.g., 600A) displays (e.g., concurrently with the representation of one or more applications available on the computer system that are configured to provide content that can be played as synchronized content during the communication session) an indication (e.g., "Apps for Group Play" in region 658) (e.g., text, icon, affordance, and/or graphical element) that the one or more applications are configured to provide content that can be played as synchronized content (e.g., a notice, icon, graphical element, and/or text that indicates the applications can play synchronized content). Displaying, in response to detecting the selection of the first control option, an indication that the one or more applications are configured to provide content that can be played as synchronized content provides feedback about a state of the computer system (e.g., a state in which the computer system is capable of playing content from the one or more applications as synchronized content).

In some embodiments, the computer system (e.g., 600A) displays the representation (e.g., 660, 660-1, 660-2, 660-3, and/or 660-4) of one or more applications available on the computer system that are configured to provide content that can be played as synchronized content during the communication session includes displaying application icons (e.g., 660-1, 660-2, 660-3, and/or 660-4) (e.g., affordances and/or selectable graphical elements; a list of application icons) corresponding to the one or more applications. Displaying the representation of one or more applications as application icons corresponding to the one or more applications provides feedback indicating that the respective application icon can be selected to launch the corresponding application. In some embodiments, the computer system detects a selection of an application icon and, in response, launches an application corresponding to the selected application icon, including displaying a user interface for the application corresponding to the selected application icon.

In some embodiments, displaying the representation (e.g., 660, 660-1, 660-2, 660-3, and/or 660-4) of one or more applications available on the computer system (e.g., 600A) that are configured to provide content that can be played as synchronized content during the communication session includes displaying a scrollable list (e.g., 660) of the one or more applications (e.g., application icons, affordances, and/or graphical elements that move (scroll) in response to an input such as a swipe or scroll gesture). In some embodiments, the computer system detects an input (e.g., 605-16) (e.g., a swipe or scrolling gesture) and, in response, updates the displayed list of applications. For example, the computer system scrolls the list of applications to display different applications while the previously displayed applications are scrolled off screen.

In some embodiments, displaying the representation of one or more applications available on the computer system (e.g., 600A) that are configured to provide content that can be played as synchronized content during the communication session includes displaying a list (e.g., 660 and/or 666) of the one or more applications (e.g., application icons, affordances, and/or graphical elements) that visually emphasizes one or more applications selected based on participants of the communication session over other applications (e.g., criteria that is based on applications previously used with the participants, permissions, and/or entitlements of user accounts associated with participants of the communication session). Displaying the list of the one or more applications that visually emphasizes one or more applications selected based on participants of the communication session over other applications causes the computer system to automatically organize and display relevant applications to a user of the computer system based on permissions and/or entitlements of the participants of the communication session. In some embodiments, the visual emphasis includes highlighting or labeling/badging. In some embodiments, the visual emphasis includes an order in which the list of applications is arranged (e.g., organized, sorted, and/or filtered so as to increase the relative emphasis of applications that are likely to be used while in a communication session with the participants in the communication session). In some embodiments, the computer system displays the list of the one or more applications arranged in a first order in accordance with a determination that the participants of the communication session is a first set of participants. In some embodiments, the computer system displays the list of the one or more application arranged in a second order different from the first order in accordance with a determination that the participants of the communication session is a second set of participants different from the first set of participants.

Note that details of the processes described above with respect to method 900 (e.g., FIG. 9) are also applicable in an analogous manner to the methods described above and/or below. For example, any of methods 700, 800, and/or 1100 optionally include one or more of the characteristics of the various methods described above with reference to method 900. For example, any of the aspects discussed with respect to method 900 for managing a shared-content session can be applied to a shared-content session described with respect to any of methods 700, 800, and/or 1100. For brevity, these details are not repeated.

FIGS. 10A-10N illustrate exemplary user interfaces for managing transfer of a real-time communication session, in accordance with some embodiments. The user interfaces in these figures are used to illustrate the processes described below, including the processes in FIG. 11.

FIG. 10A depicts environment 1001, including Jane 1002 (also referred to herein as a user), headphones 1003, Jane's device 600B (also referred to herein as Jane's phone), and computer system 1000 (also referred to herein as "Jane's tablet"). FIG. 10A depicts Jane's device 600B and computer system 1000 in environment 1001, and also depicts an additional, more detailed view of Jane's device 600B and computer system 1000. In general, environment 1001 is a schematic depiction of an environment that includes Jane 1002, Jane's device 600B, and Jane's computer system 1000, and is shown in the figures when useful for understanding and/or illustrating various aspects of the techniques described herein. In the embodiments provided herein, the techniques are depicted using one or more tablets, laptops, and phones; however, other devices can be used, such as a desktop computer and/or other computer systems or devices. For example, computer system 1000 can be a laptop instead of a tablet. As another example, Jane's device 600B can be a tablet instead of a phone.

In the embodiments illustrated in FIGS. 10A-10N, Jane's device 600B is a computer system that includes display 600-1B, one or more cameras 600-2B, one or more microphones 600-3B, and one or more speakers 600-4B, as described above. Computer system 1000 includes display 1000-1, one or more cameras 1000-2, one or more microphones 1000-3, and one or more speakers. Computer system 1000 and Jane's device 600B include one or more elements of devices 100, 300, and/or 500, such as speakers, a microphone, memory, and a processor, for example. In some embodiments, Jane is shown wearing headphones 1003, which are connected to Jane's device 600B or computer system 1000 via a wired or wireless connection. Headphones 1003 includes speakers and are used to provide an audio output from a real-time communication session that is located at Jane's device 600B or computer system 1000.

In FIG. 10A, Jane 1002 is participating in a video call with the Backpackers group using Jane's device 600B, as shown by video call interface 1010 displayed on Jane's device 600B. Video call interface 1010 is a user interface for a video call application at Jane's device 600B. In the embodiment depicted in FIG. 10A, video call interface 1010 includes video tiles 1012 and 1014, and self view 1015. Video tile 1012 shows the video feed from Ryan's device, video tile 1014 shows the video feed from John's device, and self view 1015 shows the video feed from Jane's device 600B, which is captured using camera 600-2B. Jane's device 600B also displays pill 1020 having a green color to indicate that a video call is active at Jane's device 600B. In some embodiments, pill 1020 can be selected to display controls for the video call, as discussed in greater detail below. Jane's headphones 1003 are connected to Jane's device 600B, and audio from the video call is output using headphones 1003. While Jane is on the video call, she standing in environment 1001 holding device 600B outside of boundary 1005. Boundary 1005 represents a threshold distance (e.g., based on physical distance and/or signal strength) from computer system 1000 that, when criteria is met, triggers an option to transfer a real-time communication session, such as the active video call, between Jane's device 600B and computer system 1000. Because Jane's device 600B is outside of boundary 1005, the option to transfer the video call from Jane's device 600B to computer system 1000 is not available, and computer system 1000 is in a sleep and/or locked state with display 1000-1 inactive, as shown in FIG. 10A.

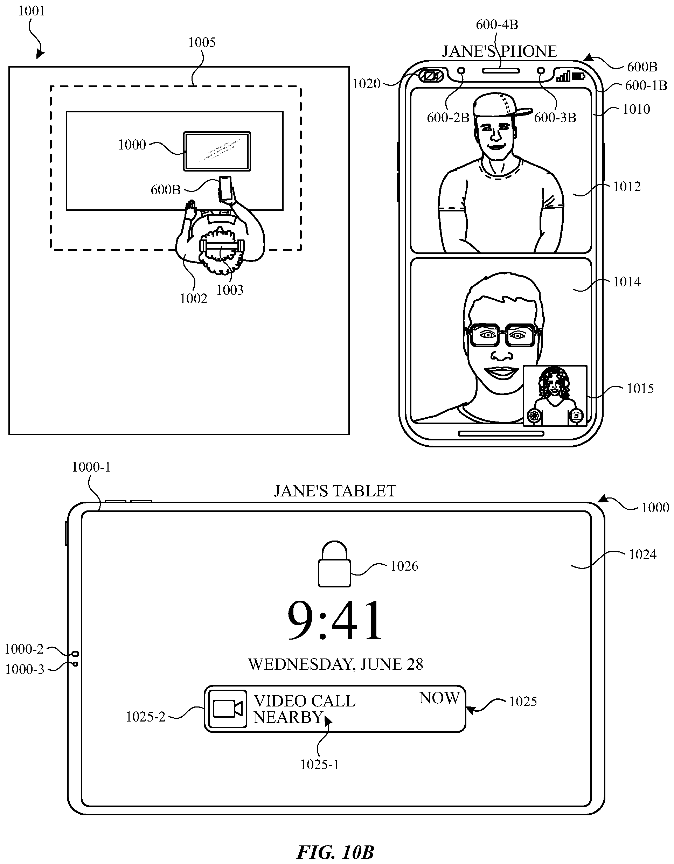

In FIG. 10B, Jane has moved closer to computer system 1000 and is standing in environment 1001 with device 600B positioned within boundary 1005. When Jane's device 600B is within boundary 1005, computer system 1000 detects the presence of device 600B, and if criteria are met, enables an option to transfer the video call from device 600B to computer system 1000. In some embodiments, the option to transfer the video call is enabled by device 600B, computer system 1000, and/or a server. In some embodiments, the criteria includes at least the following: 1) device 600B is within a threshold distance (based on physical distance and/or signal strength) from computer system 1000 (e.g., within boundary 1005), and 2) an active real-time communication session is ongoing at device 600B. In some embodiments, the criteria also includes additional criteria such as a criterion that is met when both device 600B and computer system 1000 are logged into a same user account (e.g., Jane's user account) and criteria that is based on settings for enabling the transfer feature at the respective devices. If the criteria is not met, computer system 1000 does not display notification 1025. For example, if Jane's device 600B was within boundary 1005, but not participating in an active video call or audio call, then computer system 1000 would not display notification 1025 and, optionally, would remain in the inactive state shown in FIG. 10A.

In FIG. 10B, the criteria is met because Jane's device 600B is within boundary 1005, the video call is active at device 600B, and device 600B and computer system 1000 are both logged into Jane's user account. Accordingly, the option is available to transfer the video call from Jane's device 600B to computer system 1000. When the option to transfer the call becomes available, Jane's device 600B changes the appearance of pill 1020 (e.g., shading the pill as shown in FIG. 10B to indicate that the option is available), and computer system 1000 displays notification 1025. When computer system 1000 detected the presence of device 600B within boundary 1005, and determined that the criteria was met, computer system 1000 activated display 1000-1 and displayed lock screen interface 1024 with notification 1025. Because computer system 1000 is still in a locked state, as indicated by lock icon 1026, the computer system displays notification 1025 having content that informs Jane of the detected video call. Specifically, text 1025-1 indicates that a video call is active nearby, and indicator 1025-2 represents a video call application that can be used to provide the video call. In the embodiment depicted in FIG. 10B, computer system 1000 displays notification 1025 on lock screen interface 1024 because the computer system is in a locked state when the criteria is met. However, computer system 1000 can display notification 1025 in other ways such as, for example, a notification (e.g., similar to notification 1048 and/or 1062, described below) or banner that is displayed over an application user interface or home screen user interface that is displayed when computer system 1000 is unlocked and the criteria are met.

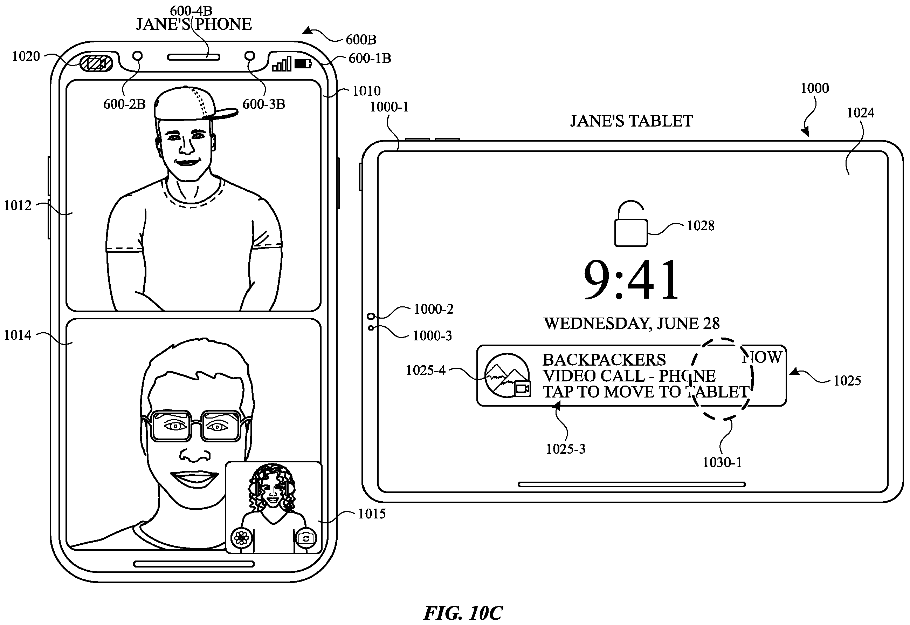

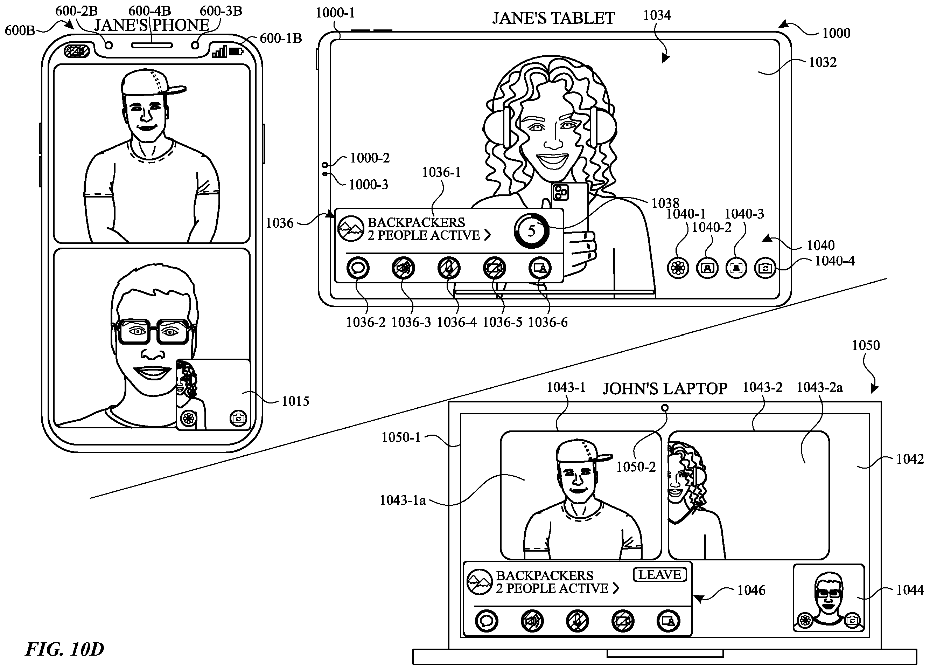

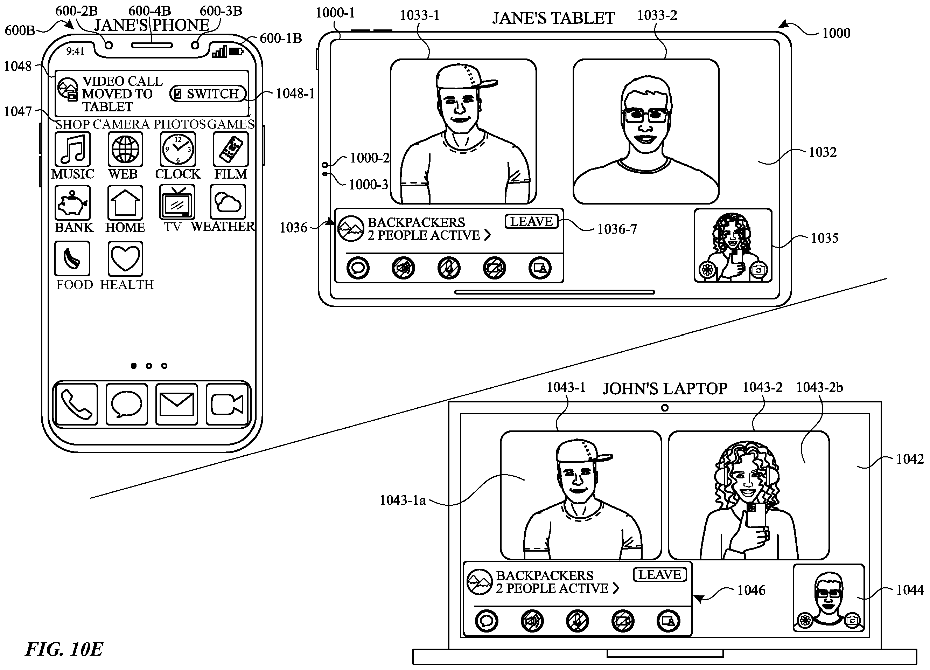

In FIG. 10C, computer system 1000 is unlocked (e.g., Jane unlocked the device using a passcode, biometric input, and/or other means), as indicated by unlock icon 1028, and computer system 1000 updates notification 1025 to include more detailed information regarding the option to transfer the video call from Jane's device 600B to computer system 1000. For example, as shown in FIG. 10C, computer system 1000 displays text 1025-3 informing Jane that a video call is currently ongoing at Jane's phone with the Backpackers group, and that Jane can tap on notification 1025 to transfer the video call to computer system 1000. Notification 1025 also includes indicator 1025-4, which includes a logo or avatar representing the Backpackers group and an icon indicating that the video call application is being used to provide the video call with the Backpackers group. Computer system 1000 detects input 1030-1 selecting notification 1025 and, in response, initiates the transfer of the video call from Jane's device 600B to computer system 1000, as depicted in FIGS. 10D and 10E.

As a part of initiating the transfer of the video call to computer system 1000, computer system 1000 displays video call interface 1032, as shown in FIG. 10D. Video call interface 1032 is a user interface of a video call application that is used to provide the video call at computer system 1000. In some embodiments, the video call application at computer system 1000 is the same video call application that is used at Jane's device 600B. Before the video call is transferred to computer system 1000, video call interface 1032 includes camera preview 1034, showing the video feed from computer system camera 1000-2 before the video call is transferred from Jane's device 600B to computer system 1000. Jane is centered in the field-of-view of camera 1000-2, as shown in camera preview 1034, and is partly outside the field-of-view of phone camera 600-2B, as shown in self view 1015 at Jane's device 600B. Video call interface 1032 also includes video call controls region 1036, which provides information associated with the video call and includes control options for controlling operations, parameters, and/or settings of a video call. Before the video call is transferred to computer system 1000, computer system 1000 displays controls region 1036 having countdown 1038, which automatically updates to indicate the number of seconds remaining until the video call is transferred to computer system 1000. In some embodiments, countdown 1038 can be selected to cancel the process for transferring the video call from Jane's device 600B to computer system 1000. In some embodiments, countdown 1038 can be selected to immediately transfer the video call to computer system 1000 (without having to wait for the countdown to finish).

Video call controls region 1036 includes status region 1036-1, which includes status information associated with the video call and, in some embodiments, can be selected to display additional information about the video call. As depicted in FIG. 10D, status region 1036-1 currently indicates that two members of the Backpackers group (other than Jane) are participating in the video call. Controls region 1036 also includes various options that are selectable to control operations, parameters, and/or settings of the video call. For example, messages option 1036-2 is selectable to, in some embodiments, view a messages conversation between the participants of the Backpackers group. Speaker option 1036-3 is selectable to, in some embodiments, enable or disable the audio output for the video call (e.g., audio output at headphones 1003 or a speaker of computer system 1000). In some embodiments, speaker option 1036-3 can be selected to choose a different audio output device (e.g., headphones or tablet speakers) for the video call. Mic option 1036-4 is selectable to, in some embodiments, enable or disable microphone a microphone at computer system 1000, thereby muting or unmuting Jane's audio input for the video call. Camera option 1036-5 is selectable to, in some embodiments, enable or disable camera 1000-2, thereby enabling or disabling the video feed provided by camera 1000-2 for the video call. In some embodiments, camera option 1036-5 can be selected to select a different camera as the video source for the video call. Sharing option 1036-6 is selectable to, in some embodiments, access various options and settings for sharing content.

In some embodiments, video call interface 1032 includes one or more camera setting options 1040, which are selectable to enable or disable one or more camera and/or video settings using camera 1000-2 of computer system 1000. For example, camera option 1040-1 is a control for enabling or disabling a camera lighting effect, camera option 1040-2 is a control for enabling or disabling image blur settings, camera option 1040-3 is a control for enabling or disabling object tracking settings, and camera option 1040-4 is a control for selecting a camera of computer system 1000 for the video feed. In some embodiments, one or more of camera setting options 1040 are displayed in video call controls region 1036. In some embodiments, the controls provided in camera setting options 1040 is based on the capabilities of the camera(s) at computer system 1000 (e.g., camera 1000-2). In some embodiments, camera setting options 1040 include other controls such as, for example, a control for enabling a view of a surface detected in the field-of-view of a camera (e.g., camera 1000-2). In some embodiments, one or more of camera setting options 1040 can be selected to modify the camera preview 1034 so that Jane can apply desired camera or video effects before the video call is transferred to computer system 1000. In some embodiments, camera setting options 1040 can be selected after the video call has been transferred to computer system 1000.

FIG. 10D also depicts John's computer system 1050, which represents a device of a participant of the video call. In FIG. 10D, John's computer system 1050 displays, via display 1050-1, video call interface 1042, which is a user interface for a video call application at John's computer system and includes video tiles 1043-1 and 1043-2, self view 1044, and video call controls region 1046. Video tile 1043-1 shows Ryan's video feed 1043-1a and video tile 1043-2 shows Jane's video feed 1043-2a, which is the video feed provided from camera 600-2B of Jane's device 600B. Self view 1044 shows John's video feed, provided by camera 1050-2 of John's computer system 1050. Video call interface 1042 is similar to video call interface 1032, and video call controls region 1046 is similar to video call controls region 1036.

At the end of countdown 1038, the video call is automatically transferred from Jane's device 600B to computer system 1000, as shown in FIG. 10E. When the video call is transferred from Jane's device 600B to computer system 1000, headphones 1003 are automatically disconnected from device 600B and connected to computer system 1000 so that the audio connection is seamlessly transitioned with the video call without requiring Jane to manually connect the headphones at computer system 1000. Jane's device 600B ceases displaying video call interface 1010 and displays home screen 1047 with notification 1048, informing Jane that the video call was transferred to computer system 1000. Notification 1048 includes option 1048-1, which can be selected to transfer the video call back to Jane's device 600B. In some embodiments, Jane's device 600B automatically ceases to display notification 1048 after a predetermined amount of time or in response to an input (e.g., a tap or swipe gesture) to dismiss the notification. In some embodiments, Jane's device 600B ceases to display notification 1048 (and similar notifications) if the device is moved outside of boundary 1005 (thereby breaking the criteria for transferring the real-time communication session).

When the video call is transferred to computer system 1000, computer system 1000 displays video call interface 1032 having video tiles 1033-1 and 1033-2 and self view 1035. Video tile 1033-1 shows Ryan's video feed 1033-1a and video tile 1033-2 shows John's video feed 1033-2a. Self view 1035 shows Jane's video feed, which is provided by camera 1000-2 of computer system 1000. Countdown 1038 is replaced by leave option 1036-7, which is selectable to, in some embodiments, cause computer system 1000 to leave the video call, optionally without terminating the video call for other participants of the call. In the embodiments depicted in FIGS. 10D and 10E, the video call remains active at Jane's device 600B until it is transferred to computer system 1000. In some embodiments, however, the video call is terminated at Jane's device 600B before the video call is established using computer system 1000. In some embodiments, the video call is established using computer system 1000, while the original video call is still active at Jane's device 600B.

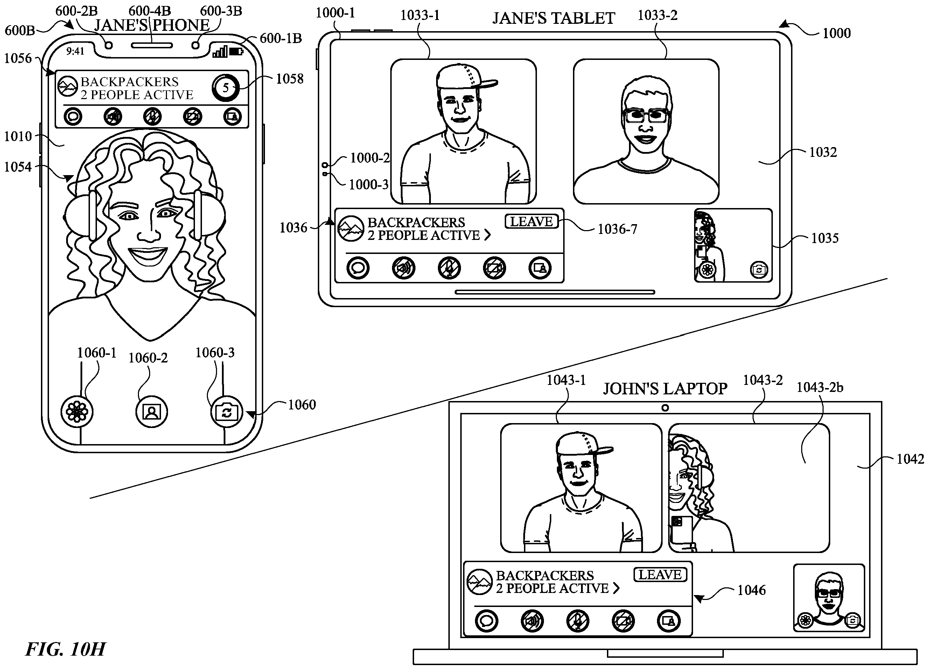

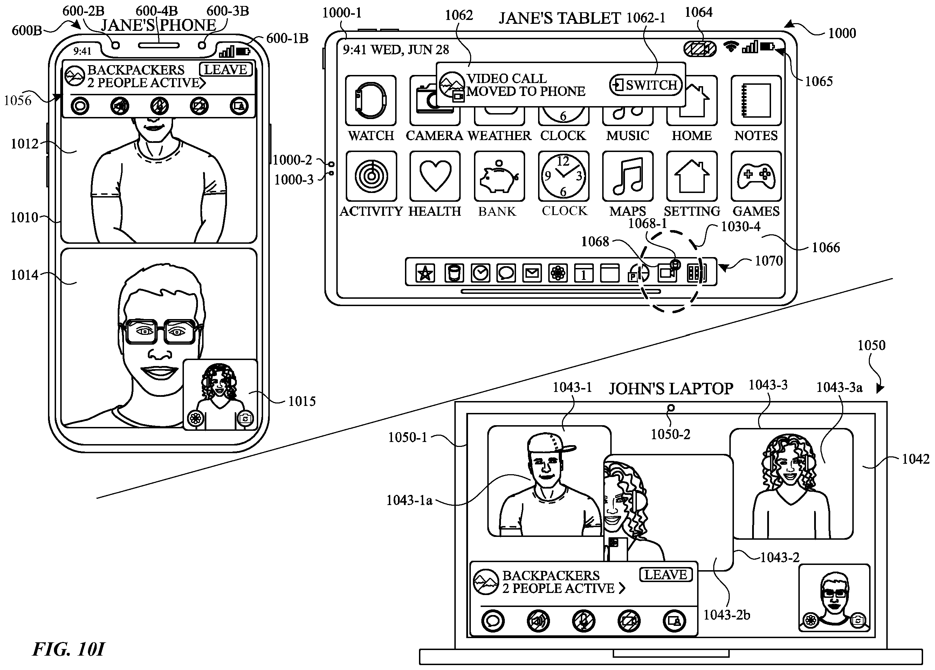

In the embodiment depicted in FIGS. 10D and 10E, the transfer of the video call is represented at a participant's device (e.g., John's computer system 1050) by replacing the video feed in Jane's video tile, without displaying an additional video tile or removing the video tile that was displayed before the transfer. For example, as shown in FIG. 10E, John's computer system 1050 continues to display video call interface 1042 with Jane's video tile 1043-2. However, instead of showing Jane's tile with video feed 1043-2a, which is the video feed from Jane's device 600B, Jane's video tile 1043-2 includes video feed 1043-2b, which is the video feed from Jane's computer system 1000. In some embodiments, the transfer is displayed differently at a participant's device depending on whether certain criteria are met. For example, when the transfer of the video call is authenticated (e.g., the video call is being transferred between two devices belonging to Jane, the devices are both signed into Jane's account, or are otherwise authorized to be used by Jane), the transfer is depicted by replacing the video feed in the video tile, as shown in FIGS. 10D and 10E. In some embodiments, the authentication of the transfer may be more critical for situations where a participant is on the video call, but has not enabled their video feed and, thus, other participants are unable to visually verify that the transfer of the video feed was associated with the same person. However, if the criteria are not met, the transfer of the video call is represented at a participant's device by displaying a new tile with the new video feed. An example of such a transfer is depicted in FIGS. 10H and 10I and described in greater detail below.

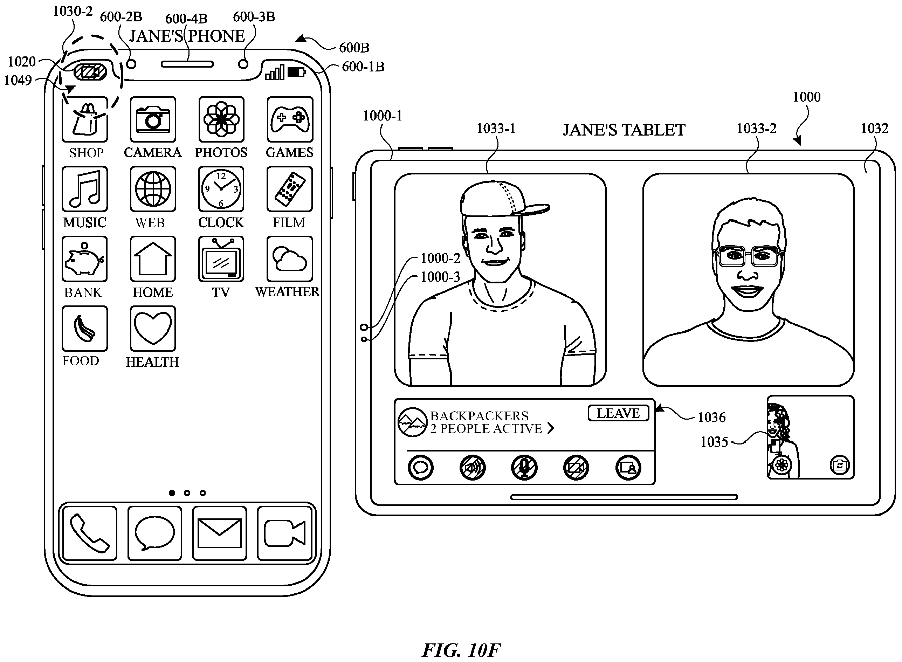

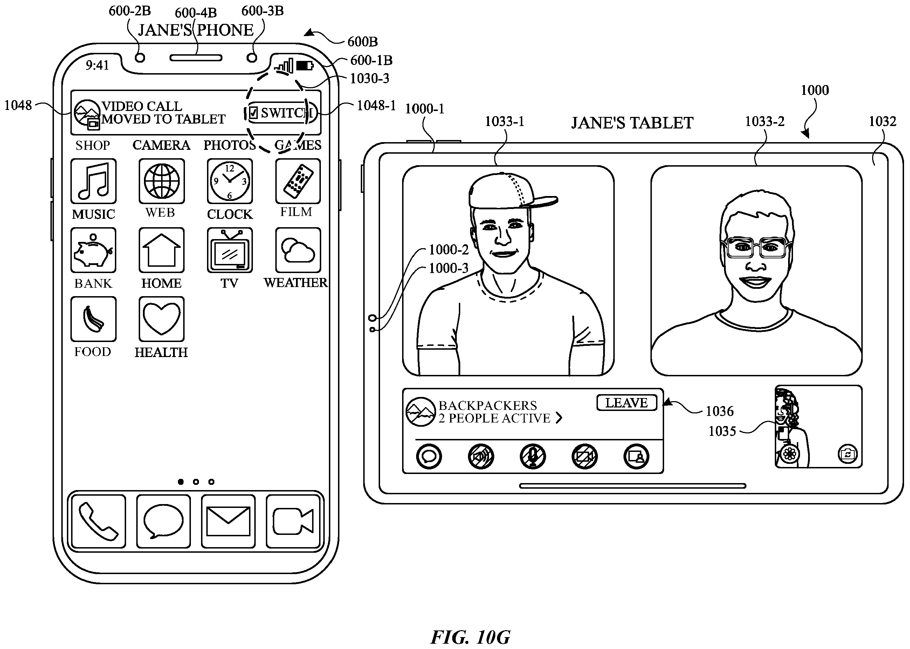

FIGS. 10F-10H depict user interfaces for embodiments in which Jane transfers the video call back to Jane's device 600B. In FIG. 10F, Jane selects pill 1020 via input 1030-2, while the video call is still being provided at computer system 1000. Pill 1020 is displayed in status region 1049 of Jane's device 600B, which provides status information for device 600B such as, for example, battery life, connection status information, and signal strength. In response to detecting input 1030-2, Jane's device 600B redisplays notification 1048, as shown in FIG. 10G. Jane then selects option 1048-1 via input 1030-3, which initiates the transfer of the video call from computer system 1000, back to Jane's device 600B.

In FIG. 10H, Jane's device 600B displays video call interface 1010 with camera preview 1054, showing the video feed from Jane's device camera 600-2B before the video call is transferred from computer system 1000 to Jane's device 600B. The interface depicted on Jane's device 600B in FIG. 10H is analogous to the interface depicted on computer system 1000 in FIG. 10D. For example, Jane's device 600B displays video call controls region 1056, which is similar to controls region 1036 and includes countdown 1058 (similar to countdown 1038). In some embodiments, countdown 1058 can be selected to cancel the process for transferring the video call from computer system 1000 to Jane's device 600B. In some embodiments, countdown 1058 can be selected to immediately transfer the video call to Jane's device 600B (without having to wait for the countdown to finish). Jane's device 600B also displays camera setting options 1060, which are analogous to camera setting options 1040 and can be selected to enable or disable one or more camera and/or video settings using camera 600-2B of Jane's device 600B. For example, camera option 1060-1 is a control for enabling or disabling a camera lighting effect, camera option 1060-2 is a control for enabling or disabling image blur settings, and camera option 1060-3 is a control for selecting a camera of Jane's device 600B for the video feed. In some embodiments, one or more of camera setting options 1060 are displayed in video call controls region 1056. In some embodiments, the controls provided in camera setting options 1060 is based on the capabilities of the camera(s) at Jane's device 600B (e.g., camera 600-2B). In some embodiments, camera setting options 1060 include other controls such as, for example, a control for enabling or disabling object tracking settings and/or control for enabling a view of a surface detected in the field-of-view of a camera (e.g., camera 600-2B). In some embodiments, one or more of camera setting options 1060 can be selected to modify the camera preview 1054 so that Jane can apply desired camera or video effects before the video call is transferred to Jane's device 600B. In some embodiments, camera setting options 1060 can be selected after the video call has been transferred to Jane's device 600B. In some embodiments, Jane's device 600B displays controls region 1056 in response to a selection of pill 1020. In some embodiments, controls region 1056 is similar to control region 615B.

At the end of countdown 1058, the video call is automatically transferred from computer system 1000 to Jane's device 600B, as shown in FIG. 10I. Jane's device 600B displays video call interface 1010 with video tiles 1012 and 1014, and self view 1015. When the video call is transferred to Jane's device 600B, headphones 1003 are automatically disconnected from computer system 1000 and connected to Jane's device 600B so that the audio connection is seamlessly transitioned with the video call without requiring Jane to manually connect the headphones at Jane's device 600B. Computer system 1000 ceases displaying video call interface 1032 and displays notification 1062 (similar to notification 1048), informing Jane that the video call was transferred to Jane's device 600B. Notification 1062 includes option 1062-1, which can be selected to transfer the video call back to computer system 1000 (similar to the selection of option 1048-1). In some embodiments, computer system 1000 automatically ceases to display notification 1062 after a predetermined amount of time or in response to an input (e.g., a tap or swipe gesture) to dismiss the notification. After ceasing to display video call interface 1032, computer system displays home screen 1066 with video call application icon 1068 displayed in application dock region 1070. Computer system 1000 displays indicator 1068-1 on video call application icon 1068 to indicate that a video call was recently provided using the video call application. Computer system 1000 also displays pill 1064 in status region 1065 to indicate that the video call can be transferred to computer system 1000. In some embodiments, computer system 1000 displays pill 1064 after dismissing notification 1062. In some embodiments, pill 1064 can be selected to display notification 1062 with option 1062-1. Status region 1065 is a region that includes status information for computer system 1000 such as, for example, current time, connection status information, signal strength, and battery life.

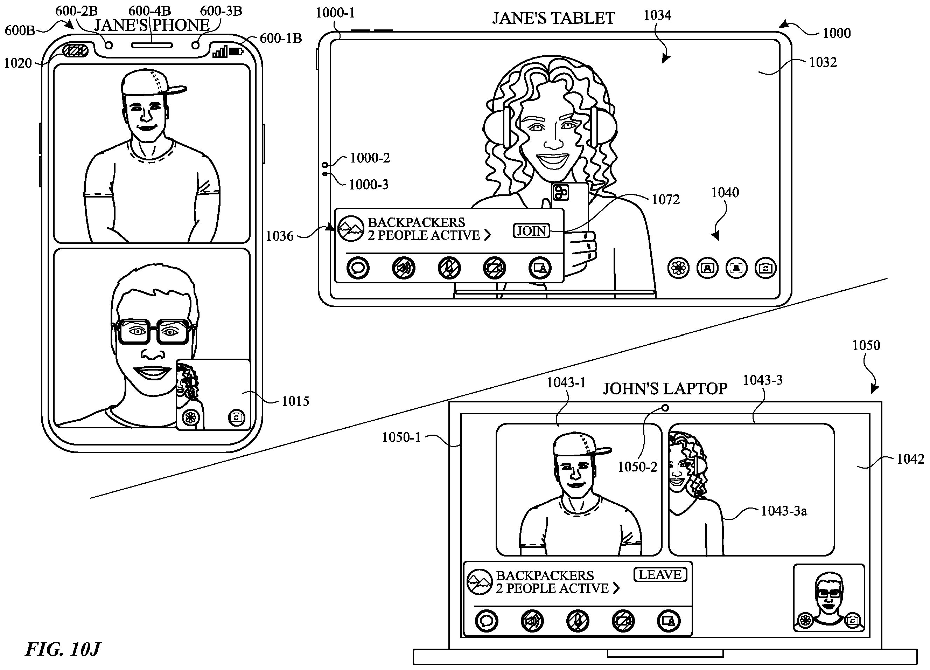

In the embodiment depicted in FIGS. 10H and 10I, the transfer of the video call is represented at a participant's device (e.g., John's computer system 1050) by adding a new tile with a new video feed from the device to which the video call is being transferred. For example, in FIG. 10H, John's computer system 1050 is shown with Jane's video tile 1043-2 including video feed 1043-2b (the video feed from computer system camera 1000-2) before the video call is transferred from computer system 1000 to Jane's device 600B. When the video call is transferred to Jane's device 600B in FIG. 10I, John's computer system 1050 displays new video tile 1043-3 including video feed 1043-3a, which is the video feed from camera 600-2B of Jane's device 600B. John's computer system 1050 displays new video tile 1043-3 concurrently with Jane's previously displayed video tile 1043-2. In some embodiments, after the transfer of the video call is complete, John's computer system 1050 ceases to display Jane's previous video tile 1043-2, as shown in FIG. 10J. Although the transfer of the video call is shown on John's computer system 1050 by displaying additional video tile 1043-3, the transfer can be shown by replacing the video feed in video tile 1043-2 (without displaying new video tile 1043-3), similar to as shown in FIGS. 10D and 10E.

Referring again to computer system 1000 in FIG. 10I, the video call can be transferred back to computer system 1000 by selecting option 1062-1 or using video call interface 1032. For example, in response to detecting input 1030-4 on video call application icon 1068, computer system 1000 displays video call interface 1032, as shown in FIG. 10J. Video call interface 1032 is similar to the configuration depicted in FIG. 10D, but instead of displaying countdown 1038, computer system displays join option 1072, which can be selected to transfer the video call from Jane's device 600B to computer system 1000 in a manner similar to that described above with respect to FIG. 10D.

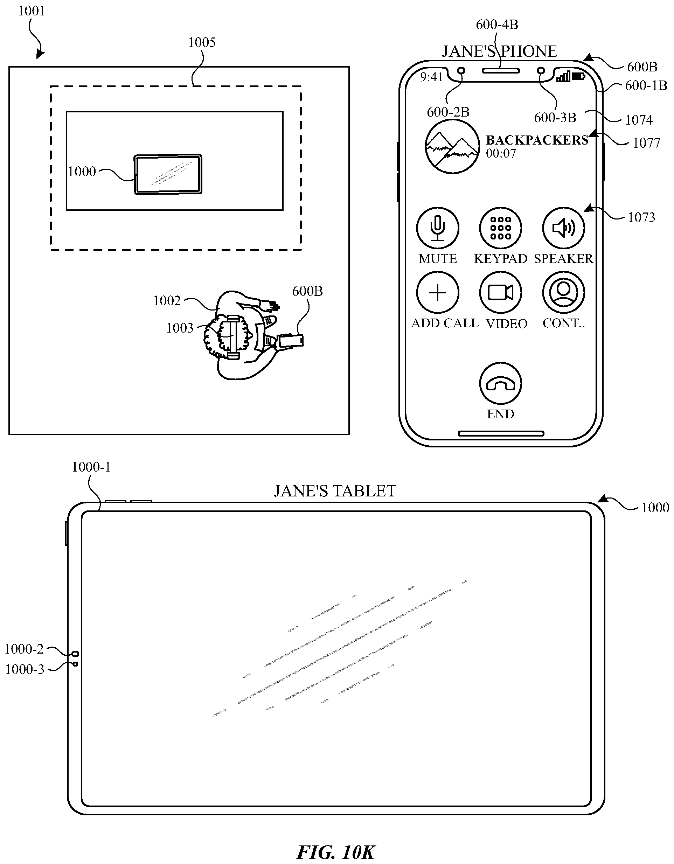

FIGS. 10A-10J depict example user interfaces for various embodiments in which the real-time communication session being transferred between Jane's device 600B and computer system 1000 is a video call. It should be appreciated, however, that the real-time communication session can be an audio call. FIGS. 10K-10N depict example user interfaces for various embodiments in which an audio call is transferred between Jane's device 600B and computer system 1000. The embodiments depicted in FIGS. 10K-10N are similar to those depicted in FIGS. 10A-10J, but with the real-time communication session being an audio call instead of a video call. For the sake of brevity, details are not repeated. Therefore, unless specifically indicated otherwise, aspects of the audio call transfer are analogous to corresponding aspects of the video call transfer.

In FIG. 10K, Jane 1002 is standing in environment 1001, similar to that shown in FIG. 10A. Jane 1002 is participating in an audio call with the Backpackers group using Jane's device 600B, as shown by audio call interface 1074 displayed on Jane's device 600B. Audio call interface 1074 is a user interface for an audio call application (e.g., a phone application) at Jane's device 600B. In the embodiment depicted in FIG. 10K, audio call interface 1074 includes audio controls 1073 and information 1077 about the call such as the name of the participants and the current duration of the call. Audio controls 1073 provide options for controlling various aspects of the audio call such as options to mute the call, display a keypad, enable a speaker, choose a different audio output source, add additional participants to the call, enable a video channel, view a contacts interface, and/or end the call. Similar to the embodiment in FIG. 10A, Jane's device 600B is not within boundary 1005, therefore computer system 1000 is inactive, as shown in FIG. 10K.

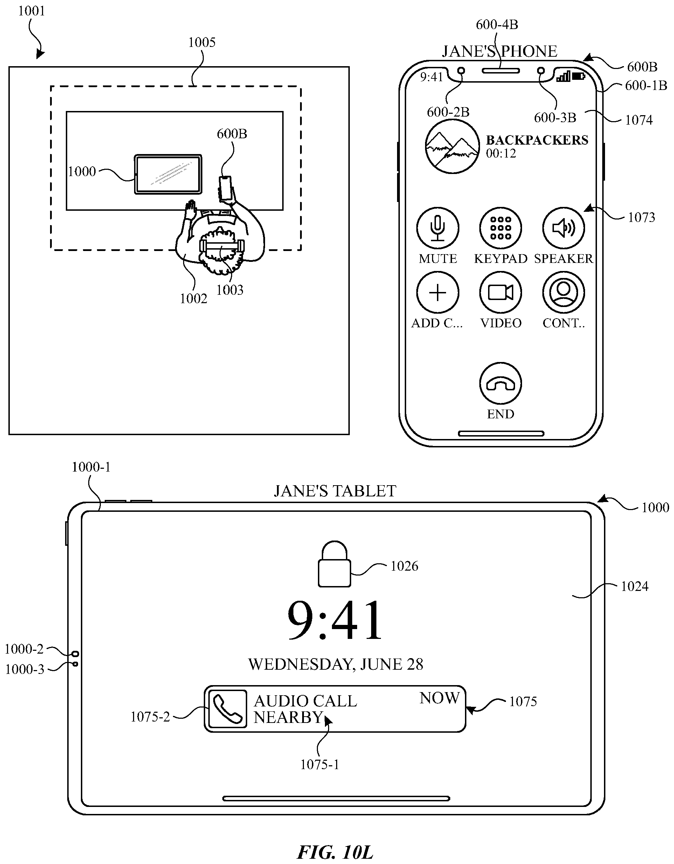

In FIG. 10L, Jane moves Jane's device 600B to a location near computer system 1000, similar to that discussed above with respect to FIG. 10B. Because the criteria are met for transferring the audio call to computer system 1000, computer system 1000 displays notification 1075 on lock screen interface 1024. Notification 1075 is similar to notification 1025 and includes text 1075-1 and indicator 1075-2. Text 1075-1 indicates that an audio call was detected near computer system 1000, and indicator 1075-2 represents an audio call application that can be used to provide the audio call.

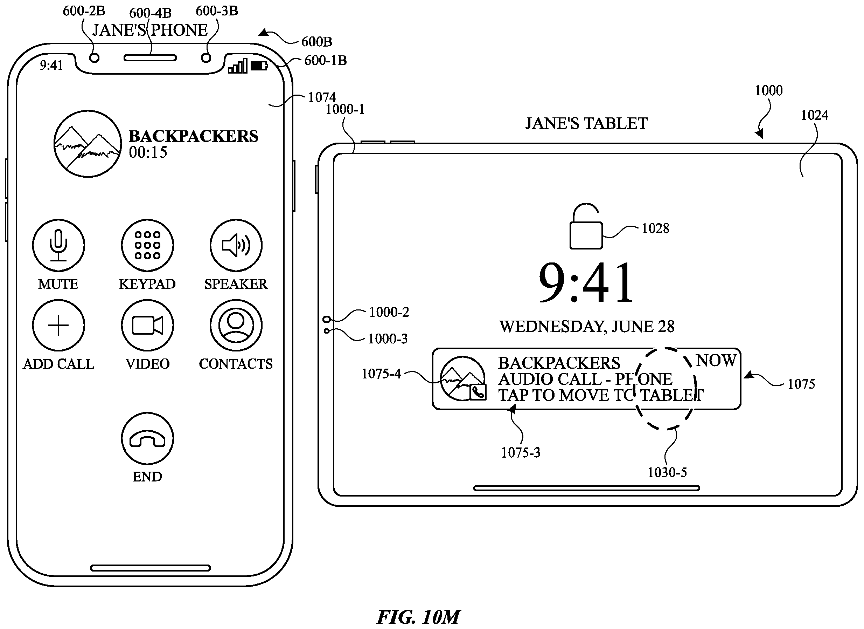

In FIG. 10M, Jane unlocks computer system 1000 and computer system 1000 updates notification 1075 to include additional details about the audio call. For example, computer system 1000 displays text 1075-3 indicating that the audio call is ongoing at Jane's phone with the Backpackers group, and that Jane can tap on notification 1075 to transfer the audio call to computer system 1000. Notification 1075 also includes indicator 1075-4, which includes a logo or avatar representing the Backpackers group and an icon indicating that the audio call application is being used to provide the audio call with the Backpackers group. Computer system 1000 detects input 1030-5 selecting notification 1027 and, in response, initiates the transfer of the audio call from Jane's device 600B to computer system 1000, as depicted in FIG. 1 ON.

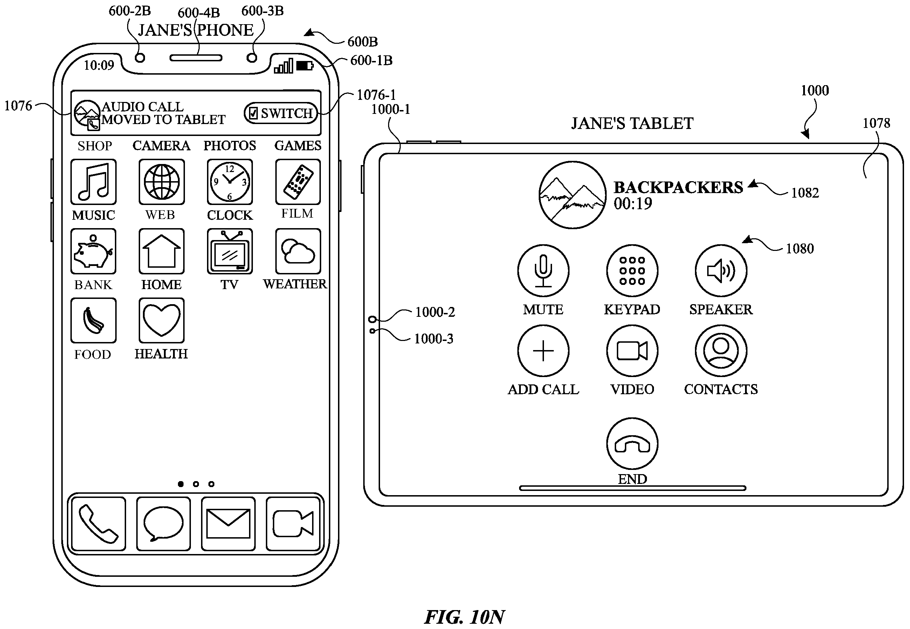

When the audio call is transferred to computer system 1000, computer system 1000 displays audio call interface 1078, as shown in FIG. 10N. Audio call interface 1078 is a user interface of an audio call application that is used to provide the audio call at computer system 1000. In some embodiments, the audio call application at computer system 1000 is the same audio call application that is used at Jane's device 600B. Audio call interface includes audio controls 1080 (similar to audio controls 1073) for controlling various aspects of the audio call and information 1082 about the call such as the name of the participants and the current duration of the call.

When notification 1075 is selected, the audio call is transferred automatically and without a countdown or other intentional delay. This is contrary from the transfer of a video call, which includes an intentional delay so that a user can prepare the camera and video settings of the device to which the call is being transferred (as discussed above with respect to FIGS. 10D and 10H). Because a video feed is not included with the audio call, the user does not need to prepare video settings of computer system 1000 and, therefore, the call is transferred without intentional delay and without displaying a camera preview and related controls described above with respect to FIG. 10D.

When the call is transferred to computer system 1000, Jane's device 600B displays notification 1076, which is similar to notification 1048. Notification 1076 includes option 1076-1, which can be selected to transfer the audio call back to Jane's device 600B. Again, because the audio call does not include a video component, the audio call is transferred to Jane's device 600B without intentional delay and without displaying the camera preview and related controls described above with respect to FIG. 1 OH.

It should be appreciated that the audio call can be transferred between Jane's device 600B and computer system 1000 in a manner analogous to that described above with respect to FIGS. 10E-10J, but without including an intentional delay or displaying interfaces for a video component. For example, option 1076-1 can be selected to transfer the audio call from computer system 1000 to Jane's device 600B. In some embodiments, when the call is transferred from computer system 1000, the computer system displays a notification that includes an option similar to option 1076-1 for transferring the audio call back to computer system 1000. Additionally, the connection of headphones 1003 is transferred between the devices when the audio call is transferred in a manner similar to that described above.

FIG. 11 is a flow diagram illustrating a method for managing transfer of a real-time communication session using a computer system, in accordance with some embodiments. Method 1100 is performed at a computer system (e.g., 100, 300, 500, 600, 1000, and/or 1050) (e.g., a smartphone, a tablet, a desktop, laptop computer, and/or a head-mounted device (e.g., a head-mounted augmented reality and/or extended reality device)) that is in communication with (e.g., includes and/or is connected to) one or more display generation components (e.g., 600-1, 1000-1, and/or 1050-1) (e.g., a display controller, a touch-sensitive display system, a speaker, a bone conduction audio output device, a tactile output generator, a projector, a holographic display, and/or a head-mounted display system) and one or more cameras (e.g., 600-2, 1000-2, and/or 1050-2) (e.g., an infrared camera, a depth camera, a visible light camera, and/or one or more optical sensors). Some operations in method 1100 are, optionally, combined, the orders of some operations are, optionally, changed, and some operations are, optionally, omitted.

As described below, method 1100 provides an intuitive way for managing transfer of a real-time communication session. The method reduces the cognitive burden on a user for managing transfer of a real-time communication session, thereby creating a more efficient human-machine interface. For battery-operated computing devices, enabling a user to manage transfer of a real-time communication session faster and more efficiently conserves power and increases the time between battery charges.

At method 1100, while the computer system (e.g., 1000 or 600B) (e.g., a smartphone, a tablet, a desktop, laptop computer, and/or a head-mounted device (e.g., a head-mounted augmented reality and/or extended reality device)) is associated with a respective user account (e.g., the computer system is logged into the respective user account and/or is being operated by a user associated with the respective user account), the computer system receives (1102) first data indicating whether a first external computer system (e.g., 600B or 1000) (e.g., that is different from the computer system) meets a first set of criteria, wherein the first set of criteria is met when the first external computer system is located within a threshold distance (e.g., 1005) of the computer system (e.g., a physical or measurable distance such as 1 foot, 2 feet, 3 feet, 5 feet, 10 feet, 15 feet, or 20 feet; and/or a distance based on a strength of a wireless connection between the computer system and the first external computer system), the first external computer system is associated with the respective user account (e.g., the first external computer system is logged into the respective user account and/or is being operated by the user associated with the respective user account), and the first external computer system is in a real-time communication session (e.g., a communication session in which a live audio feed and/or a live video feed is communicated with a second external computer system) with a second external computer system (e.g., 1050) (e.g., that is different from the computer system and the first external computer system, and/or is associated with (e.g., being operated by and/or logged into a user account associated with) a remote user).

After (or, optionally, in response to) receiving the first data and in accordance with a determination that the first data indicates that the first external computer system (e.g., 600B or 1000) meets the first set of criteria, the computer system (e.g., 1000 or 600B) displays (1104), via the one or more display generation components (e.g., 1000-1 or 600-1B) (e.g., a display controller, a touch-sensitive display system, a speaker, a bone conduction audio output device, a tactile output generator, a projector, a holographic display, and/or a head-mounted display system), a respective user interface (e.g., 1010, 1024, 1032, 1047, or 1066) (e.g., an existing user interface, a new user interface, a graphical user interface object, a banner, a notification, a camera preview, and/or a self view) that includes a user interface object (e.g., 1020, 1025, 1038, 1048, 1048-1, 1058, 1062, 1062-1, 1064, 1068, 1068-1, 1072, 1075, 1076, or 1076-1) (e.g., a selectable user interface object such as a graphical element, icon, text, banner, affordance, and/or notification) that is selectable (e.g., in response to a set of one or more inputs directed to the respective user interface and/or the user interface object) to initiate a process for joining (e.g., causing the computer system to join) the real-time communication session with the second external computer system (e.g., 1050) (e.g., transferring the real-time communication session to the computer system, optionally while disconnecting the first external computer system from the real-time communication session).

In some embodiments, the process for joining the real-time communication session with the second external computer system (e.g., 1050) includes launching an application at the computer system (e.g., 1000 or 600B) for joining the real-time communication session. In some embodiments, the computer system joins the real-time communication session by a handoff of the real-time communication session from the first external computer system (e.g., 600B or 1000) to the computer system. In some embodiments, the computer system joins the real-time communication session using a new connection at the computer system (e.g., created by a server). In some embodiments, after the computer system joins the real-time communication session, the prior connection at the first external computer system is severed (e.g., by a server, the computer system, and/or the first external computer system).

Displaying the respective user interface includes, in accordance with a determination that the real-time communication session includes a live video feed (e.g., 1012, 1014, and/or 1015) (e.g., the live video feed is enabled and/or the real-time communication session includes a video call), displaying (1106) a representation (e.g., 1034 or 1054) of a field-of-view (e.g., a self view and/or a camera preview) of the one or more cameras (e.g., 1000-2 or 600-2B) (e.g., the camera of the computer system, a camera that is integrated into the computer system, a camera that is integrated into a monitor or display generation component of the computer system, and/or a camera that is connected to the computer system via a wired connection) (e.g., without including a representation (e.g., 1015) of a field-of-view of a camera (e.g., 600-2B) of the first external computer system and/or without including a representation (e.g., 1033-1 or 1033-2) of a field-of-view of a camera (e.g., 1050-2) of the second external computer system). Displaying the representation of the field-of-view of the one or more cameras in accordance with a determination that the real-time communication session includes a live video feed provides feedback about a state of the computer system (e.g., a state in which a video feed will be provided using the one or more cameras), which provides improved visual feedback and provides improved security and/or privacy by informing a user about the transmission of video information to a remote computer system. In some embodiments, the representation of a field-of-view of the one or more cameras is displayed while the real-time communication session is active at the first external computer system (e.g., and before the real-time communication session is transferred to, or active at, the computer system).

In some embodiments, in response to receiving the first data and in accordance with a determination that the first data indicates that the first external computer system (e.g., 600B or 1000) is not in a real-time communication session with a second external computer system (e.g., 1050) (and, therefore, does not meet the first set of criteria), the computer system (e.g., 1000 or 600B) forgoes displaying the respective user interface (e.g., 1010, 1024, 1032, 1047, or 1066) that includes the user interface object (e.g., 1020, 1025, 1038, 1048, 1048-1, 1058, 1062, 1062-1, 1064, 1068, 1068-1, 1072, 1075, 1076, or 1076-1) that is selectable to initiate a process for joining the real-time communication session with the second external computer system. Forgoing displaying the respective user interface that includes the user interface object that is selectable to initiate a process for joining the real-time communication session with the second external computer system in response to receiving the first data and in accordance with a determination that the first data indicates that the first external computer system is not in a real-time communication session with a second external computer system reduces computational workload of the computer system by forgoing displaying content, which performs an operation when a set of conditions has been met without requiring further user input. In some embodiments, the computer system displays the respective user interface and forgoes displaying the user interface object that is selectable to initiate a process for joining the real-time communication session with the second external computer system.

In some embodiments, displaying the respective user interface that includes the user interface object that is selectable to initiate a process for joining the real-time communication session with the second external computer system (e.g., 1050) includes, in accordance with a determination that the real-time communication session is provided using a first application (e.g., a video call application), displaying the user interface object as a first user interface object (e.g., 1020, 1025, 1038, 1048, 1048-1, 1058, 1062, 1062-1, 1064, 1068, 1068-1, and/or 1072) (e.g., a user interface object associated with the video call application). In some embodiments, displaying the respective user interface that includes the user interface object that is selectable to initiate a process for joining the real-time communication session with the second external computer system includes, in accordance with a determination that the real-time communication session is provided using a second application different from the first application (e.g., an audio call application), displaying the user interface object as a second user interface object (e.g., 1075, 1076, and/or 1076-1) different from the first user interface object (e.g., a user interface object associated with the audio call application). Displaying the user interface object as a first or second user interface object in accordance with a determination that the real-time communication session is provided using a first or second application causes the computer system to automatically display a user interface object that corresponds to the application used to provide the real-time communication session without requiring user input, which performs an operation when a set of conditions has been met without requiring further user input.

In some embodiments, displaying the respective user interface that includes the user interface object that is selectable to initiate a process for joining the real-time communication session with the second external computer system (e.g., 1050) includes, in accordance with a determination that the one or more display generation components (e.g., 1000-1) is in a first state (e.g., a low-power, passive, sleep, dimmed, locked, and/or display disabled state) (e.g., when the first data is received), displaying the user interface object as a notification (e.g., 1025 or 1075) of an event at the computer system (e.g., 1000 or 600B) (e.g., a banner, alert, and/or selectable graphical element that notifies a user of the computer system of an event at the computer system such as the receipt of first data indicating that the first external computer system (e.g., 600B or 1000) meets the first set of criteria). Displaying the user interface object as a notification of an event at the computer system in accordance with a determination that the one or more display generation components is in the first state when the first data is received provides feedback about a state of the computer system (e.g., a state in which the computer system has received the first data indicating whether the first external computer system meets the first set of criteria), which provides improved visual feedback, and enables the computer system to initiate a process for joining the real-time communication session without displaying additional controls, which provides additional control options without cluttering the user interface. In some embodiments, the computer system displays the user interface object as a notification if the computer system and/or display generation component is in a locked state. In some embodiments, the display generation component transitions from the first state to a second state (e.g., as shown in FIG. 10B or 10L) (e.g., an active, full-power, awake, unlocked, always-on, and/or display enabled state) after receiving the first data (e.g., if the first data indicates that the first external computer system meets the first set of criteria).

In some embodiments, displaying the user interface object as a notification (e.g., 1025 or 1075) of an event at the computer system (e.g., 1000 or 600B) includes, in accordance with a determination that the first state is an unlocked state (e.g., as shown in FIG. 10C and/or 10M) (e.g., the computer system and/or the one or more display generation components is unlocked and/or enabled), displaying the notification with first information (e.g., 1025-3, 1025-4, 1075-3, and/or 1075-4) about the real-time communication session (e.g., an indication of an application used for the real-time communication session, an indication of one or more participants of the real-time communication session, instructions for joining the real-time communication session, and/or an indication of the type of real-time communication). In some embodiments, displaying the user interface object as a notification of an event at the computer system (e.g., 1000 or 600B) includes, in accordance with a determination that the first state is a locked state (e.g., as shown in FIG. 10B and/or 10L) (e.g., the computer system and/or the one or more display generation components is locked and/or disabled), displaying the notification without the first information about the real-time communication session (e.g., displaying the notification with different information (e.g., 1025-1, 1025-2, 1075-1, and/or 1075-2), with a subset of the first information, and/or without the first information). Displaying the notification with the first information about the real-time communication session when the computer system is in an unlocked state, and displaying the notification without the first information when the computer system is in a locked state, provides improved privacy and/or security by omitting the first information unless the computer system is unlocked. In some embodiments, after the notification is displayed without the first information about the real-time communication session, the computer system transitions from the locked state to the unlocked state (e.g., a second state) and updates the notification to include the first information about the real-time communication session (e.g., as shown in FIG. 10C and/or 10M).

In some embodiments, the computer system (e.g., 1000 or 600B) displaying the respective user interface (e.g., 1010, 1024, or 1032) includes, in accordance with a determination that the respective user interface is a first type of user interface (e.g., 1047 or 1066) (e.g., a home screen, desktop, and/or an application user interface), displaying the user interface object (e.g., 1020 or 1064) in a region (e.g., 1049 or 1065) (e.g., a status region) of the respective user interface that provides status information for the computer system (e.g., a region that includes graphical elements that indicate status information for the computer system such as battery life, signal strength, connectivity information, and/or the current time). Displaying the user interface object in the region of the respective user interface that provides status information for the computer system in accordance with a determination that the respective user interface is the first type improves the user experience by moving the user interface object to a location that does not obstruct the user's view of the respective user interface when the respective user interface is the first type of user interface, which provides additional control options without cluttering the user interface. In some embodiments, the home screen and/or desktop is a displayed user interface (e.g., user interface 400) that includes user interface objects corresponding to respective applications. When a user interface object is activated, the computer system displays the respective application corresponding to the activated user interface object. In some embodiments, the application user interface is a user interface for a respective application operating at the computer system. In some embodiments, the user interface object has a first appearance (e.g., a pill) when displayed in the status region of the respective user interface. In some embodiments, the user interface object has a second appearance that is different from the first appearance (e.g., a notification) when the user interface object is displayed at a location different from the status region of the respective user interface. In some embodiments, the user interface object is displayed at a location different from the status region when the respective user interface is not the first type of user interface (e.g., a lock screen, a notification screen, a wake screen, and/or an unlock screen). In some embodiments, the user interface object is displayed in the status region when the respective user interface is the first type and the computer system is a first type of device (e.g., a smartphone or tablet). In some embodiments, the user interface object is not displayed in a status region when the respective user interface is the first type and the computer system is a second type of device (e.g., a laptop or tablet).

In some embodiments, the computer system (e.g., 1000) displaying the respective user interface includes, in accordance with a determination that the respective user interface is a second type of user interface (e.g., 1066) (e.g., a home screen, desktop, and/or an application user interface), displaying the user interface object (e.g., 1068 and/or 1068-1) in a region (e.g., 1070) (e.g., a visually distinguished region) of the respective user interface that includes a plurality of application icons (e.g., 1068) for launching respective applications (e.g., an application dock region). Displaying the user interface object in the region of the respective user interface that includes a plurality of application icons for launching respective applications in accordance with a determination that the respective user interface is the second type improves the user experience by moving the user interface object to a location that does not obstruct the user's view of the respective user interface when the respective user interface is the second type of user interface, which provides additional control options without cluttering the user interface. In some embodiments, the user interface object has a first appearance (e.g., an indicator for an application icon) when displayed in the application dock region. In some embodiments, the user interface object has a second appearance that is different from the first appearance (e.g., a notification) when the user interface object is displayed at a location different from the application dock region of the respective user interface. In some embodiments, the user interface object is displayed at a location different from the application dock region when the respective user interface is not the second type of user interface (e.g., a lock screen, a notification screen, a wake screen, and/or an unlock screen). In some embodiments, the user interface object is displayed in the application dock region when the respective user interface is the second type and the computer system is a first type of device (e.g., a laptop or tablet). In some embodiments, the user interface object is not displayed in an application dock region when the respective user interface is the second type and the computer system is a second type of device (e.g., a smartphone).

In some embodiments, the representation (e.g., 1034 or 1054) of the field-of-view of the one or more cameras is displayed in response to receiving a selection (e.g., 1030-1, 1030-3, or 1030-4) of the user interface object (e.g., 1025, 1038, 1048-1, 1062-1, 1068, and/or 1068-1) (e.g., a set of one or more inputs that includes a selection of the user interface object). Displaying the representation of the field-of-view of the one or more cameras in response to receiving a selection of the user interface object provides improved privacy and/or security by hiding the representation of the field-of-view of the one or more cameras until the user initiates the process for joining the real-time communication session. In some embodiments, the user interface object is a notification and the computer system (e.g., 1000 or 600B) displays the representation of the field-of-view of the one or more cameras in response to a selection of the notification.

In some embodiments, the computer system (e.g., 1000 or 600B) displaying the respective user interface (e.g., 1010 or 1032) includes displaying a set of one or more video setting options (e.g., 1040 or 1060) (e.g., selectable options, buttons, icons, affordances, and/or graphical elements) associated with video settings (e.g., image blur settings (e.g., background blur and/or foreground blur), image lighting settings, object tracking settings (e.g., adjusting a displayed camera field-of-view to maintain display of a person, object, and/or surface), camera selection settings, and/or camera enable/disable settings) for the real-time communication session. Displaying the set of one or more video settings options associated with video settings for the real-time communication session reduces the number of inputs needed to modify video settings for the real-time communication session, which reduces the number of inputs needed to perform an operation. In some embodiments, the video setting options are selectable via one or more inputs to display, modify, edit, enable, and/or disable one or more video settings for the real-time communication session.

In some embodiments, the representation of the field-of-view of the one or more cameras includes a view (e.g., 1034 or 1054) of a user of the computer system (e.g., 1000 or 600B) (e.g., a camera preview and/or a self view) prior to the computer system joining the real-time communication session with the second external computer system (e.g., 1050). Displaying the view of the user of the computer system prior to the computer system joining the real-time communication session with the second external computer system provides feedback about a state of the computer system (e.g., a state in which a video feed will be provided using the one or more cameras), which provides improved visual feedback and provides improved security and/or privacy by informing a user about the transmission of video information to a remote computer system. In some embodiments, the representation of the field-of-view of the one or more cameras is a preview of a video feed captured by the one or more cameras of the computer system that is displayed (e.g., in an application user interface) before the computer system has joined the real-time communication session with the second external computer system. In some embodiments, the representation of the field-of-view of the one or more cameras is a video feed captured by the one or more cameras of the computer system that is displayed while the computer system is participating in the real-time communication session with the second external computer system.

In some embodiments, the process for joining the real-time communication session with the second external computer system (e.g., 1050) includes, in accordance with a determination that a predetermined amount of time (e.g., three seconds, five seconds, or seven seconds) has elapsed (e.g., after displaying the representation of the field-of-view of the one or more cameras and/or after selection of the user interface object), automatically (e.g., without user input) joining the real-time communication session with the second external computer system (e.g., as shown in FIG. 10E and/or 10I). In some embodiments, the process for joining the real-time communication session with the second external computer system includes, in accordance with a determination that the predetermined amount of time has not elapsed, forgoing j oining the real-time communication session with the second external computer system (e.g., as shown in FIG. 10D and/or 10H) (e.g., while continuing to display the representation of the field-of-view of the one or more cameras). Automatically joining the real-time communication session with the second external computer system in accordance with a determination that the predetermined amount of time has elapsed, and forgoing joining the real-time communication session in accordance with a determination that the predetermined amount of time has not elapsed, provides improved security and/or privacy by providing a user of the computer system with an opportunity to prepare for (or cancel) the transition to using the computer system for the real-time communication session with the second external computer system.

In some embodiments, the computer system (e.g., 1000 or 600B) displaying the respective user interface (e.g., 1010 or 1032) includes displaying a countdown (e.g., 1038 or 1058) of an amount of time remaining until the predetermined amount of time will elapse. Displaying the countdown of the amount of time remaining until the predetermined amount of time will elapse provides feedback about a state of the computer system (e.g., a state in which a video feed will be provided using the one or more cameras), which provides improved visual feedback, and provides improved security and/or privacy by providing a user of the computer system with an opportunity to prepare for (or cancel) the transition to using the computer system for the real-time communication session with the second external computer system (e.g., 1050). In some embodiments, the process for joining the real-time communication session with the second external computer system can be cancelled during the countdown. For example, the computer system can detect an input (e.g., a selection of the displayed countdown, a selection of a cancel option, turning the computer system off, and/or closing the application providing the real-time communication session and/or shared-content session) before the time period elapses and, in response, terminate the process for joining the real-time communication session with the second external computer system.

In some embodiments, the representation (e.g., 1034 or 1054) of the field-of-view of the one or more cameras (e.g., 1000-2 or 600-2B) is displayed concurrently with the user interface object (e.g., 1038 or 1058) that is selectable to initiate the process for joining the real-time communication session with the second external computer system (e.g., 1050). Displaying the representation of the field-of-view of the one or more cameras concurrently with the user interface object that is selectable to initiate the process for joining the real-time communication session provides feedback about a state of the computer system (e.g., a state in which the computer system has not yet joined, but can be instructed to join, the real-time communication session with the second external computer system), which provides improved visual feedback. In some embodiments, in response to detecting a selection of the user interface object that is displayed concurrently with the representation of the field-of-view of the one or more cameras, the computer system (e.g., 1000) initiates the process for joining the real-time communication session with the second external computer system.

In some embodiments, the computer system (e.g., 1000 or 600B) is in communication with one or more input devices (e.g., 1000-1 or 600-1B) (e.g., a touch-sensitive surface, a keyboard, mouse, trackpad, one or more optical sensors for detecting gestures, one or more capacitive sensors for detecting hover inputs, and/or accelerometer/gyroscope/inertial measurement units). In some embodiments, the computer system receives, via the one or more input devices, a set of one or more inputs that includes a selection (e.g., 1030-1, 1030-2, 1030-3, 1030-4, and/or 1030-5) of the user interface object (e.g., 1020, 1025, 1038, 1048, 1048-1, 1058, 1062, 1062-1, 1064, 1068, 1068-1, 1072, 1075, 1076, or 1076-1). In some embodiments, in response to receiving the set of one or more inputs that includes the selection of the user interface object, the computer system joins the real-time communication session with the second external computer system (e.g., 1050) (in some embodiments, without displaying the representation of the field-of-view of the one or more cameras). Joining the real-time communication session with the second external computer system in response to receiving the set of one or more inputs that includes the selection of the user interface object causes the computer system to automatically join the real-time communication session with the second external computer system, which performs an operation when a set of conditions has been met without requiring further user input.

In some embodiments displaying the respective user interface includes, in accordance with a determination that the real-time communication session does not include video (e.g., the real-time communication session is an audio call), forgoing displaying the representation (e.g., 1034 or 1054) of the field-of-view of the one or more cameras (and, in some embodiments, automatically joining the real-time communication session in response to a selection of the user interface object). Forgoing displaying the representation of the field-of-view of the one or more cameras in accordance with a determination that the real-time communication session does not include video conserves power at the computer system and provides improved privacy and/or security by omitting the display of video information when it is not being used for communication purposes. In some embodiments, the representation of the field-of-view of the one or more cameras is not displayed when the real-time communication session is an audio call that does not include video (e.g., a live video feed). For example, the respective user interface (e.g., 1024) (e.g., a lock screen, a notifications screen, and/or an unlock screen) includes the user interface object (e.g., 1075) (e.g., a notification) without displaying the representation of the field-of-view of the one or more cameras, and in response to a selection of the user interface object, the computer system (e.g., 1000 or 600B) joins the real-time communication session (e.g., audio call) without displaying a representation of the field-of-view of the one or more cameras (e.g., as shown in FIG. 10N).

In some embodiments, the process for joining the real-time communication session with the second external computer system (e.g., 1050) includes joining, at the computer system (e.g., 1000 or 600B), the real-time communication session with the second external computer system (e.g., starting the real-time communication session at the computer system and/or transferring the real-time communication session from the first external computer system (e.g., 600B or 1000) to the computer system). In some embodiments, the process for joining the real-time communication session with the second external computer system includes causing the first external computer system (e.g., 600B or 1000) to terminate the real-time communication session with the second external computer system (e.g., 1050) (e.g., transmitting data to cause the first external computer system to end the real-time communication session at the first external computer system). Joining the real-time communication session with the second external computer system and causing the first external computer system to terminate the real-time communication session with the second external computer system conserves power at the computer system and provides improved privacy and/or security by terminating an active real-time communication session after it has transferred from one device to another. In some embodiments, the process for causing the first external computer system to terminate the real-time communication session with the second external computer system is initiated by a different device. For example, a server can terminate, at the first external computer system, the real-time communication session with the second external computer system or the server can instruct the first external computer system to terminate, at the first external computer system, the real-time communication session. As another example, the first external computer system can terminate the real-time communication session at the first external computer system in response to detecting the transfer of the real-time communication session from the first external computer system to the computer system and/or in response to a request from a server to terminate the real-time communication session at the first external computer system.

In some embodiments, after the computer system (e.g., 1000 or 600B) causes the first external computer system (e.g., 600B or 1000) to terminate the real-time communication session with the second external computer system (e.g., 1050), the first external computer system displays a first option (e.g., 1020, 1048, 1048-1, 1058, 1076, or 1076-1) (e.g., 1038, 1062, 1062-1, 1064, 1068, 1068-1, or 1072) (e.g., a selectable graphical element, icon, text, and/or affordance) that is selectable (e.g., via one or more inputs) to initiate a process for joining (e.g., rejoining), at the first external computer system, the real-time communication session with the second external computer system (e.g., switching the real-time communication session back to the first external computer system). Displaying, at the first external computer system, the first option that is selectable to initiate a process for joining the real-time communication session with the second external computer system after causing the first external computer system to terminate the real-time communication session with the second external computer system reduces the number of inputs needed to transfer the real-time communication session back to the first external computer system after the real-time communication session has been transferred to the computer system, which reduces the number of inputs needed to perform an operation. In some embodiments, when the first external computer system rejoins the real-time communication session with the second external computer system, the computer system terminates, at the computer system, the real-time communication session with the second external computer system. In some embodiments, when the real-time communication session is terminated at the computer system, the computer system displays a second option that is selectable to initiate a process for rejoining the real-time communication session with the second external computer system (e.g., an option to switch the real-time communication session back to the computer system).

In some embodiments, the first option that is selectable to initiate the process for joining, at the first external computer system (e.g., 600B or 1000), the real-time communication session with the second external computer system (e.g., 1050) is displayed in response to a selection (e.g., 1030-2) of a selectable graphical user interface object (e.g., 1020 or 1064) (e.g., a selectable graphical element, icon, text, and/or affordance) (e.g., a grey pill) that is displayed at the first external computer system. Displaying the first option that is selectable to initiate the process for joining, at the first external computer system, the real-time communication session with the second external computer system in response to a selection of a selectable graphical user interface object that is displayed at the first external computer system provides additional control options without cluttering the user interface. In some embodiments, the first external computer system displays a pill (e.g., 1020 or 1064) that is selectable to display an option to transfer the real-time communication session from the computer system (e.g., 1000 or 600B), back to the first external computer system.

In some embodiments, the first option is displayed as a first notification (e.g., 1048, 1062, 1068, or 1076) (e.g., a banner, alert, and/or selectable graphical element that notifies a user of the first external computer system (e.g., 600B or 1000) of an event at the first external computer system such as the transfer of the real-time communication session from the first external computer system to the computer system (e.g., 1000 or 600B) and/or an option that can be selected to transfer the real-time communication session back to the first external computer system) at the first external computer system that includes the first option (e.g., 1048-1, 1062-1, 1068-1, or 1076-1) that is selectable to initiate the process for joining, at the first external computer system, the real-time communication session with the second external computer system (e.g., 1050). Displaying the first option as a first notification at the first external computer system that includes the first option that is selectable to initiate the process for joining, at the first external computer system, the real-time communication session with the second external computer system provides additional control options without cluttering the user interface. In some embodiments, the first external computer system displays a notification that includes an option that is selectable to transfer the real-time communication session from the computer system, back to the first external computer system.

In some embodiments, the first external computer system (e.g., 600B or 1000) ceases (e.g., automatically and/or without further user input) to display the first notification (e.g., 1048, 1062, 1068, or 1076) after the first notification has been displayed for a threshold amount of time (e.g., three seconds, five seconds, or seven seconds). Ceasing to display the first notification after the first notification has been displayed for a threshold amount of time performs an operation when a set of conditions has been met without requiring further user input. In some embodiments, the first external computer system causes the notification to disappear after a threshold amount of time has elapsed.

In some embodiments, the second external computer system (e.g., 1050) displays a first user interface (e.g., 1042 and/or 1043-2) (e.g., an application user interface and/or a window or video tile that includes a video feed) with a first video feed (e.g., 1043-2a) (e.g., a video feed from the first external computer system (e.g., 600B)) for the real-time communication session before the computer system (e.g., 1000) has joined the real-time communication session with the second external computer system. In some embodiments, the second external computer system displays the first user interface (e.g., 1042 and/or 1043-2) with a second video feed (e.g., 1043-2b) (e.g., a video feed using the one or more cameras of the computer system) for the real-time communication session that is different from the first video feed after the computer system has joined the real-time communication session. Displaying, at the second external computer system, the first user interface with a first video feed for the real-time communication session before the computer system has joined the real-time communication session with the second computer system, and displaying the first user interface with a second video feed for the real-time communication session that is different from the first video feed after the computer system has joined the real-time communication session, provides improved privacy and/or security by indicating to a user of the second external computer system whether the video feed is from the same user (or user account), which provided improved visual feedback. In some embodiments, the transfer of the real-time communication session from the first external computer system to the computer system is shown at the second external computer system by swapping the video feed shown in a single video tile or window (e.g., as shown in FIGS. 10D and 10E). For example, the second computer system displays the video tile having the video feed from the first external computer system, then, when the real-time communication session transfers from the first external computer system to the computer system, the video feed in the tile is swapped, or replaced, with the video feed from the computer system (without displaying a new tile). In some embodiments, the transfer of the real-time communication session from the first external computer system to the computer system is shown at the second external computer system by replacing the existing tile that includes the existing video feed from the external computer system with a new tile that includes the video feed from the computer system (e.g., as shown in FIGS. 10H-10J). In some embodiments, the exiting tile and the new tile are displayed concurrently (at least temporarily) (e.g., as shown in FIG. 10I).

In some embodiments, the second external computer system (e.g., 1050) displays a transition of the real-time communication session from the first external computer system (e.g., 600B) to the computer system (e.g., 1000) in a first manner (e.g., as shown in FIGS. 10D and 10E) (e.g., swapping video feeds in a same video tile) when the transition meets verification criteria. In some embodiments, the second external computer system displays the transition of the real-time communication session from the first external computer system to the computer system in a second manner different from the first manner (e.g., as shown in FIGS. 10H-10J) (e.g., displaying a new video tile with a video feed from the computer system and removing the video tile with the video feed from the first external computer system) when the transition does not meet the verification criteria. In some embodiments, the verification criteria is met when the first external computer system and the computer system are signed into a same user account. Displaying the transition of the real-time communication session from the first external computer system to the computer system in the first or second manner based on whether the verification criteria is met provides improved privacy and/or security by indicating to a user of the second external computer system whether the video feed is from the same user (or user account), which provided improved visual feedback.

In some embodiments, initiating the process for joining the real-time communication session with the second external computer system (e.g., 1050) includes, in accordance with a determination that a respective audio output device (e.g., 1003) (e.g., wireless headphones, earbuds, and/or speakers) is used for the real-time communication session when the first external computer system (e.g., 600B) is in the real-time communication session with the second external computer system, establishing a connection (e.g., a wireless connection and/or an audio connection) with the respective audio output device (e.g., for outputting audio for the real-time communication session when the computer system (e.g., 1000) joins the real-time communication session with the second external computer system) (e.g., transferring the audio path at the headphones from the first external computer system to the computer system). In some embodiments, initiating the process for joining the real-time communication session with the second external computer system includes, in accordance with a determination that the respective audio output device is not used for the real-time communication session when the first external computer system is in the real-time communication session with the second external computer system, forgoing establishing the connection with the respective audio output device (e.g., outputting the audio for the real-time communication session at the computer system or a different audio output device that is in communication with the computer system). Establishing a connection with the respective audio output device based on whether or not the respective audio output device is used for the real-time communication session at the first external computer system causes the computer system to automatically transfer the audio path for the real-time communication session from the first external computer system to the computer system so that the user does not have to change or adjust the audio output device being used for the real-time communication session, which performs an operation when a set of conditions has been met without requiring further user input.

Note that details of the processes described above with respect to method 1100 (e.g., FIG. 11) are also applicable in an analogous manner to the methods described above. For example, any of methods 700, 800, and/or 900 optionally include one or more of the characteristics of the various methods described above with reference to method 1100. For example, any of the aspects discussed with respect to method 1100 for transferring a real-time communication can be applied to a communication session described with respect to any of methods 700, 800, and/or 900. For brevity, these details are not repeated.

The various embodiments provided herein are generally described using devices 600, 1000, and 1050. However, it should be appreciated that other computer systems or devices can be used (in addition to, or in lieu of, devices 600/1000/1050) to participate in a shared-content session, and that various aspects of a shared-content session can be implemented in different manners across the various devices participating in the shared-content session. For example, a smart speaker, optionally including a display component, can be used to participate in a shared-content session. In some embodiments, inputs at the smart speaker can be provided verbally and, optionally, via a touch input, and outputs can be audio outputs and, optionally, visual outputs provided at a connected display component. As another example, a display component of a head-mounted device (HMD) can be used to display visual aspects of the shared-content session (and a speaker used to produce audio), and inputs can be received by detecting gestures, eye gaze, hand movements, audio inputs, touch inputs, or the like. In some embodiments, the user interfaces depicted in the figures can be displayed in an extended reality environment such as augmented reality or virtual reality. For example, video tiles, windows, and/or other display regions shown in the figures can be displayed suspended in a three-dimensional environment. As another example, the representations of users or participants can be displayed as simulated three-dimensional avatars or two-dimensional avatars positioned around a three-dimensional environment rather than video tiles or windows in a video call or video conference application. Additionally, embodiments are described herein using various types of inputs such as taps, drags, clicks, and hover gestures, however, it should be appreciated that the described embodiments can be modified to respond to other forms of input including gestures, eye gaze, hand movements, audio inputs, and the like. Additionally, different devices with different capabilities can be combined in a single shared-content session, for example a smartphone, tablet, laptop computer, desktop computer, smart speaker, smart TV, headphones or earbuds, HMD, and/or smart watch (or a subset thereof) could participate in the same shared-content session with the different devices participating in different manners according to the capabilities of the device (e.g., the HMD presenting content in a simulated three-dimensional environment or an augmented reality environment, the smart speaker providing audio outputs and inputs, the headphones providing spatial audio outputs and audio inputs, the laptop and desktop computers, smartphone and tablet providing audio and visual inputs and outputs, the smart TV providing audio and visual outputs and audio inputs (or audio and visual inputs)).

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve the delivery to users of content for a shared-content session. The present disclosure contemplates that in some instances, this gathered data may include personal information data that uniquely identifies or can be used to contact or locate a specific person. Such personal information data can include demographic data, location-based data, telephone numbers, email addresses, social network IDs, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to deliver targeted content that is of greater interest to the user. Accordingly, use of such personal information data enables users to have calculated control of the delivered content. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in some embodiments, the present technology can be configured to allow users to select to "opt in" or "opt out" of participation in the collection of personal information data during registration for services or anytime thereafter. In another example, the present technology can be configured to allow users to prevent sharing of the personal information that may appear on the user's screen (e.g., such as in a screen-sharing embodiment). In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences based on non-personal information data or a bare minimum amount of personal information, such as the content being requested by the device associated with a user, other non-personal information available to the content delivery services, or publicly available information.

Exemplary embodiments of the present disclosure are set out in the following items:
1. A method, comprising:
   at a computer system that is in communication with one or more display generation components and one or more input devices:
   while displaying, via the one or more display generation components, a user interface for initiating a shared-content session with an external computer system, receiving, via the one or more input devices, a first set of one or more inputs corresponding to a request to initiate a shared-content session with one or more external computer systems; and
   in response to receiving the first set of one or more inputs corresponding to a request to initiate a shared-content session with one or more external computer systems, initiating a shared-content session with one or more external computer systems, wherein the shared-content session, when active, enables the computer system to output respective content while the respective content is being output by one or more external computer systems, wherein initiating the shared-content session with one or more external computer systems includes:
      in accordance with a determination that the shared-content session was initiated via an asynchronous communication, initiating the shared-content session in a first mode in which a set of real-time communication features are disabled for the shared-content session.
2. The method of item 1, wherein initiating the shared-content session with one or more external computer systems includes:
   in accordance with a determination that the shared-content session was initiated via a synchronous communication, initiating the shared-content session in a second mode in which a set of real-time communication features are enabled for the shared-content session.
3. The method of any of items 1-2, wherein displaying the user interface for initiating the shared-content session with the external computer system includes displaying a first option that is selectable to initiate the shared-content session via an asynchronous communication and a second option that is selectable to initiate the shared-content session via a synchronous communication.
4. The method of item 3, further comprising:
   in response to receiving the first set of one or more inputs corresponding to a request to initiate a shared-content session with one or more external computer systems:
   in accordance with a determination that the first set of one or more inputs corresponding to a request to initiate a shared-content session with one or more external computer systems includes a selection of the first option, displaying, via the one or more display generation components, a message composition user interface.
5. The method of any of items 1-4, wherein initiating the shared-content session with one or more external computer systems includes:
   in accordance with a determination that a number of the one or more external computer systems that has joined the shared-content session meets a threshold number, initiating playback of the respective content in the shared-content session; and
   in accordance with a determination that the number of the one or more external computer systems that has joined the shared-content session does not meet the threshold number, forgoing initiating playback of the respective content.
6. The method of any of items 1-5, further comprising:
   after initiating the shared-content session and displaying a graphical object having a first displayed state:
   in accordance with a determination that a threshold number of the one or more external computer systems have joined the shared-content session, displaying the graphical object having a second displayed state that is different from the first displayed state.
7. The method of any of items 1-6, further comprising:
   after initiating the shared-content session, detecting a first external computer system joining the shared-content session; and
   in response to detecting the first external computer system joining the shared-content session, displaying, via the one or more display generation components, a notification that is selectable to enable playback of content for the shared-content session.
8. The method of item 7, wherein the request to initiate the shared-content session with the one or more external computer systems is associated with first content, and wherein the notification includes a first option that is selectable to initiate playback of the first content for the shared-content session.
9. The method of item 7, wherein the request to initiate the shared-content session with the one or more external computer systems is associated with first content, the method further comprising:
   while displaying the notification that is selectable to enable playback of content for the shared-content session, receiving an input directed to the notification; and
   in response to receiving the input directed to the notification, displaying, via the one or more display generation components, a second option that is selectable to initiate playback of the first content for the shared-content session.
10. The method of any of items 1-9, further comprising:
   after initiating the shared-content session, displaying, via the one or more display generation components, a first control user interface, including:
   in accordance with a determination that the shared-content session is provided via an asynchronous communication session, displaying the first control user interface having a first set of one or more control options; and
   in accordance with a determination that the shared-content session is provided via a real-time communication session, displaying the first control user interface having a second set of one or more control options that is different from the first set of one or more control options.
11. The method of any of items 1-10, further comprising:
   after initiating the shared-content session, displaying, via the one or more display generation components, a second control user interface having a first appearance while the shared-content session is in the first mode;
   detecting the shared-content session changing from the first mode to a third mode that is different from the first mode; and
   in response to detecting the shared-content session changing from the first mode to the third mode, displaying the second control user interface having a second appearance that is different from the first appearance.
12. The method of item 11, wherein displaying the second control user interface having the first appearance includes displaying a first set of one or more selectable control options, and wherein displaying the second control user interface having the second appearance includes displaying a second set of one or more selectable control options that is different from the first set of one or more selectable control options.
13. The method of any of items 11-12, wherein displaying the second control user interface having the first appearance includes displaying a background of the second control user interface having a first state, and wherein displaying the second control user interface having the second appearance includes displaying the background of the second control user interface having a second state different from the first state.
14. The method of any of items 11-13, wherein the third mode is a mode in which one or more real-time communication features are enabled for the shared-content session, and wherein the appearance of the second control user interface changes based on a change in state of the computer system when the shared-content session changes from the first mode to the third mode.
15. The method of any of items 1-14, wherein the request to initiate the shared-content session includes sending a link to the one or more external computer systems for joining the shared-content session.
16. The method of item 15, wherein the link includes a join option, the method further comprising:
   detecting, via the one or more input devices, one or more inputs corresponding to a selection of the join option; and
   in response to detecting the one or more inputs corresponding to a selection of the join option, initiating a process for joining the shared-content session.
17. The method of any of items 1-16, further comprising:
   after initiating the shared-content session with one or more external computer systems, displaying, via the one or more display generation components, a status user interface including a call option;
   while displaying the status user interface including the call option, detecting, via the one or more input devices, one or more inputs corresponding to a selection of the call option; and
   in response to detecting the one or more inputs corresponding to a selection of the call option, initiating a process for enabling real-time communication for the shared-content session.
18. The method of any of items 1-17, further comprising:
   after initiating the shared-content session with one or more external computer systems, displaying, via the one or more display generation components, a user status interface that includes an indication of participants of the shared-content session that are participating in the shared-content session with real-time communication enabled and an indication of participants of the shared-content session that are participating in the shared-content session with real-time communication disabled.
19. The method of any of items 1-18, further comprising:
   while the shared-content session is in the first mode at the computer system, and in response to a second external computer system enabling real-time communication for the shared-content session at the second external computer system, displaying an incoming communication user interface that includes an accept option;
   while displaying the incoming communication user interface that includes the accept option, detecting, via the one or more input devices, one or more inputs corresponding to a selection of the accept option; and
   in response to detecting the one or more inputs corresponding to a selection of the accept option, initiating a process for enabling real-time communication at the computer system for the shared-content session.
20. The method of any of items 1-19, further comprising:
   while the shared-content session is in a fourth mode in which the set of real-time communication features are enabled for the shared-content session:
   receiving, via the one or more input devices, a request to transition the shared-content session from the fourth mode; and
   in response to receiving the request to transition the shared-content session from the fourth mode, displaying, via the one or more display generation components, a session option user interface, wherein the session option user interface includes:
      a termination option that is selectable to terminate the shared-content session at the computer system; and
      a continuation option that is selectable to continue the shared-content session at the computer system.
21. The method of item 20, further comprising:
   in response to receiving the request to transition the shared-content session from the fourth mode, ceasing display of a third control user interface for the shared-content session.
22. The method of any of items 20-21, further comprising:
   receiving, via the one or more input devices, a selection of the continuation option; and
   in response to receiving the selection of the continuation option, transitioning the shared-content session from the fourth mode to the first mode.
23. The method of any of items 20-22, wherein displaying the session option user interface includes:
   in accordance with a determination that the shared-content session was initiated via an asynchronous communication, displaying the continuation option that is selectable to continue the shared-content session at the computer system; and
   in accordance with a determination that the shared-content session was not initiated via an asynchronous communication, forgoing displaying the continuation option that is selectable to continue the shared-content session at the computer system.
24. The method of any of items 20-23, further comprising:
   after transitioning the shared-content session from the fourth mode to the first mode, receiving, via the one or more input devices, a set of one or more inputs corresponding to a request to display a messages user interface; and
   in response to receiving the set of one or more inputs corresponding to a request to display a messages user interface, displaying, via the one or more display generation components, the messages user interface, including:
      displaying, in the messages user interface, a rejoin option that is selectable to transition the shared-content session at the computer system from the first mode to the fourth mode.
25. The method of any of items 1-24, wherein the asynchronous communication includes text-based messaging communication.
26. The method of any of items 1-25, further comprising:
   while first content is being output as the respective content for the shared-content session, receiving, via the one or more input devices, a request to initiate playback of second content at the computer system, wherein the second content is different from the first content; and
   in response to receiving the request to initiate playback of the second content at the computer system, outputting the second content as the respective content for the shared-content session.
27. The method of any of items 1-26, further comprising:
   while the shared-content session is active and a first user interface is displayed, receiving, via the one or more input devices, a request to display a messages user interface; and
   in response to receiving the request to display the messages user interface, displaying the messages user interface over at least a portion of the first user interface.
28. The method of item 27, further comprising:
   while displaying the messages user interface over at least a portion of the first user interface, receiving, via the one or more input devices, a set of one or more inputs corresponding to a request to dismiss the messages user interface; and
   in response to receiving the set of one or more inputs corresponding to a request to dismiss the messages user interface, ceasing to display the messages user interface and displaying the first user interface.
29. The method of any of items 27-28, wherein the first user interface includes a representation of media output as the respective content for the shared-content session, and wherein displaying the messages user interface over at least a portion of the first user interface includes:
   displaying the representation of the media at a location that at least partially overlaps the messages user interface without overlapping a recipient region of the messages user interface and without overlapping at least a portion of a message display region of the messages user interface.
30. The method of any of items 27-29, wherein displaying the messages user interface over at least a portion of the first user interface includes:
   in accordance with a determination that the computer system is a first type of device, displaying the messages user interface concurrently with at least a portion of the first user interface; and
   in accordance with a determination that the computer system is a second type of device, displaying the messages user interface without displaying at least a portion of the first user interface.
31. The method of any of items 1-30, further comprising:
   while the shared-content session is in the first mode, receiving a set of one or more inputs corresponding to a request to select screen-share content as the respective content for the shared-content session; and
   in response to receiving the set of one or more inputs corresponding to a request to select screen-share content as the respective content for the shared-content session, selecting the screen-share content as the respective content for the shared-content session and transitioning the shared-content session from the first mode to a fifth mode in which a real-time audio channel is active for the shared-content session.
32. A non-transitory computer-readable storage medium storing one or more programs configured to be executed by one or more processors of a computer system that is in communication with one or more display generation components and one or more input devices, the one or more programs including instructions for performing the method of any of items 1 - 31.
33. A computer system that is configured to communicate with one or more display generation components and one or more input devices, the computer system comprising:
   one or more processors; and
   memory storing one or more programs configured to be executed by the one or more processors, the one or more programs including instructions for performing the method of any of items 1-31.
34. A computer system that is configured to communicate with one or more display generation components and one or more input devices, comprising:
   means for performing the method of any of items 1 - 31.
35. A computer program product, comprising one or more programs configured to be executed by one or more processors of a computer system that is in communication with one or more display generation components and one or more input devices, the one or more programs including instructions for performing the method of any of items 1 - 31.
36. A non-transitory computer-readable storage medium storing one or more programs configured to be executed by one or more processors of a computer system that is in communication with one or more display generation components and one or more input devices, the one or more programs including instructions for:
   while displaying, via the one or more display generation components, a user interface for initiating a shared-content session with an external computer system, receiving, via the one or more input devices, a first set of one or more inputs corresponding to a request to initiate a shared-content session with one or more external computer systems; and
   in response to receiving the first set of one or more inputs corresponding to a request to initiate a shared-content session with one or more external computer systems, initiating a shared-content session with one or more external computer systems, wherein the shared-content session, when active, enables the computer system to output respective content while the respective content is being output by one or more external computer systems, wherein initiating the shared-content session with one or more external computer systems includes:
      in accordance with a determination that the shared-content session was initiated via an asynchronous communication, initiating the shared-content session in a first mode in which a set of real-time communication features are disabled for the shared-content session.
37. A computer system configured to communicate with one or more display generation components and one or more input devices, comprising:
   one or more processors; and
   memory storing one or more programs configured to be executed by the one or more processors, the one or more programs including instructions for:
      while displaying, via the one or more display generation components, a user interface for initiating a shared-content session with an external computer system, receiving, via the one or more input devices, a first set of one or more inputs corresponding to a request to initiate a shared-content session with one or more external computer systems; and
      in response to receiving the first set of one or more inputs corresponding to a request to initiate a shared-content session with one or more external computer systems, initiating a shared-content session with one or more external computer systems, wherein the shared-content session, when active, enables the computer system to output respective content while the respective content is being output by one or more external computer systems, wherein initiating the shared-content session with one or more external computer systems includes:
         in accordance with a determination that the shared-content session was initiated via an asynchronous communication, initiating the shared-content session in a first mode in which a set of real-time communication features are disabled for the shared-content session.
38. A computer system configured to communicate with one or more display generation components and one or more input devices, comprising:
   means for, while displaying, via the one or more display generation components, a user interface for initiating a shared-content session with an external computer system, receiving, via the one or more input devices, a first set of one or more inputs corresponding to a request to initiate a shared-content session with one or more external computer systems; and
   means for, in response to receiving the first set of one or more inputs corresponding to a request to initiate a shared-content session with one or more external computer systems, initiating a shared-content session with one or more external computer systems, wherein the shared-content session, when active, enables the computer system to output respective content while the respective content is being output by one or more external computer systems, wherein initiating the shared-content session with one or more external computer systems includes:
      in accordance with a determination that the shared-content session was initiated via an asynchronous communication, initiating the shared-content session in a first mode in which a set of real-time communication features are disabled for the shared-content session.
39. A computer program product, comprising one or more programs configured to be executed by one or more processors of a computer system that is in communication with one or more display generation components and one or more input devices, the one or more programs including instructions for:
   while displaying, via the one or more display generation components, a user interface for initiating a shared-content session with an external computer system, receiving, via the one or more input devices, a first set of one or more inputs corresponding to a request to initiate a shared-content session with one or more external computer systems; and
   in response to receiving the first set of one or more inputs corresponding to a request to initiate a shared-content session with one or more external computer systems, initiating a shared-content session with one or more external computer systems, wherein the shared-content session, when active, enables the computer system to output respective content while the respective content is being output by one or more external computer systems, wherein initiating the shared-content session with one or more external computer systems includes:
      in accordance with a determination that the shared-content session was initiated via an asynchronous communication, initiating the shared-content session in a first mode in which a set of real-time communication features are disabled for the shared-content session.
40. A method, comprising:
   at a computer system that is in communication with one or more display generation components and one or more input devices:
   while the computer system is in a shared-content session in which synchronized content is enabled for sharing with an external computer system, and while a real-time communication session is not enabled, receiving an invitation to join a real-time communication session, and displaying, via the one or more display generation components, an option to accept the invitation to join the real-time communication session; and
   after receiving the invitation to join the real-time communication session:
      in accordance with a determination that the option to accept the invitation to join the real-time communication session has been selected, joining the real-time communication session; and
      in accordance with a determination that the option to accept the invitation to join the real-time communication session has not been selected, forgoing joining the real-time communication session.
41. The method of item 40, further comprising:
   displaying, via the one or more display generation components, and concurrently with the option to accept the invitation to join the real-time communication session, a graphical object that is selectable to display a set of controls for the shared-content session.
42. The method of any of items 40-41, further comprising:
   displaying, via the one or more display generation components, an option to decline the invitation to join the real-time communication session; and
   after receiving the invitation to join the real-time communication session:
      in accordance with a determination that the option to decline the invitation to join the real-time communication session has been selected, declining the invitation to join the real-time communication session; and
      in accordance with a determination that the option to decline the invitation to join the real-time communication session has not been selected, forgoing declining the invitation to join the real-time communication session.
43. The method of any of items 40-42, further comprising:
   after receiving the invitation to join the real-time communication session:
   in accordance with a determination that the option to accept the invitation to join the real-time communication session has not been selected for at least a threshold amount of time, ceasing to display the invitation to join the real-time communication session.
44. The method of any of items 40-43, further comprising:
   in response to receiving the invitation to join the real-time communication session, displaying, via the one or more display generation components, a notification that corresponds to the invitation to join the real-time communication session.
45. The method of item 44, further comprising:
   while displaying the notification, receiving, via the one or more input devices, a selection of the notification; and
   in response to receiving the selection of the notification, displaying, via the one or more display generation components, an asynchronous communication user interface.
46. The method of any of items 40-45, further comprising:
   prior to the computer system being in the shared-content session in which synchronized content is enabled for sharing with the external computer system, receiving an invitation to join the shared-content session, wherein the invitation to join the shared-content session is received via an asynchronous communication provided using an asynchronous communication application.
47. The method of item 46, wherein the asynchronous communication includes an indication of the synchronized content for the shared-content session.
48. The method of any of items 46-47, wherein the asynchronous communication includes an option that is selectable to join the shared-content session.
49. The method of any of items 40-48, wherein the invitation to join the real-time communication session was initiated via a selection of a call option in a synchronized content session user interface at the external computer system.
50. The method of any of items 40-49, wherein the invitation to join the real-time communication session was initiated via a selection of a screen-sharing option in a synchronized content session user interface at the external computer system.
51. The method of item 50, wherein the option to accept the invitation to join the real-time communication session includes an indication that a respective user is sharing screen content from an external computer system associated with the respective user.
52. The method of any of items 50-51, further comprising:
   after forgoing joining the real-time communication session, displaying, via the one or more display generation components, an indication of activity occurring in the shared-content session and a prompt to join the real-time communication session.
53. The method of any of items 40-52, further comprising:
   after forgoing joining the real-time communication session, displaying, via the one or more display generation components, a control user interface for the shared-content session having a first control option;
   receiving, via the one or more input devices, a set of one or more inputs that includes a selection of the first control option; and
   in response to receiving the set of one or more inputs that includes a selection of the first control option, initiating a process for joining the real-time communication session.
54. A non-transitory computer-readable storage medium storing one or more programs configured to be executed by one or more processors of a computer system that is in communication with one or more display generation components and one or more input devices, the one or more programs including instructions for performing the method of any of items 40 - 53.
55. A computer system configured to communicate with one or more display generation components and one or more input devices, the computer system comprising:
   one or more processors; and
   memory storing one or more programs configured to be executed by the one or more processors, the one or more programs including instructions for performing the method of any of items 40- 53.
56. A computer system configured to communicate with one or more display generation components and one or more input devices, the computer system comprising:
   means for performing the method of any of items 40- 53.
57. A computer program product, comprising one or more programs configured to be executed by one or more processors of a computer system that is in communication with one or more display generation components and one or more input devices, the one or more programs including instructions for performing the method of any of items 40- 53.
58. A non-transitory computer-readable storage medium storing one or more programs configured to be executed by one or more processors of a computer system that is in communication with one or more display generation components and one or more input devices, the one or more programs including instructions for:
   while the computer system is in a shared-content session in which synchronized content is enabled for sharing with an external computer system, and while a real-time communication session is not enabled, receiving an invitation to join a real-time communication session, and displaying, via the one or more display generation components, an option to accept the invitation to join the real-time communication session; and
   after receiving the invitation to join the real-time communication session:
      in accordance with a determination that the option to accept the invitation to join the real-time communication session has been selected, joining the real-time communication session; and
      in accordance with a determination that the option to accept the invitation to join the real-time communication session has not been selected, forgoing joining the real-time communication session.
59. A computer system configured to communicate with one or more display generation components and one or more input devices, the computer system comprising:
   one or more processors; and
   memory storing one or more programs configured to be executed by the one or more processors, the one or more programs including instructions for:
      while the computer system is in a shared-content session in which synchronized content is enabled for sharing with an external computer system, and while a real-time communication session is not enabled, receiving an invitation to join a real-time communication session, and displaying, via the one or more display generation components, an option to accept the invitation to join the real-time communication session; and
      after receiving the invitation to join the real-time communication session:
         in accordance with a determination that the option to accept the invitation to join the real-time communication session has been selected, joining the real-time communication session; and
         in accordance with a determination that the option to accept the invitation to join the real-time communication session has not been selected, forgoing joining the real-time communication session.
60. A computer system configured to communicate with one or more display generation components and one or more input devices, the computer system comprising:
   means for, while the computer system is in a shared-content session in which synchronized content is enabled for sharing with an external computer system, and while a real-time communication session is not enabled, receiving an invitation to join a real-time communication session, and displaying, via the one or more display generation components, an option to accept the invitation to join the real-time communication session; and
   means for, after receiving the invitation to join the real-time communication session:
      in accordance with a determination that the option to accept the invitation to join the real-time communication session has been selected, joining the real-time communication session; and
      in accordance with a determination that the option to accept the invitation to join the real-time communication session has not been selected, forgoing joining the real-time communication session.
61. A computer program product, comprising one or more programs configured to be executed by one or more processors of a computer system that is in communication with one or more display generation components and one or more input devices, the one or more programs including instructions for:
   while the computer system is in a shared-content session in which synchronized content is enabled for sharing with an external computer system, and while a real-time communication session is not enabled, receiving an invitation to join a real-time communication session, and displaying, via the one or more display generation components, an option to accept the invitation to join the real-time communication session; and
   after receiving the invitation to join the real-time communication session:
      in accordance with a determination that the option to accept the invitation to join the real-time communication session has been selected, joining the real-time communication session; and
      in accordance with a determination that the option to accept the invitation to join the real-time communication session has not been selected, forgoing joining the real-time communication session.
62. A method, comprising:
   at a computer system that is in communication one or more display generation components and one or more input devices:
   while the computer system is in a communication session with an external computer system:
   displaying, via the one or more display generation components, a control user interface for controlling one or more settings of the communication session, wherein the control user interface includes a first control option;
   detecting, via the one or more input devices, a set of one or more inputs directed to the control user interface, wherein the set of one or more inputs includes a selection of the first control option; and
   in response to detecting the selection of the first control option, displaying a representation of one or more applications available on the computer system that are configured to provide content that can be played as synchronized content during the communication session.
63. The method of item 62, further comprising:
   in response to detecting the selection of the first control option, displaying, via the one or more display generation components, a screen-share option that is selectable to initiate a process for selecting screen-share content for the communication session.
64. The method of any of items 62-63, further comprising:
   in response to detecting the selection of the first control option, displaying, via the one or more display generation components, a settings option that is selectable to display settings controls for an application associated with the communication session.
65. The method of any of items 62-64, wherein displaying the representation of one or more applications available on the computer system that are configured to provide content that can be played as synchronized content during the communication session includes displaying a list of applications that is arranged based on use criteria.
66. The method of any of items 62-65, further comprising:
   while displaying the representation of one or more applications available on the computer system that are configured to provide content that can be played as synchronized content during the communication session, detecting, via the one or more input devices, a selection of a first application in the one or more applications; and
   in response to detecting the selection of the first application in the one or more applications, displaying, via the one or more display generation components, a user interface for the first application.
67. The method of item 66, wherein displaying the user interface for the first application includes displaying the user interface for the first application without initiating playback of first content associated with the first application as synchronized content during the communication session, the method further comprising:
   detecting, via the one or more input devices, a selection of second content for playback; and
   in response to detecting selection of the second content for playback, initiating playback of the second content as synchronized content during the communication session.
68. The method of any of items 62-67, further comprising:
   in response to detecting the selection of the first control option, displaying, via the one or more display generation components, a set of one or more playback options that are selectable to set an automatic playback setting for synchronized content for the communication session;
   while displaying the set of one or more playback options, detecting, via the one or more input devices, a set of one or more inputs that includes a selection of one the playback options; and
   in response to detecting the set of one or more inputs that includes a selection of one of the playback options:
      in accordance with a determination that the selected playback option is a first playback option, enabling a mode in which synchronized content is automatically output at the computer system during the communication session; and
      in accordance with a determination that the selected playback option is a second playback option, enabling a mode in which synchronized content is not automatically output at the computer system.
69. The method of any of items 62-68, further comprising:
   in response to detecting the selection of the first control option, displaying, via the one or more display generation components, an application store option;
   while displaying the application store option, detecting, via the one or more input devices, a set of one or more inputs that corresponds to a selection of the application store option; and
   in response to detecting the set of one or more inputs that corresponds to a selection of the application store option, displaying, via the one or more display generation components, a user interface that provides a capability to obtain an application.
70. The method of item 69, wherein the user interface that provides a capability to obtain an application includes a list of one or more applications that are configured to provide content that can be played as synchronized content during the communication session.
71. The method of any of items 62-70, further comprising:
   while displaying the representation of one or more applications available on the computer system that are configured to provide content that can be played as synchronized content during the communication session, detecting a selection of a respective application in the one or more applications available on the computer system; and
   in response to detecting the selection of the respective application, displaying, via the one or more display generation components, a user interface for the respective application, wherein the user interface for the respective application includes an indication of respective content provided by the respective application that can be played as synchronized content during the communication session.
72. The method of any of items 62-71, further comprising:
   in response to detecting the selection of the first control option, displaying an indication that the one or more applications are configured to provide content that can be played as synchronized content.
73. The method of any of items 62-72, wherein displaying the representation of one or more applications available on the computer system that are configured to provide content that can be played as synchronized content during the communication session includes displaying application icons corresponding to the one or more applications.
74. The method of any of items 62-73, wherein displaying the representation of one or more applications available on the computer system that are configured to provide content that can be played as synchronized content during the communication session includes displaying a scrollable list of the one or more applications.
75. The method of any of items 62-74, wherein displaying the representation of one or more applications available on the computer system that are configured to provide content that can be played as synchronized content during the communication session includes displaying a list of the one or more applications that visually emphasizes one or more applications selected based on participants of the communication session over other applications.
76. A non-transitory computer-readable storage medium storing one or more programs configured to be executed by one or more processors of a computer system that is in communication with one or more display generation components and one or more input devices, the one or more programs including instructions for performing the method of any of items 62 - 75.
77. A computer system configured to communicate with one or more display generation components and one or more input devices, the computer system comprising:
   one or more processors; and
   memory storing one or more programs configured to be executed by the one or more processors, the one or more programs including instructions for performing the method of any of items 62 - 75.
78. A computer system configured to communicate with one or more display generation components and one or more input devices, the computer system comprising:
   means for performing the method of any of items 62 - 75.
79. A computer program product, comprising one or more programs configured to be executed by one or more processors of a computer system that is in communication with one or more display generation components and one or more input devices, the one or more programs including instructions for performing the method of any of items 62 - 75.
80. A non-transitory computer-readable storage medium storing one or more programs configured to be executed by one or more processors of a computer system that is in communication with one or more display generation components and one or more input devices, the one or more programs including instructions for:
   while the computer system is in a communication session with an external computer system:
   displaying, via the one or more display generation components, a control user interface for controlling one or more settings of the communication session, wherein the control user interface includes a first control option;
   detecting, via the one or more input devices, a set of one or more inputs directed to the control user interface, wherein the set of one or more inputs includes a selection of the first control option; and
   in response to detecting the selection of the first control option, displaying a representation of one or more applications available on the computer system that are configured to provide content that can be played as synchronized content during the communication session.
81. A computer system configured to communicate with one or more display generation components and one or more input devices, the computer system comprising:
   one or more processors; and
   memory storing one or more programs configured to be executed by the one or more processors, the one or more programs including instructions for:
      while the computer system is in a communication session with an external computer system:
      displaying, via the one or more display generation components, a control user interface for controlling one or more settings of the communication session, wherein the control user interface includes a first control option;
      detecting, via the one or more input devices, a set of one or more inputs directed to the control user interface, wherein the set of one or more inputs includes a selection of the first control option; and
      in response to detecting the selection of the first control option, displaying a representation of one or more applications available on the computer system that are configured to provide content that can be played as synchronized content during the communication session.
82. A computer system configured to communicate with one or more display generation components and one or more input devices, the computer system comprising:
   means for, while the computer system is in a communication session with an external computer system:
   displaying, via the one or more display generation components, a control user interface for controlling one or more settings of the communication session, wherein the control user interface includes a first control option;
   detecting, via the one or more input devices, a set of one or more inputs directed to the control user interface, wherein the set of one or more inputs includes a selection of the first control option; and
   in response to detecting the selection of the first control option, displaying a representation of one or more applications available on the computer system that are configured to provide content that can be played as synchronized content during the communication session.
83. A computer program product, comprising one or more programs configured to be executed by one or more processors of a computer system that is in communication with one or more display generation components and one or more input devices, the one or more programs including instructions for:
   while the computer system is in a communication session with an external computer system:
   displaying, via the one or more display generation components, a control user interface for controlling one or more settings of the communication session, wherein the control user interface includes a first control option;
   detecting, via the one or more input devices, a set of one or more inputs directed to the control user interface, wherein the set of one or more inputs includes a selection of the first control option; and
   in response to detecting the selection of the first control option, displaying a representation of one or more applications available on the computer system that are configured to provide content that can be played as synchronized content during the communication session.
84. A method, comprising:
   at a computer system that is in communication with one or more display generation components and one or more cameras:
   while the computer system is associated with a respective user account, receiving first data indicating whether a first external computer system meets a first set of criteria, wherein the first set of criteria is met when the first external computer system is located within a threshold distance of the computer system, the first external computer system is associated with the respective user account, and the first external computer system is in a real-time communication session with a second external computer system; and
   after receiving the first data and in accordance with a determination that the first data indicates that the first external computer system meets the first set of criteria, displaying, via the one or more display generation components, a respective user interface that includes a user interface object that is selectable to initiate a process for joining the real-time communication session with the second external computer system, wherein displaying the respective user interface includes:
      in accordance with a determination that the real-time communication session includes a live video feed, displaying a representation of a field-of-view of the one or more cameras.
85. The method of item 84, further comprising:
   in response to receiving the first data and in accordance with a determination that the first data indicates that the first external computer system is not in a real-time communication session with a second external computer system, forgoing displaying the respective user interface that includes the user interface object that is selectable to initiate a process for joining the real-time communication session with the second external computer system.
86. The method of any of items 84-85, wherein displaying the respective user interface that includes the user interface object that is selectable to initiate a process for joining the real-time communication session with the second external computer system includes:
   in accordance with a determination that the real-time communication session is provided using a first application, displaying the user interface object as a first user interface object; and
   in accordance with a determination that the real-time communication session is provided using a second application different from the first application, displaying the user interface object as a second user interface object different from the first user interface object.
87. The method of any of items 84-86, wherein displaying the respective user interface that includes the user interface object that is selectable to initiate a process for joining the real-time communication session with the second external computer system includes:
   in accordance with a determination that the one or more display generation components is in a first state, displaying the user interface object as a notification of an event at the computer system.
88. The method of item 87, wherein displaying the user interface object as a notification of an event at the computer system includes:
   in accordance with a determination that the first state is an unlocked state, displaying the notification with first information about the real-time communication session; and
   in accordance with a determination that the first state is a locked state, displaying the notification without the first information about the real-time communication session.
89. The method of any of items 84-88, wherein displaying the respective user interface includes:
   in accordance with a determination that the respective user interface is a first type of user interface, displaying the user interface object in a region of the respective user interface that provides status information for the computer system.
90. The method of any of items 84-89, wherein displaying the respective user interface includes:
   in accordance with a determination that the respective user interface is a second type of user interface, displaying the user interface object in a region of the respective user interface that includes a plurality of application icons for launching respective applications.
91. The method of any of items 84-90, wherein the representation of the field-of-view of the one or more cameras is displayed in response to receiving a selection of the user interface object.
92. The method of any of items 84-91, wherein displaying the respective user interface includes displaying a set of one or more video setting options associated with video settings for the real-time communication session.
93. The method of any of items 84-92, wherein the representation of the field-of-view of the one or more cameras includes a view of a user of the computer system prior to the computer system joining the real-time communication session with the second external computer system.
94. The method of any of items 84-93, wherein the process for joining the real-time communication session with the second external computer system includes:
   in accordance with a determination that a predetermined amount of time has elapsed, automatically joining the real-time communication session with the second external computer system; and
   in accordance with a determination that the predetermined amount of time has not elapsed, forgoing joining the real-time communication session with the second external computer system.
95. The method of item 94, wherein displaying the respective user interface includes displaying a countdown of an amount of time remaining until the predetermined amount of time will elapse.
96. The method of any of items 84-95, wherein the representation of the field-of-view of the one or more cameras is displayed concurrently with the user interface object that is selectable to initiate the process for joining the real-time communication session with the second external computer system.
97. The method of any of items 84-96, wherein the computer system is in communication with one or more input devices, the method further comprising:
   receiving, via the one or more input devices, a set of one or more inputs that includes a selection of the user interface object; and
   in response to receiving the set of one or more inputs that includes the selection of the user interface object, joining the real-time communication session with the second external computer system.
98. The method of any of items 84-97, wherein displaying the respective user interface includes:
   in accordance with a determination that the real-time communication session does not include video, forgoing displaying the representation of the field-of-view of the one or more cameras.
99. The method of any of items 84-98, wherein the process for joining the real-time communication session with the second external computer system includes:
   joining, at the computer system, the real-time communication session with the second external computer system; and
   causing the first external computer system to terminate the real-time communication session with the second external computer system.
100. The method of item 99, wherein after causing the first external computer system to terminate the real-time communication session with the second external computer system, the first external computer system displays a first option that is selectable to initiate a process for joining, at the first external computer system, the real-time communication session with the second external computer system.
101. The method of item 100, wherein the first option that is selectable to initiate the process for joining, at the first external computer system, the real-time communication session with the second external computer system is displayed in response to a selection of a selectable graphical user interface that is displayed at the first external computer system.
102. The method of item 100, wherein the first option is displayed as a first notification at the first external computer system that includes the first option that is selectable to initiate the process for joining, at the first external computer system, the real-time communication session with the second external computer system.
103. The method of item 102, wherein the first external computer system ceases to display the first notification after the first notification has been displayed for a threshold amount of time.
104. The method of any of items 84-103, wherein:
   the second external computer system displays a first user interface with a first video feed for the real-time communication session before the computer system has joined the real-time communication session with the second external computer system; and
   the second external computer system displays the first user interface with a second video feed for the real-time communication session that is different from the first video feed after the computer system has joined the real-time communication session.
105. The method of any of items 84-104, wherein:
   the second external computer system displays a transition of the real-time communication session from the first external computer system to the computer system in a first manner when the transition meets verification criteria;
   the second external computer system displays the transition of the real-time communication session from the first external computer system to the computer system in a second manner different from the first manner when the transition does not meet the verification criteria; and
   the verification criteria is met when the first external computer system and the computer system are signed into a same user account.
106. The method of any of items 84-105, wherein initiating the process for joining the real-time communication session with the second external computer system includes:
   in accordance with a determination that a respective audio output device is used for the real-time communication session when the first external computer system is in the real-time communication session with the second external computer system, establishing a connection with the respective audio output device; and
   in accordance with a determination that the respective audio output device is not used for the real-time communication session when the first external computer system is in the real-time communication session with the second external computer system, forgoing establishing the connection with the respective audio output device.
107. A non-transitory computer-readable storage medium storing one or more programs configured to be executed by one or more processors of a computer system that is in communication with one or more display generation components and one or more cameras, the one or more programs including instructions for performing the method of any of items 84 - 106.
108. A computer system configured to communicate with one or more display generation components and one or more cameras, the computer system comprising:
   one or more processors; and
   memory storing one or more programs configured to be executed by the one or more processors, the one or more programs including instructions for performing the method of any of items 84 - 106.
109. A computer system configured to communicate with one or more display generation components and one or more cameras, the computer system comprising:
   means for performing the method of any of items 84 - 106.
110. A computer program product, comprising one or more programs configured to be executed by one or more processors of a computer system that is in communication with one or more display generation components and one or more cameras, the one or more programs including instructions for performing the method of any of items 84 - 106.
111. A non-transitory computer-readable storage medium storing one or more programs configured to be executed by one or more processors of a computer system that is in communication with one or more display generation components and one or more cameras, the one or more programs including instructions for:
   while the computer system is associated with a respective user account, receiving first data indicating whether a first external computer system meets a first set of criteria, wherein the first set of criteria is met when the first external computer system is located within a threshold distance of the computer system, the first external computer system is associated with the respective user account, and the first external computer system is in a real-time communication session with a second external computer system; and
   after receiving the first data and in accordance with a determination that the first data indicates that the first external computer system meets the first set of criteria, displaying, via the one or more display generation components, a respective user interface that includes a user interface object that is selectable to initiate a process for joining the real-time communication session with the second external computer system, wherein displaying the respective user interface includes:
      in accordance with a determination that the real-time communication session includes a live video feed, displaying a representation of a field-of-view of the one or more cameras.
112. A computer system configured to communicate with one or more display generation components and one or more cameras, the computer system comprising:
   one or more processors; and
   memory storing one or more programs configured to be executed by the one or more processors, the one or more programs including instructions for:
      while the computer system is associated with a respective user account, receiving first data indicating whether a first external computer system meets a first set of criteria, wherein the first set of criteria is met when the first external computer system is located within a threshold distance of the computer system, the first external computer system is associated with the respective user account, and the first external computer system is in a real-time communication session with a second external computer system; and
      after receiving the first data and in accordance with a determination that the first data indicates that the first external computer system meets the first set of criteria, displaying, via the one or more display generation components, a respective user interface that includes a user interface object that is selectable to initiate a process for joining the real-time communication session with the second external computer system, wherein displaying the respective user interface includes:
         in accordance with a determination that the real-time communication session includes a live video feed, displaying a representation of a field-of-view of the one or more cameras.
113. A computer system configured to communicate with one or more display generation components and one or more cameras, the computer system comprising:
   means for, while the computer system is associated with a respective user account, receiving first data indicating whether a first external computer system meets a first set of criteria, wherein the first set of criteria is met when the first external computer system is located within a threshold distance of the computer system, the first external computer system is associated with the respective user account, and the first external computer system is in a real-time communication session with a second external computer system; and
   means for, after receiving the first data and in accordance with a determination that the first data indicates that the first external computer system meets the first set of criteria, displaying, via the one or more display generation components, a respective user interface that includes a user interface object that is selectable to initiate a process for joining the real-time communication session with the second external computer system, wherein displaying the respective user interface includes:
      in accordance with a determination that the real-time communication session includes a live video feed, displaying a representation of a field-of-view of the one or more cameras.
114. A computer program product, comprising one or more programs configured to be executed by one or more processors of a computer system that is in communication with one or more display generation components and one or more cameras, the one or more programs including instructions for:
   while the computer system is associated with a respective user account, receiving first data indicating whether a first external computer system meets a first set of criteria, wherein the first set of criteria is met when the first external computer system is located within a threshold distance of the computer system, the first external computer system is associated with the respective user account, and the first external computer system is in a real-time communication session with a second external computer system; and
   after receiving the first data and in accordance with a determination that the first data indicates that the first external computer system meets the first set of criteria, displaying, via the one or more display generation components, a respective user interface that includes a user interface object that is selectable to initiate a process for joining the real-time communication session with the second external computer system, wherein displaying the respective user interface includes:
      in accordance with a determination that the real-time communication session includes a live video feed, displaying a representation of a field-of-view of the one or more cameras.

## Claims

1. A method, comprising:
at a computer system that is in communication with one or more display generation components and one or more input devices:
while displaying, via the one or more display generation components, a user interface for initiating a shared-content session with an external computer system, receiving, via the one or more input devices, a first set of one or more inputs corresponding to a request to initiate a shared-content session with one or more external computer systems; and
in response to receiving the first set of one or more inputs corresponding to a request to initiate a shared-content session with one or more external computer systems, initiating a shared-content session with one or more external computer systems, wherein the shared-content session, when active, enables the computer system to output respective content while the respective content is being output by one or more external computer systems, wherein initiating the shared-content session with one or more external computer systems includes:
in accordance with a determination that the shared-content session was initiated via an asynchronous communication, initiating the shared-content session in a first mode in which a set of real-time communication features are disabled for the shared-content session.

2. The method of claim 1, wherein initiating the shared-content session with one or more external computer systems includes:
in accordance with a determination that the shared-content session was initiated via a synchronous communication, initiating the shared-content session in a second mode in which a set of real-time communication features are enabled for the shared-content session.

3. The method of any of claims 1-2, wherein displaying the user interface for initiating the shared-content session with the external computer system includes displaying a first option that is selectable to initiate the shared-content session via an asynchronous communication and a second option that is selectable to initiate the shared-content session via a synchronous communication.

4. The method of any of claims 1-3, wherein initiating the shared-content session with one or more external computer systems includes:
in accordance with a determination that a number of the one or more external computer systems that has joined the shared-content session meets a threshold number, initiating playback of the respective content in the shared-content session; and
in accordance with a determination that the number of the one or more external computer systems that has joined the shared-content session does not meet the threshold number, forgoing initiating playback of the respective content.

5. The method of any of claims 1-4, further comprising:
after initiating the shared-content session and displaying a graphical object having a first displayed state:
in accordance with a determination that a threshold number of the one or more external computer systems have joined the shared-content session, displaying the graphical object having a second displayed state that is different from the first displayed state.

6. The method of any of claims 1-5, further comprising:
after initiating the shared-content session, detecting a first external computer system joining the shared-content session; and
in response to detecting the first external computer system joining the shared-content session, displaying, via the one or more display generation components, a notification that is selectable to enable playback of content for the shared-content session.

7. The method of any of claims 1-6, further comprising:
after initiating the shared-content session, displaying, via the one or more display generation components, a first control user interface, including:
in accordance with a determination that the shared-content session is provided via an asynchronous communication session, displaying the first control user interface having a first set of one or more control options; and
in accordance with a determination that the shared-content session is provided via a real-time communication session, displaying the first control user interface having a second set of one or more control options that is different from the first set of one or more control options.

8. The method of any of claims 1-7, further comprising:
after initiating the shared-content session, displaying, via the one or more display generation components, a second control user interface having a first appearance while the shared-content session is in the first mode;
detecting the shared-content session changing from the first mode to a third mode that is different from the first mode; and
in response to detecting the shared-content session changing from the first mode to the third mode, displaying the second control user interface having a second appearance that is different from the first appearance.

9. The method of any of claims 1-8, wherein the request to initiate the shared-content session includes sending a link to the one or more external computer systems for joining the shared-content session.

10. The method of any of claims 1-9, further comprising:
after initiating the shared-content session with one or more external computer systems, displaying, via the one or more display generation components, a status user interface including a call option;
while displaying the status user interface including the call option, detecting, via the one or more input devices, one or more inputs corresponding to a selection of the call option; and
in response to detecting the one or more inputs corresponding to a selection of the call option, initiating a process for enabling real-time communication for the shared-content session.

11. The method of any of claims 1-10, further comprising:
after initiating the shared-content session with one or more external computer systems, displaying, via the one or more display generation components, a user status interface that includes an indication of participants of the shared-content session that are participating in the shared-content session with real-time communication enabled and an indication of participants of the shared-content session that are participating in the shared-content session with real-time communication disabled.

12. The method of any of claims 1-11, further comprising:
while the shared-content session is in the first mode at the computer system, and in response to a second external computer system enabling real-time communication for the shared-content session at the second external computer system, displaying an incoming communication user interface that includes an accept option;
while displaying the incoming communication user interface that includes the accept option, detecting, via the one or more input devices, one or more inputs corresponding to a selection of the accept option; and
in response to detecting the one or more inputs corresponding to a selection of the accept option, initiating a process for enabling real-time communication at the computer system for the shared-content session.

13. The method of any of claims 1-12, further comprising:
while the shared-content session is in a fourth mode in which the set of real-time communication features are enabled for the shared-content session:
receiving, via the one or more input devices, a request to transition the shared-content session from the fourth mode; and
in response to receiving the request to transition the shared-content session from the fourth mode, displaying, via the one or more display generation components, a session option user interface, wherein the session option user interface includes:
a termination option that is selectable to terminate the shared-content session at the computer system; and
a continuation option that is selectable to continue the shared-content session at the computer system.

14. The method of any of claims 1-13, wherein the asynchronous communication includes text-based messaging communication.

15. The method of any of claims 1-14, further comprising:
while first content is being output as the respective content for the shared-content session, receiving, via the one or more input devices, a request to initiate playback of second content at the computer system, wherein the second content is different from the first content; and
in response to receiving the request to initiate playback of the second content at the computer system, outputting the second content as the respective content for the shared-content session.

16. The method of any of claims 1-15, further comprising:
while the shared-content session is active and a first user interface is displayed, receiving, via the one or more input devices, a request to display a messages user interface; and
in response to receiving the request to display the messages user interface, displaying the messages user interface over at least a portion of the first user interface.

17. The method of any of claims 1-16, further comprising:
while the shared-content session is in the first mode, receiving a set of one or more inputs corresponding to a request to select screen-share content as the respective content for the shared-content session; and
in response to receiving the set of one or more inputs corresponding to a request to select screen-share content as the respective content for the shared-content session, selecting the screen-share content as the respective content for the shared-content session and transitioning the shared-content session from the first mode to a fifth mode in which a real-time audio channel is active for the shared-content session.

18. A non-transitory computer-readable storage medium storing one or more programs configured to be executed by one or more processors of a computer system that is in communication with one or more display generation components and one or more input devices, the one or more programs including instructions for performing the method of any of claims 1 - 17.

19. A computer system that is configured to communicate with one or more display generation components and one or more input devices, the computer system comprising:
one or more processors; and
memory storing one or more programs configured to be executed by the one or more processors, the one or more programs including instructions for performing the method of any of claims 1-17.
